# EUROPEAN PATENT APPLICATION

(11) **EP 4 525 140 A2**
(43) Date of publication of application: **19.03.2025**
(21) Application number: 24199058.9
(22) Date of filing: 06.09.2024
(51) Int. Cl.: H01M 10/613, B60L 50/64, B60L 58/26, H01M 10/6563, H01M 50/204, H01M 50/209, H01M 50/24, H01M 50/249, H01M 50/256, H01M 10/42, H02J 7/00

(54) **BATTERY CARRIER APPARATUS**

(30) Priority: 07.09.2023 CN 202322441026 U; 07.09.2023 CN 202311158263; 07.09.2023 CN 202311153839; 07.09.2023 CN 202322429101 U; 07.09.2023 CN 202322443432 U; 07.09.2023 CN 202311155372; 07.09.2023 CN 202322436464 U; 07.09.2023 CN 202322437637 U; 07.09.2023 CN 202322436751 U; 30.04.2024 CN 202420951826 U; 30.04.2024 CN 202420945143 U
(71) Applicant: Greenworks (Jiangsu) Co., Ltd., Changzhou, Jiangsu 213023 (CN)
(72) Inventor: WANG, Kai, Changzhou, 213023 (CN); ZHOU, Zehuan, Changzhou, 213023 (CN); SUCHOZA, Nicholas, Changzhou, 213023 (CN); YOU, Zhenxing, Changzhou, 213023 (CN); ZHU, Yanqiang, Changzhou, 213023 (CN); ZHUANG, Xian, Changzhou, 213023 (CN); HUANG, Zhenyu, Changzhou, 213023 (CN); LU, Chuntao, Changzhou, 213023 (CN); EFRID, Troy, Changzhou, 213023 (CN); YAN, An, Changzhou, 213023 (CN); LI, Xi, Changzhou, 213023 (CN)
(74) Representative: Bergenstråhle & Partners AB

(57) **Abstract**

A battery carrier apparatus includes a carrier housing, a plurality of compartments, at least one wheel, a control circuit and a status monitoring circuit. The carrier housing is configured to hold multiple battery modules. The plurality of compartments are disposed within the carrier housing. Each compartment is configured for detachably installing a respective battery module. The compartments provide secure housing for the battery modules. At least one wheel is disposed on the carrier housing. The wheel facilitates movement of the carrier housing allowing for transportation of the carrier housing. The control circuit is responsible for managing an operation of the battery modules installed in the compartments. The status monitoring circuit is coupled to the control circuit. The status monitoring circuit detects a status of the installed battery modules and communicates the status to the control circuit for determining a control behavior to manage the battery modules accordingly.

## Description

### TECHNICAL FIELD

The present invention is related to a battery carrier apparatus, and more particularly related to a battery carrier apparatus that has flexible structure.

### BACKGROUND

In recent years, the use of batteries has become increasingly prevalent in a variety of environments, including home backyards, parks, farms, and other outdoor settings. Batteries are now commonly used to power a wide range of equipment and tools, providing a convenient and portable source of energy for numerous applications. This shift towards battery-operated devices has revolutionized the way many tasks are performed, particularly in gardening and landscaping.

Gardening tools such as lawn mowers, hedge trimmers, and leaf blowers often rely on battery power to deliver the necessary energy for efficient operation. These tools benefit from the portability and ease of use that batteries provide, allowing users to work without the constraints of power cords or the need for nearby electrical outlets. Additionally, battery-operated tools are generally quieter and produce fewer emissions compared to their gasoline-powered counterparts, making them more environmentally friendly and suitable for use in residential areas.

In home settings, batteries are extensively used to power a variety of devices and equipment. From cordless drills and saws to lighting fixtures and outdoor entertainment systems, batteries offer a versatile and reliable energy source. This widespread adoption of battery technology in household applications enhances convenience and flexibility for homeowners, enabling them to carry out tasks and enjoy their outdoor spaces with minimal hassle.

Public parks and recreational areas also benefit from the use of battery-powered equipment. Maintenance crews often use battery-operated tools to perform tasks such as trimming, edging, and clearing debris. These tools not only contribute to a quieter and cleaner environment but also improve the efficiency and effectiveness of park maintenance operations. The use of batteries in public spaces helps to maintain a pleasant atmosphere for visitors while reducing the environmental impact of maintenance activities.

Farms and agricultural settings are increasingly incorporating battery technology into their operations as well. Battery-powered tools and equipment, such as electric chainsaws and pruners, are commonly used for tasks like tree trimming, crop maintenance, and general farm upkeep. The portability of these tools allows farmers to work in remote areas without access to traditional power sources, thereby improving productivity and reducing reliance on fossil fuels.

Despite the many advantages of battery-powered tools and equipment, there are also some notable drawbacks. One significant issue is the weight of the batteries themselves, which can make them cumbersome to handle and transport. This is particularly problematic when multiple batteries need to be moved simultaneously, either for recharging or to different work areas. The challenge of transporting heavy batteries can hinder efficiency and increase the physical strain on users, especially in larger outdoor environments where distances between work areas and charging stations can be substantial.

In addition to being cumbersome, batteries also require regular recharging, which presents another layer of complexity. When multiple devices are in use, each requiring its own battery, managing and recharging these batteries can become a significant logistical challenge. This is especially true in environments where numerous battery-operated tools are in operation simultaneously, such as large gardens, parks, and farms.

The need to frequently recharge batteries means that users must often interrupt their work to replace depleted batteries with fully charged ones. This can lead to downtime and inefficiencies, particularly if there is a limited number of spare batteries available. Users must also remember to recharge batteries after each use, a task that can easily be overlooked in the midst of busy work schedules, leading to situations where tools are not ready for use when needed.

Managing multiple batteries also involves keeping track of their charge levels and ensuring that each battery is properly maintained. Over time, batteries can degrade if not cared for correctly, losing their ability to hold a charge and thus reducing the overall productivity of the tools they power. Effective battery management requires a system for monitoring battery health and usage, which can be time-consuming and difficult to implement without the right tools and knowledge.

Recharging batteries also requires access to suitable charging facilities. In many outdoor environments, especially remote areas of farms or large parks, access to electrical outlets may be limited. This necessitates the transportation of batteries to central charging locations, further complicating the process. The physical effort required to move multiple heavy batteries to and from charging stations can be considerable, adding to the overall burden on users.

Moreover, coordinating the charging of multiple batteries to ensure that they are all ready for use when needed can be a daunting task. Different batteries may have varying charge times and capacities, and without a systematic approach to charging, some batteries may be overcharged while others remain undercharged. This can lead to inconsistent performance and shorten the lifespan of the batteries, increasing costs and reducing the efficiency of battery-operated tools.

The complexity of managing and recharging multiple batteries highlights the need for effective solutions that can streamline these processes. Such solutions should address the physical challenges of transporting heavy batteries, provide reliable methods for monitoring and maintaining battery health, and offer convenient and accessible charging options. By improving the efficiency of battery management and recharging, users can maximize the benefits of battery-powered tools while minimizing the associated difficulties and inconveniences.

Given the increasing reliance on battery-powered tools and equipment in various environments, it is clear that addressing the challenges associated with battery management and transportation is essential. The cumbersome nature of batteries, coupled with the need for regular recharging, underscores the importance of finding efficient solutions. These solutions must streamline the movement and maintenance of batteries, ensuring that they are always ready for use and that their longevity is maximized.

It is beneficial, therefore, to design a device specifically aimed at making the movement of batteries easier while also providing convenient management and charging capabilities. Such a device would alleviate the physical strain involved in transporting multiple heavy batteries and reduce the logistical complexities of keeping them charged and operational. By integrating features that facilitate easy movement and systematic charging, users can enjoy uninterrupted productivity and more efficient use of their battery-operated tools.

In conclusion, a thoughtfully designed battery carrier apparatus would significantly enhance the usability and effectiveness of battery-powered equipment in various settings. By addressing the key challenges of weight, transportation, and recharging, such a device would offer a practical and reliable solution to the growing demand for efficient battery management. This would not only improve the overall user experience but also extend the operational life of batteries, providing a sustainable and cost-effective approach to powering a wide range of tools and devices.

### SUMMARY

In some embodiments, a battery carrier apparatus includes a carrier housing, a plurality of compartments, at least one wheel, a control circuit and a status monitoring circuit.

The carrier housing is configured to hold multiple battery modules.

The plurality of compartments are disposed within the carrier housing.

Each compartment is configured for detachably installing a respective battery module.

The compartments provide secure housing for the battery modules.

At least one wheel is disposed on the carrier housing.

The wheel facilitates movement of the carrier housing allowing for transportation of the carrier housing.

The control circuit is responsible for managing an operation of the battery modules installed in the compartments.

The status monitoring circuit is coupled to the control circuit.

The status monitoring circuit detects a status of the installed battery modules and communicates the status to the control circuit for determining a control behavior to manage the battery modules accordingly.

In some embodiments, the battery carrier apparatus may also include a charging terminal and a charging path.

The charging terminal is selectively coupled to an external power source to guide an external power to charge the installed battery module via the charging path.

The charging path and the charging terminal are disposed on the carrier housing under control of the control circuit to charge the installed battery modules.

In some embodiments, at least in one operation mode, the control circuit only charges a portion of the installed battery modules one time, instead of charging all installed battery modules at the same time.

In some embodiments, under said operation mode, the control circuit charges one battery module as a target battery module at one time.

In some embodiments, the battery carrier apparatus may also include a wireless circuit.

The control circuit automatically generates and transmits a message to an external device via the wireless circuit under a predetermined rule.

In some embodiments, when the control circuit detects an abnormal status collected by the status monitoring circuit, the control circuit transmits the message to the external device.

In some embodiments, when the control circuit receives a command from the external device, the control circuit translates the command into corresponding control signals to manage the battery modules.

In some embodiments, the control circuit has a network identity on a remote messaging server.

The control circuit and the external device communicates with text messages in human language to manage the installed battery module.

In some embodiments, the carrier housing has an air passage for air to flow into carrier housing for heat dissipation.

The carrier housing has a water blocking structure to stop water entering a protective area of the carrier housing.

In some embodiments, the water blocking structure including a water blocking wall, a water guiding structure and a water exit.

In some embodiments, the carrier housing has a first surface and a second surface.

The first surface is substantially perpendicular to the second surface.

The carrier housing is selectively placed to face the first surface to a ground or the second surface to the ground.

The water blocking structure stops water to enter the protective area in both placements of the carrier housing.

In some embodiments, two of the wheels are disposed on two edges of the first surface of the carrier housing.

The carrier housing has a first set of standing feet on opposite corners to the wheels for keeping the carrier stable placed when the first surface faces to the ground.

In some embodiments, the carrier housing is selectively mounted on a vehicle for the control circuit to provide electricity from the installed battery modules to a vehicle device of the vehicle.

In some embodiments, the battery carrier apparatus may also include a detachable lock disposed on the carrier housing for locking the installed battery modules to the compartments.

In some embodiments, the battery module has a display area and a connector on a external housing.

A plastic layer is disposed between a battery core and the external housing to prevent water to enter a container space for storing the battery core.

In some embodiments, the battery carrier apparatus may also include a three-way power distribution connector.

A first terminal of the three-way power distribution connector is to receive an external power input.

A second terminal of the three-way power distribution connector is to forward an external power to another device.

A third terminal of the three-way power distribution connector is to route the external power to the installed battery modules.

In some embodiments, where the three-way power distribution connector has a concave area for plugging a cable for preventing accidental struck by an external object on a connection position of the cable.

In some embodiments, the carrier housing has a storage container in addition to the compartments for storing objects.

In some embodiments, the compartments have a compartment housing detachably decoupled from the carrier housing.

In some embodiments, the carrier housing has a top housing for concealing the installed battery modules while exposing a display area for showing the status of the status monitoring circuit.

### BRIEF DESCRIPTION OF DRAWINGS

Fig. 1 shows an energy station apparatus embodiment.
Fig. 2 shows another view of the example in Fig. 1.
Fig. 3 shows a top view of the example in Fig. 1
Fig. 4 shows a cross-sectional view of the example in Fig. 1.
Fig. 5 shows another view of the example in Fig. 4.
Fig. 6 shows an inner structure of an example.
Fig. 7 shows a component.
Fig. 8 shows another view of the component.
Fig. 9 shows another embodiment.
Fig. 10 shows a component example.
Fig. 11 shows another component example.
Fig. 12 shows the example in another view.
Fig. 13 shows another component example.
Fig. 14 shows a system diagram.
Fig. 15 shows another system diagram.
Fig. 16 shows another system diagram.
Fig. 17 shows another energy station apparatus.
Fig. 18 shows another view of the example.
Fig. 19 shows a top view of the example.
Fig. 20 shows a cross-sectional view of the example.
Fig. 21 shows another view of the example.
Fig. 22 shows a top view of the example.
Fig. 23 shows an inner structure of the example.
Fig. 24 shows an inner structure of the example.
Fig. 25 shows a perspective view of an embodiment.
Fig. 26 shows a component example.
Fig. 27 shows another component example.
Fig. 28 shows two views of the component.
Fig. 29 shows a component structure.
Fig. 30 shows an operation diagram.
Fig. 31 shows an APP interface.
Fig. 32 shows another APP interface.
Fig. 33 shows another APP interface.
Fig. 34 shows another APP interface.
Fig. 35 shows another APP interface.
Fig. 36 shows another APP interface.
Fig. 37 shows another APP interface.
Fig. 38 shows a system diagram.
Fig. 39 shows an inner structure diagram.
Fig. 40 shows another inner structure diagram.
Fig. 41 shows another inner structure diagram.
Fig. 42 shows another system diagram.
Fig. 43 shows another system diagram.
Fig. 44 shows a car that holds the apparatus.
Fig. 45 shows another view of a car that carries the apparatus.
Fig. 46 shows a charging network.
Fig. 47 shows a charging connector.
Fig. 48 show a charging connector.
Fig. 49 shows connection of two charging connectors.
Fig. 50 shows a charging connector.
Fig. 51 shows another charging connector.
Fig. 52 shows another charging connector structure.
Fig. 53 shows connection of two connectors.
Fig. 54 shows a perspective view of a charging connector.
Fig. 55 shows another view of a charging connector.
Fig. 56 shows another view of a charging connector.
Fig. 57 shows a container that holds battery packs.
Fig. 58 shows another view of the example in Fig. 57.
Fig. 59 shows another view of the example.
Fig. 60 shows a cover.
Fig. 61 shows a top view of the cover.
Fig. 62 shows a side view of an embodiment.
Fig. 63 shows a container without loading battery.
Fig. 64 shows a holder is detached from the container.
Fig. 65 show a container.
Fig. 66 shows a battery container.
Fig. 67 shows another battery apparatus.
Fig. 68 shows a top view of the example in Fig. 67.
Fig. 69 shows a component in the Fig. 68.
Fig. 70 shows a component in Fig. 69.
Fig. 71 shows another component.
Fig. 72 shows a component removing the cover.
Fig. 73 shows another view of the example.
Fig. 74 shows a component example.
Fig. 75 shows another component in the example.
Fig. 76 shows another embodiment.
Fig. 77 shows another view of the example in Fig. 76.
Fig. 78 shows a part of the example in Fig. 76.
Fig. 79 shows a top view of the example.
Fig. 80 shows s side view of the example.
Fig. 81 shows when battery modules are loaded.
Fig. 82 shows a cross-sectional view of the example.
Fig. 83 shows another view.
Fig. 84 shows a zoom-up view of a portion in Fig. 83.
Fig. 85 shows another view of the example.
Fig. 86 shows a zoom-up view of an area in Fig. 85.
Fig. 87 shows a bottom view of the example.
Fig. 88 shows a side view of the example.
Fig. 89 shows a zoom-up view of Fig. 88.
Fig. 90 shows an apparatus without loading the battery modules.
Fig. 91 shows a battery module is loaded.
Fig. 92 shows a zoom-up view of an area in Fig. 91.
Fig. 93 shows a battery module is loaded.
Fig. 94 shows a zoom-up view of an area in Fig. 93.
Fig. 95 shows a battery module is loaded.
Fig. 96 shows another embodiment.
Fig. 97 shows a side view of the embodiment.
Fig. 98 shows another structure diagram.
Fig. 99 shows arrangement of components.

### DETAILED DESCRIPTION

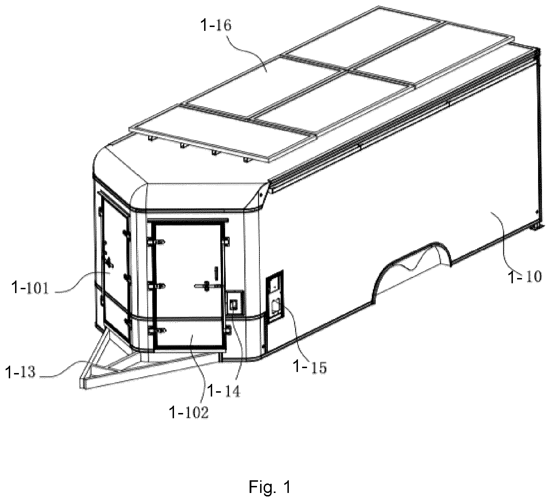

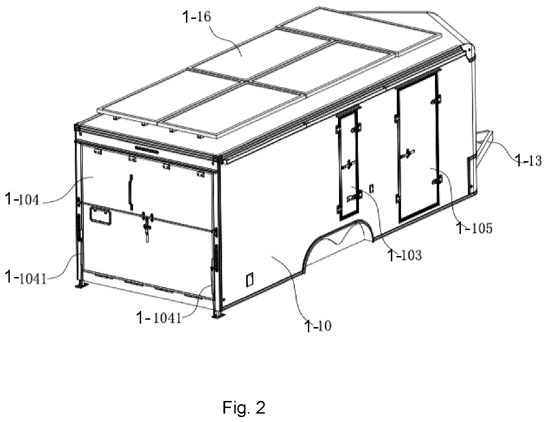

Please refer to Figs. 1 and 2, where the energy station of the present utility model is a type of mobile energy storage and charging equipment. This energy station, for example, can be used to charge garden tools such as lawn mowers and can also load and transport some garden tools, making it suitable for long-term mobile operations of garden tools.

The present utility model particularly relates to a trailer energy station. Considering the compatibility of the trailer energy station with the towing vehicle and the flexibility of transportation, the trailer energy station should not be too large in volume. Therefore, how to arrange more storage and charging equipment and garden tool storage space within a limited space is a key design focus of the trailer energy station.

The structure of existing energy stations is generally square, which does not fully utilize some auxiliary spaces around the compartment, especially the arm area at the front of the compartment. It should be understood that, to avoid collision between the trailer vehicle 1-10 and the front towing vehicle during turns, the arm 1-13 of the trailer vehicle 1-10 is generally set to extend forward with sufficient length in a triangular structure. This structure occupies part of the length of the vehicle, and regardless of the compartment length, the length of this part of the arm 1-13 must be reserved. However, existing energy stations do not fully utilize the longitudinal space above the arm 1-13. The present utility model addresses this issue by setting an additional storage space at the front of the traditional compartment. The front end of this storage space is designed to be retracted, fully utilizing the area above the arm 1-13 without interfering with the vehicle's steering. The following will provide a detailed description of the technical solutions of the present utility model in conjunction with specific embodiments.

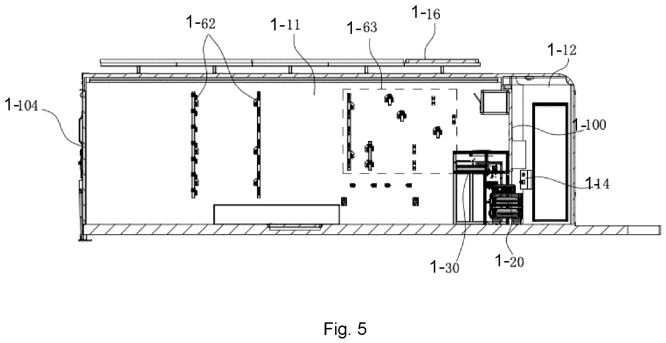

Please refer to Figs. 1-6, where an embodiment of the energy station provided by the present utility model includes a trailer vehicle 1-10, an energy storage module 1-20, a power distribution control module 1-70, a hanger, and a parking platform 1-111.

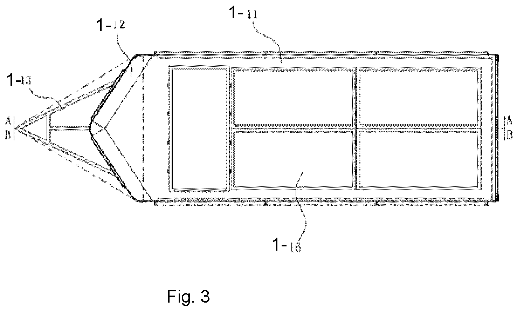

Please refer to Figs. 3-6, where the trailer vehicle 1-10 includes a first compartment 1-11 and a second compartment 1-12. The second compartment 1-12 is located at the front end of the first compartment 1-11, and there is a shared wall 1-100 between the first compartment 1-11 and the second compartment 1-12. In specific embodiments, the trailer vehicle 1-10 should also include necessary running gear (not shown in the drawings), which may be standard wheels, track wheels, or specially designed wheels to adapt to certain special terrains.

It should be understood that the second compartment 1-12 in the present utility model is not simply an extension of the first compartment 1-11 forward. Instead, the second compartment 1-12 is positioned above the area where the arm 1-13 was originally located (i.e., the area enclosed by dashed lines in Fig. 3). It can also be understood that the chassis of the second compartment 1-12 is itself a part of the arm 1-13. This arrangement ensures that the arm 1-13 has sufficient length to avoid collisions with the towing vehicle when the trailer vehicle 1-10 turns and increases the storage space of the compartments. This design provides additional storage space without changing the overall length of the trailer vehicle 1-10. Furthermore, the shared wall 1-100 in the present utility model serves as a longitudinal support for the equipment inside both the first compartment 1-11 and the second compartment 1-12, further improving space utilization efficiency.

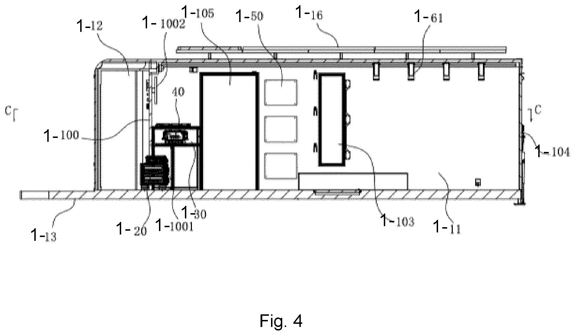

Please refer to Figs. 4-5, where the energy storage module 1-20 is housed within the second compartment 1-12 and/or the first compartment 1-11. In specific embodiments, the energy storage module 1-20 may include multiple battery packs or battery modules. In the illustrated embodiment, the energy storage module 1-20 includes multiple battery packs, each of which comprises multiple battery modules, and each battery module contains multiple battery cells. It should be understood that in other embodiments, multiple battery cells can also be directly integrated into a single battery pack to increase the energy density of the energy storage module 1-20.

In the embodiment shown in Figs. 4-5, the energy storage module 1-20 is located between the first compartment 1-11 and the second compartment 1-12, i.e., half of the energy storage module 1-20 is located within the first compartment 1-11, and the other half is located within the second compartment 1-12. This installation method allows the fragmented spaces within the first compartment 1-11 and the second compartment 1-12 to be combined, achieving the storage of the energy storage module 1-20 without affecting other equipment within their respective spaces, thereby improving space utilization efficiency. In other embodiments, the energy storage module 1-20 can also be adjusted in installation position according to the specific specifications of the battery packs, for example, the energy storage module 1-20 can be entirely installed within the first compartment 1-11 or entirely within the second compartment 1-12.

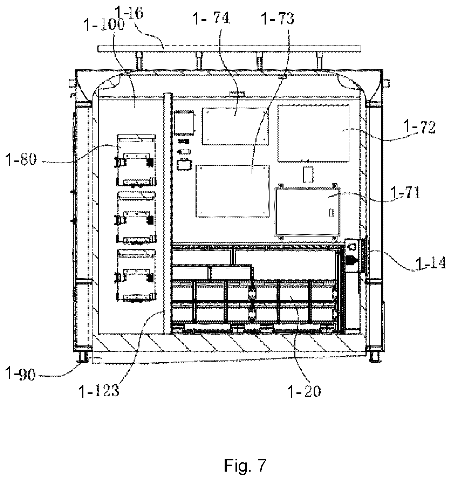

Please refer to Fig. 7, where the power distribution control module 1-70 is installed on the side of the shared wall 1-100 facing the second compartment 1-12. In specific embodiments, the power distribution control module 1-70 includes, but is not limited to, a power distribution box 1-71, a PCS (central control module) 1-72, a PDU-A (power distribution unit) 1-74, and an EVCC (sub-control module) 1-73. It should be understood that these modules do not require frequent user contact, so existing energy stations generally place these devices in relatively concealed positions, which is very unfavorable for the inspection and maintenance of these devices. The present utility model sets these modules in the second compartment 1-12, saving a lot of space in the first compartment 1-11 and facilitating user inspection and maintenance of these devices.

Please refer to Figs. 4-5, where the hanger is installed on the side wall of the first compartment 1-11 for hanging garden tools. In specific embodiments, the hanger may include a blower hanger 1-61, a pruner hanger 1-62, a grass trimmer hanger, and a chainsaw hanger 1-63. These hangers can be arranged on the side wall of the first compartment 1-11 in a way that saves as much space as possible according to the specific size parameters of the garden tools. For example, blowers are generally larger in volume and can be set separately on one side wall, while pruners, grass trimmers, and chainsaws are relatively long and thin, so they can be placed parallelly on the other side wall.

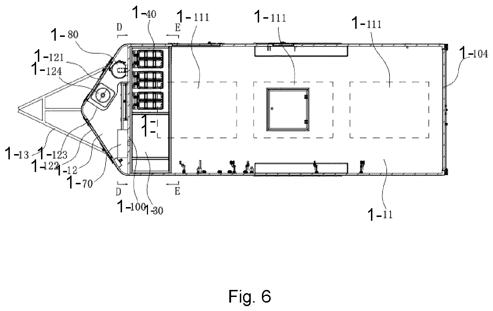

Please refer to Fig. 6, where the parking platform 1-111 is formed by the bottom plate of the first compartment 1-11 and is used to park garden off-road vehicles. In specific embodiments, the garden off-road vehicle can be a lawn mower. It should be understood that, since the present utility model relocates the power distribution control module 1-70 to the second compartment 1-12, the bottom plate of the first compartment 1-11 can be designed to be flatter, thereby accommodating more garden off-road vehicles.

The present utility model positions the second compartment 1-12 above the area where the arm 1-13 was originally located, ensuring that the arm 1-13 has sufficient length to avoid collisions between the trailer vehicle 1-10 and the towing vehicle during turns while also expanding the storage space of the compartment. This design provides additional storage space without changing the overall length of the trailer vehicle 1-10.

Please refer to Fig. 3, where in an alternative embodiment of the present utility model, the chassis of the trailer vehicle 1-10 is equipped with an arm 1-13 at the front part, and the arm 1-13 is gradually retracted forward from both sides of the first compartment 1-11. The vertical projection area of the second compartment 1-12 is located within the vertical projection area of the arm 1-13. It should be understood that the area enclosed by dashed lines in Fig. 3 is the installation position of the traditional arm 1-13. The present utility model positions the second compartment 1-12 within this area, and the chassis of the second compartment 1-12 can be considered part of the arm 1-13. Therefore, the second compartment 1-12 does not occupy additional lateral space. In other embodiments, the vertical projection area of the second compartment 1-12 can also be at least partially located within the vertical projection area of the arm 1-13.

Please refer to Fig. 6, where in an alternative embodiment of the present utility model, the second compartment 1-12 further includes a first sidewall 1-121 and a second sidewall 1-122. The first sidewall 1-121 and the second sidewall 1-122 are gradually retracted forward from both side walls of the first compartment 1-11. It should be noted that the front ends of the first sidewall 1-121 and the second sidewall 1-122 should maintain a certain distance from the front end of the arm 1-13. Specifically, the front ends of the first sidewall 1-121 and the second sidewall 1-122 should be located behind the front end of the arm 1-13 to avoid collisions between the trailer vehicle 1-10 and the rear of the towing vehicle during turns.

Please refer to Fig. 4, where in an alternative embodiment of the
a. present utility model, the bottom of the shared wall 1-100 is provided with a recessed accommodating chamber 1-1001 towards the first compartment 1-11. At least part of the structure of the energy storage module 1-20 is housed within the accommodating chamber 1-1001. It should be understood that the forward protrusion distance of the second compartment 1-12 in the present utility model is limited by the size of the arm 1-13. Therefore, when the size of the energy storage module 1-20 is relatively large, it needs to occupy part of the space in the first compartment 1-11.

Please refer to Figs. 4-6, where in an alternative embodiment of the present utility model, it further includes a battery pack charging module 1-40. The battery pack charging module 1-40 is housed within the first compartment 1-11 and is located above the accommodating chamber 1-1001. The battery pack charging module 1-40 is used to charge the removable battery packs of garden tools. Its placement above the accommodating chamber 1-1001 allows it to be closer to the energy storage module 1-20, saving cable length, while also fully utilizing the vertical space above the accommodating chamber 1-1001.

Please refer to Figs. 6 and 7, where in an alternative embodiment of the present utility model, the second compartment is configured to store the first water tank, reflective cones, firefighting equipment, garden tool accessories, and one or more combinations of power distribution control modules. Specifically, the first water tank can be a drinking water tank 1-80, which is mounted on the side of the shared wall 1-100 facing the second compartment 1-12. Firefighting equipment can include various fire extinguishers, water guns for firefighting, fire axes, fire sand, etc. Garden tool accessories can include some hoses or other replaceable parts for garden tools. Furthermore, the second compartment 1-12 is provided with a partition 1-123, which is configured to extend in at least one direction to form a first storage space for storing the first water tank. The first storage space is designed to isolate the first water tank from the space outside the installation area of the first water tank. In a specific embodiment, the surface of the partition 1-123 is vertically arranged to isolate the drinking water tank 1-80 from the power distribution control module 1-70. The second compartment 1-12 has a first compartment door 1-101 and a second compartment door 1-102, corresponding to the first storage space and the installation area outside the first storage space, respectively. The present utility model uses the partition 1-123 to isolate the installation area of the drinking water tank in the second compartment 1-12 from the installation area of the power distribution control module 1-70, preventing the contamination of electronic components or causing component failure due to pipeline failure of the drinking water tank 1-80, thus improving safety. In specific embodiments, the installation area of the drinking water tank 1-80 also has some spare space, which can be used to store reflective cones 1-124, fire extinguishers, and other auxiliary equipment.

Please refer to Fig. 7, where in an alternative embodiment of the present utility model, the bottom of the first compartment 1-11 and/or the second compartment 1-12 is provided with a second water tank, which can be a cleaning water tank 1-90 for washing, cleaning, irrigation, and other functions.

Please refer to Fig. 4, where in an alternative embodiment of the present utility model, it further includes a charging box 1-50, which is mounted on the side wall of the first compartment 1-11. Furthermore, a third compartment door 1-103 is provided on the side wall of the first compartment 1-11 adjacent to the charging box 1-50. The charging box 1-50 is used to charge garden off-road vehicles such as lawn mowers. The present utility model positions the charging box 1-50 on the side wall and also sets the third compartment door 1-103 nearby so that the charging box 1-50 can charge both the garden off-road vehicles inside the first compartment 1-11 and those on the ground. In specific embodiments, the size of the third compartment door 1-103 does not need to be too large, as long as it allows the charging gun to pass through.

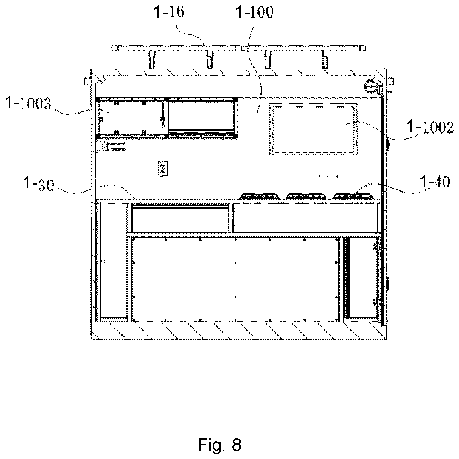

Please refer to Fig. 8, where in an alternative embodiment of the present utility model, it further includes a storage cabinet 1-30, which is located inside the first compartment 1-11 and is close to the shared wall 1-100. The battery pack charging module 1-40 is housed within the storage cabinet 1-30. In specific embodiments, a chamber is provided under the table of the storage cabinet 1-30 to accommodate the parking platform 1-111. The storage cabinet 1-30 shares part of the lateral space with the energy storage module 1-20 and the garden off-road vehicles, further improving space utilization. In further embodiments, a hanging cabinet 1-1003 and a display 1-1002 can be set above the storage cabinet 1-30, further utilizing the upper space of the storage cabinet 1-30.

Please refer to Figs. 1 and 2, where in an alternative embodiment of the present utility model, the rear end of the first compartment 1-11 is provided with a fourth compartment door 1-104. The fourth compartment door 1-104 is designed to form a ramp between the bottom plate of the first compartment 1-11 and the ground when it is opened. Specifically, the lower end of the fourth compartment door 1-104 is hinged to the rear end of the bottom plate of the first compartment 1-11. A gas strut 1-1041 is provided between the fourth compartment door 1-104 and the outer wall of the first compartment 1-11. It should be understood that when the fourth compartment door 1-104 is opened, the garden off-road vehicles can directly drive into the first compartment 1-11 from the ground or directly drive out to the ground from the first compartment 1-11, improving the storage and release efficiency of the garden off-road vehicles.

Please refer to Figs. 1-5, 7, and 8, where in an alternative embodiment of the present utility model, photovoltaic panels 1-16 are provided on the outer side of the top wall and/or side wall of the trailer vehicle 1-10. The photovoltaic panels 1-16 can charge the energy storage module 1-20 to improve the endurance of the energy station. It should be noted that the main energy source of the energy station is still charged through the power grid. Therefore, the present utility model also provides a charging port 1-14 at the front end of the compartment close to the energy storage module 1-20. To avoid safety hazards caused by occasional circuit system failures, the present utility model also provides an emergency stop button near the charging port 1-14, which can cut off the power of the entire vehicle.

In further embodiments, the energy station of the present utility model is also equipped with an air conditioning system 1-15. The air conditioning system 1-15 can cool the heating electronic components inside the energy station, thereby ensuring their working performance.

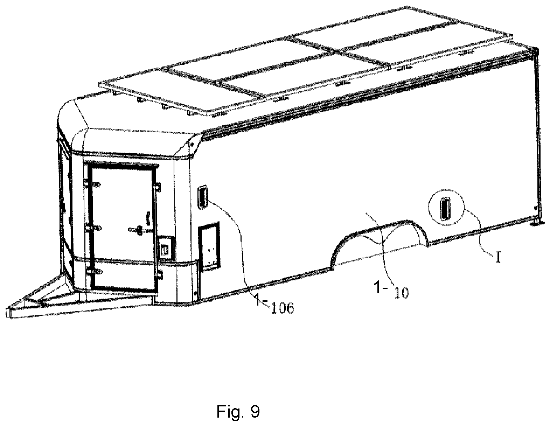

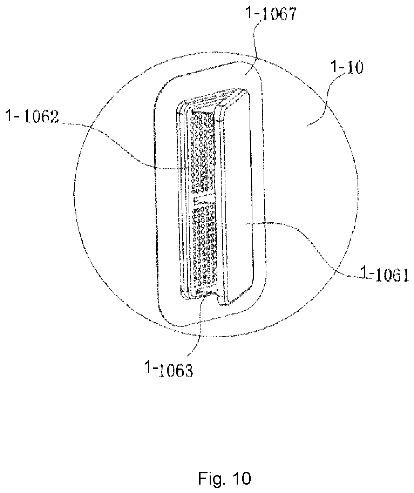

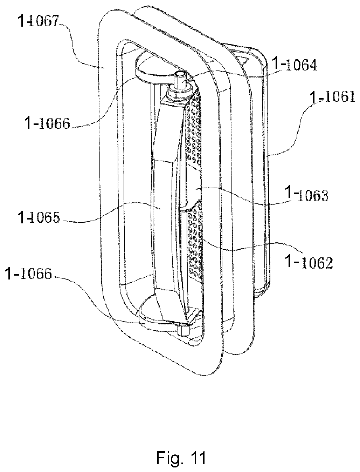

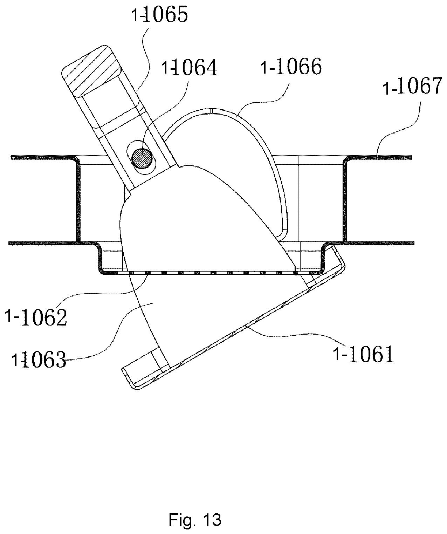

Please refer to Figs. 9-13, where in further embodiments of the present utility model, the side walls of the first compartment 1-11 and/or the second compartment 1-12 are provided with wind windows 1-106. The wind windows 1-106 include window frames 1-1067 and window covers 1-1061. The window covers 1-1061 are movably connected to the window frames 1-1067, allowing the window covers 1-1061 to switch between the following positions: Position one, where the window cover 1-1061 is blocked outside the window frame 1-1067; and Position two, where the window cover 1-1061 is flipped forward or backward relative to the window frame 1-1067 at a certain angle to open the window Specifically, as shown in Figs. 10-13, the window frame 1-1067 is provided with a grille 1-1062 at the window opening position, and the window cover 1-1061 is provided with a connecting plate 1-1063. The connecting plate 1-1063 penetrates the through-hole set on the grille 1-1062 to extend to the inner side of the window frame 1-1067. The inner side of the window frame 1-1067 is provided with an arch-shaped limiting part 1-1066. The inner end of the connecting plate 1-1063 is provided with a guide post 1-1064, which slides in contact with the arch-shaped limiting part 1-1066. The connecting plate 1-1063 is also provided with a handle 1-1065. When the guide post 1-1064 is at the top of the arch-shaped limiting part 1-1066, the window cover 1-1061 closes the window opening. When the guide post 1-1064 is at the front or rear side of the arch-shaped limiting part 1-1066, the window cover 1-1061 is flipped open forward or backward. Users can adjust the opening direction of the window cover 1-1061 according to the wind direction, guiding the air into the compartment and promoting air circulation inside the compartment, thereby improving the working environment of the compartment. It should be noted that the window frame a. 1-1067 can also be part of the body of the first compartment 1-11 and/or the second compartment 1-12.

In summary, the present utility model positions the second compartment 1-12 above the area where the arm 1-13 was originally located, ensuring that the arm 1-13 has sufficient length to avoid collisions between the trailer vehicle 1-10 and the towing vehicle during turns while also expanding the storage space of the compartment. This design provides additional storage space without changing the overall length of the trailer vehicle 1-10.

In some embodiments, a battery carrier apparatus includes a carrier housing, a plurality of compartments, at least one wheel, a control circuit and a status monitoring circuit.

The carrier housing is configured to hold multiple battery modules.

The plurality of compartments are disposed within the carrier housing.

Each compartment is configured for detachably installing a respective battery module.

The compartments provide secure housing for the battery modules.

At least one wheel is disposed on the carrier housing.

The wheel facilitates movement of the carrier housing allowing for transportation of the carrier housing.

The control circuit is responsible for managing an operation of the battery modules installed in the compartments.

The status monitoring circuit is coupled to the control circuit.

The status monitoring circuit detects a status of the installed battery modules and communicates the status to the control circuit for determining a control behavior to manage the battery modules accordingly.

In some embodiments, the battery carrier apparatus may also include a charging terminal and a charging path.

The charging terminal is selectively coupled to an external power source to guide an external power to charge the installed battery module via the charging path.

The charging path and the charging terminal are disposed on the carrier housing under control of the control circuit to charge the installed battery modules.

In some embodiments, at least in one operation mode, the control circuit only charges a portion of the installed battery modules one time, instead of charging all installed battery modules at the same time.

In some embodiments, under said operation mode, the control circuit charges one battery module as a target battery module at one time.

In some embodiments, the battery carrier apparatus may also include a wireless circuit.

The control circuit automatically generates and transmits a message to an external device via the wireless circuit under a predetermined rule.

In some embodiments, when the control circuit detects an abnormal status collected by the status monitoring circuit, the control circuit transmits the message to the external device.

In some embodiments, when the control circuit receives a command from the external device, the control circuit translates the command into corresponding control signals to manage the battery modules.

In some embodiments, the control circuit has a network identity on a remote messaging server.

The control circuit and the external device communicates with text messages in human language to manage the installed battery module.

In some embodiments, the carrier housing has an air passage for air to flow into carrier housing for heat dissipation.

The carrier housing has a water blocking structure to stop water entering a protective area of the carrier housing.

In some embodiments, the water blocking structure including a water blocking wall, a water guiding structure and a water exit.

In some embodiments, the carrier housing has a first surface and a second surface.

The first surface is substantially perpendicular to the second surface.

The carrier housing is selectively placed to face the first surface to a ground or the second surface to the ground.

The water blocking structure stops water to enter the protective area in both placements of the carrier housing.

In some embodiments, two of the wheels are disposed on two edges of the first surface of the carrier housing.

The carrier housing has a first set of standing feet on opposite corners to the wheels for keeping the carrier stable placed when the first surface faces to the ground.

In some embodiments, the carrier housing is selectively mounted on a vehicle for the control circuit to provide electricity from the installed battery modules to a vehicle device of the vehicle.

In some embodiments, the battery carrier apparatus may also include a detachable lock disposed on the carrier housing for locking the installed battery modules to the compartments.

In some embodiments, the battery module has a display area and a connector on a external housing.

A plastic layer is disposed between a battery core and the external housing to prevent water to enter a container space for storing the battery core.

In some embodiments, the battery carrier apparatus may also include a three-way power distribution connector.

A first terminal of the three-way power distribution connector is to receive an external power input.

A second terminal of the three-way power distribution connector is to forward an external power to another device.

A third terminal of the three-way power distribution connector is to route the external power to the installed battery modules.

In some embodiments, where the three-way power distribution connector has a concave area for plugging a cable for preventing accidental struck by an external object on a connection position of the cable.

In some embodiments, the carrier housing has a storage container in addition to the compartments for storing objects.

In some embodiments, the compartments have a compartment housing detachably decoupled from the carrier housing.

In some embodiments, the carrier housing has a top housing for concealing the installed battery modules while exposing a display area for showing the status of the status monitoring circuit.

The safety monitoring system of the present invention can be applied to mobile energy stations, which are primarily used to charge garden tools that operate outdoors for extended periods. In this application scenario, the mobile energy station may be unattended for long periods, during which it may be susceptible to theft, fire, flooding, and other disasters. Existing energy stations cannot monitor such abnormal events, and users cannot take timely measures to mitigate losses, leading to property damage or serious safety accidents. The safety monitoring system provided by the present invention can monitor the internal and external environments of the energy station in real-time. When an abnormal event occurs, it can promptly send alarm information to the user so that the user can take timely measures to mitigate losses. The following provides a detailed description of the technical solution of the present invention in conjunction with specific embodiments.

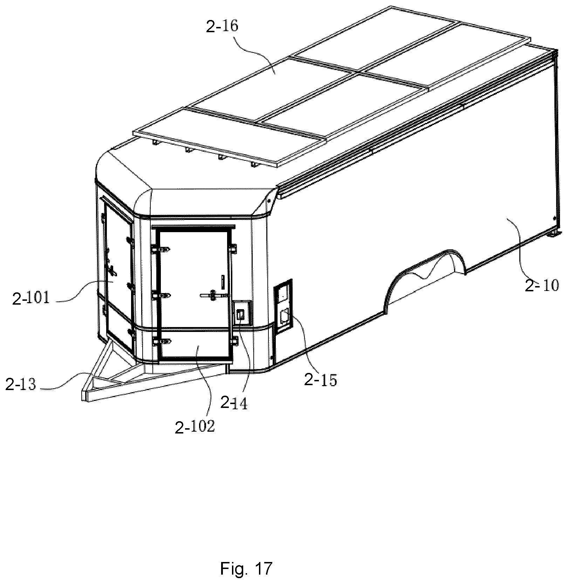

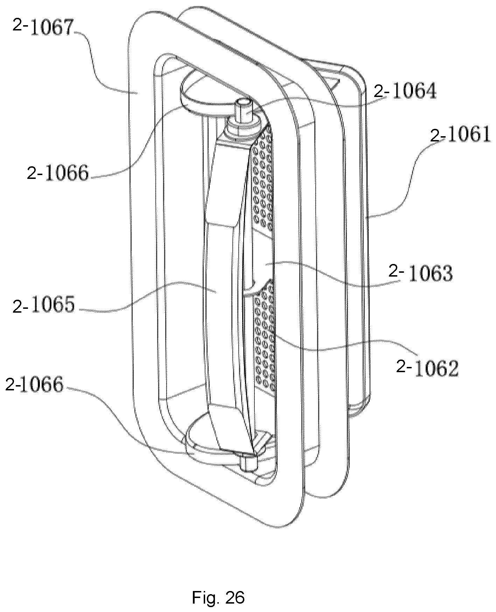

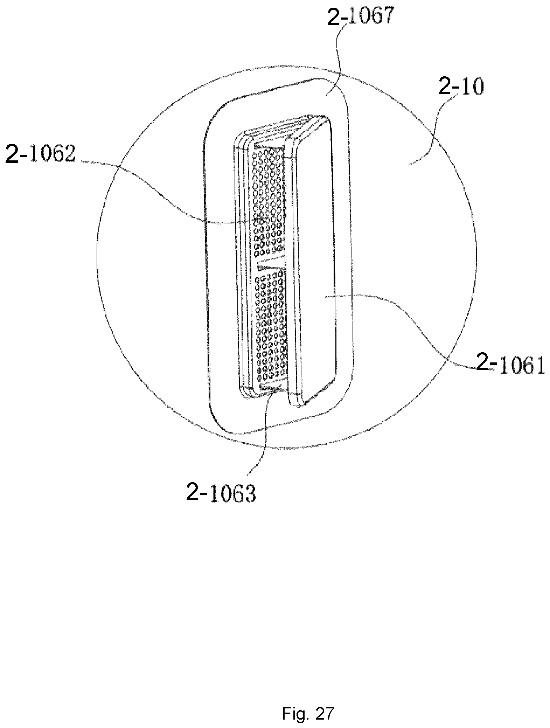

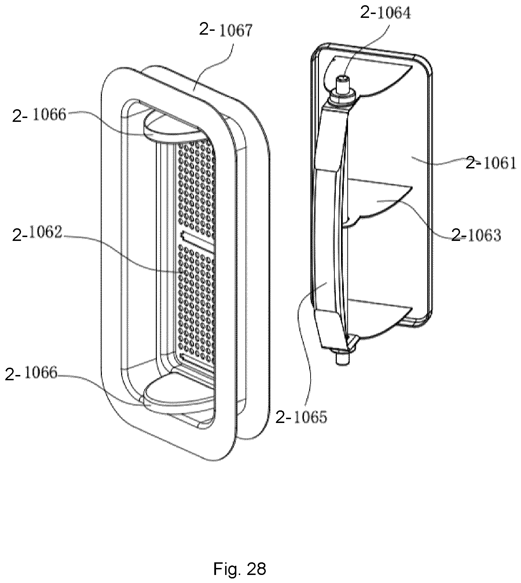

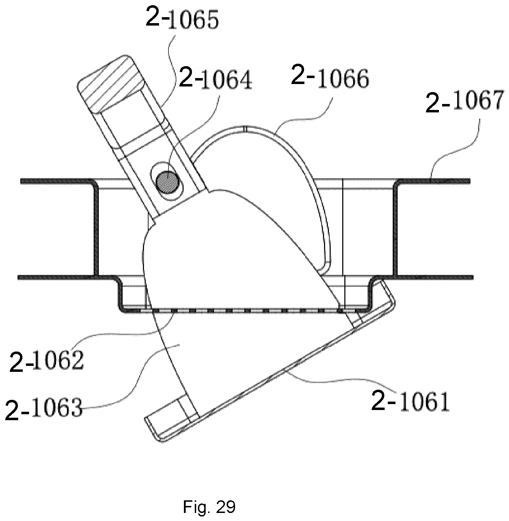

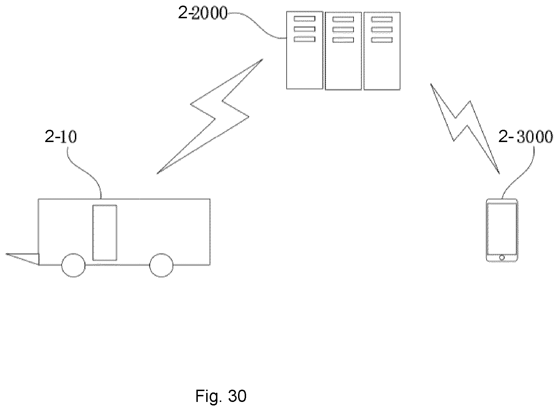

Please refer to Figs. 17-30. A mobile energy station provided by an embodiment of the present invention can include a trailer vehicle 2-10, an energy storage module 2-20, a power distribution control module 2-70, hanging devices, and a parking platform 2-111.

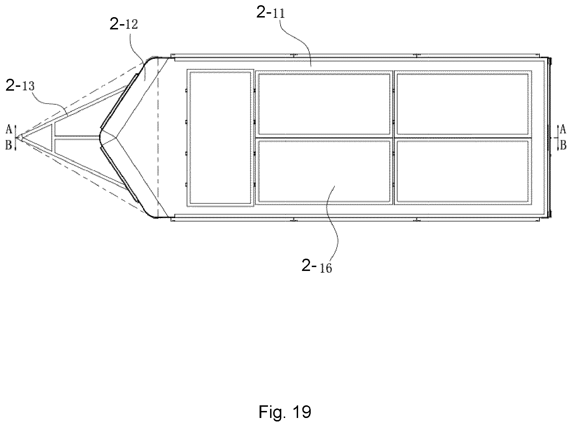

Please refer to Figs. 19-22. The trailer vehicle 2-10 includes a first compartment 2-11 and a second compartment 2-12, with the second compartment 2-12 located at the front end of the first compartment 2-11. The first compartment 2-11 and the second compartment 2-12 share a common wall 2-100. In specific embodiments, the trailer vehicle 2-10 should also include necessary traveling mechanisms (not shown), which can be ordinary wheels, tracked wheels, or specially designed wheels to adapt to specific terrains.

It should be understood that the second compartment 2-12 of the present invention is not simply an extension of the first compartment 2-11. Instead, the second compartment 2-12 is set above the area where the arm 2-13 is originally located (as indicated by the dotted line area in Fig. 19). The second compartment 2-12 can be understood as the chassis of the arm 2-13, ensuring that the arm 2-13 is long enough to prevent collisions between the trailer vehicle 2-10 and the towing vehicle when turning. This design also expands the storage space of the compartment, providing additional storage space without changing the overall length of the trailer vehicle 2-10. Additionally, the common wall 2-100 in the present invention provides a longitudinal support for the equipment in both the first compartment 2-11 and the second compartment 2-12, further improving space utilization.

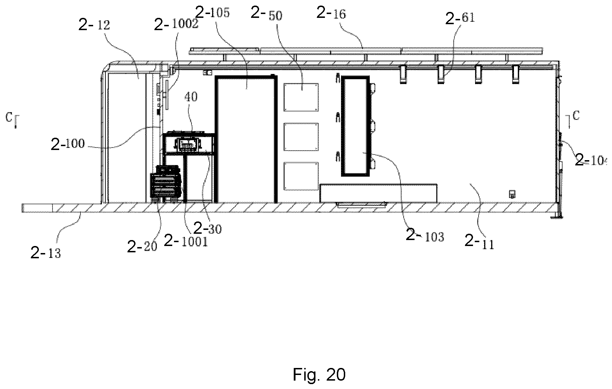

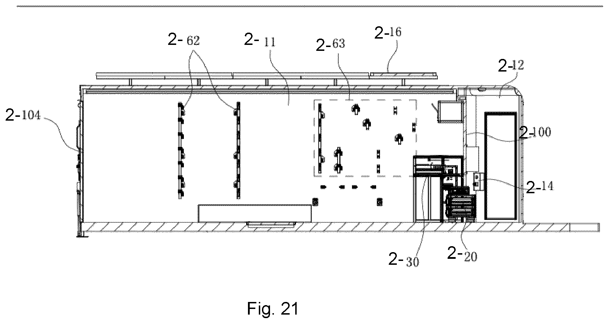

Please refer to Figs. 20 and 21. The energy storage module 2-20 is housed within the second compartment 2-12 and/or the first compartment 2-11. In specific embodiments, the energy storage module 2-20 can include multiple battery packs or battery modules. In the illustrated embodiment, the energy storage module 2-20 includes multiple battery packs, each containing multiple battery modules, with each battery module including multiple battery cells. It should be understood that in other embodiments, multiple battery cells can also be integrated into a single battery pack to increase the energy density of the energy storage module 2-20.

In the embodiment shown in Figs. 20 and 21, the energy storage module 2-20 is located between the first compartment 2-11 and the second compartment 2-12, with half of the energy storage module 2-20 in the first compartment 2-11 and the other half in the second compartment 2-12. This installation method allows the fragmented space within the first compartment 2-11 and the second compartment 2-12 to be combined, achieving the storage of the energy storage module 2-20 without affecting other equipment in each compartment, thereby improving space utilization. In other embodiments, the installation position of the energy storage module 2-20 can be adjusted according to the specific specifications of the battery packs, such as installing the entire energy storage module 2-20 within the first compartment 2-11 or the second compartment 2-12.

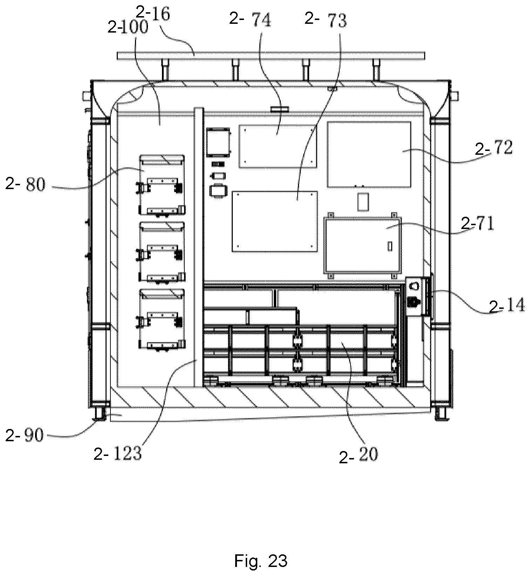

Please refer to Fig. 23. The power distribution control module 2-70 is installed on the side of the common wall 2-100 facing the second compartment 2-12. In specific embodiments, the power distribution control module 2-70 includes but is not limited to a distribution box 2-71, a PCS (central control module) 2-72, a PDU-A (power distribution unit) 2-74, and an EVCC (sub-control module) 2-73. It should be understood that these modules do not require frequent user contact, so existing energy stations generally place these devices in relatively hidden locations, which is not conducive to their maintenance and inspection. The present invention sets these modules within the second compartment 2-12, saving a significant amount of space in the first compartment 2-11 and facilitating user maintenance and inspection of these devices.

Please refer to Figs. 20 and 21. The hanging devices are installed on the side wall of the first compartment 2-11 for hanging garden tools. In specific embodiments, the hanging devices can include a blower hanger 2-61, a pruner hanger 2-62, a brush cutter hanger, and a chainsaw hanger 2-63. These hangers can be arranged on the side wall of the first compartment 2-11 in a way that saves as much space as possible according to the specific size parameters of the garden tools. For example, the blower is generally larger in size and can be set alone on one side wall, while the pruner, brush cutter, and chainsaw are relatively slender and can be placed parallel on the other side wall.

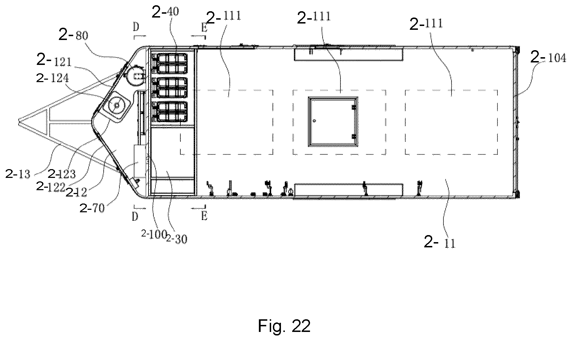

Please refer to Fig. 22. The parking platform 2-111 is formed by the bottom plate of the first compartment 2-11 and is used to park garden off-road vehicles. In specific embodiments, the garden off-road vehicles can be lawn mowers. It should be understood that since the power distribution control module 2-70 is transferred to the second compartment 2-12 in the present invention, the bottom plate of the first compartment 2-11 can be designed to be flatter, thereby accommodating more garden off-road vehicles.

The present invention positions the second compartment 2-12 above the area where the arm 2-13 was originally located, ensuring that the arm 2-13 has sufficient effective length to avoid collisions between the trailer vehicle 2-10 and the towing vehicle when turning, while also expanding the storage space of the compartment. This design provides additional storage space without changing the overall length of the trailer vehicle 2-10.

Please refer to Fig. 19. In an alternative embodiment of the present invention, the chassis of the trailer vehicle 2-10 is provided with an arm 2-13 at the front, with the arm 2-13 gradually narrowing forward from both sides of the first compartment 2-11. The vertical projection area of the second compartment 2-12 is located within the vertical projection area of the arm 2-13. It should be understood that the dotted line area in Fig. 19 indicates the traditional installation position of the arm 2-13. The present invention positions the second compartment 2-12 in this area, with the chassis of the second compartment 2-12 considered part of the arm 2-13, thus the second compartment 2-12 does not occupy additional lateral space. In other embodiments, the vertical projection area of the second compartment 2-12 can also be at least partially within the vertical projection area of the arm 2-13.

Please refer to Fig. 22. In an alternative embodiment of the present invention, the second compartment 2-12 further includes a first side wall 2-121 and a second side wall 2-122. The first side wall 2-121 and the second side wall 2-122 gradually narrow forward from both sides of the first compartment 2-11. It should be noted that the front ends of the first side wall 2-121 and the second side wall 2-122 should maintain a certain distance from the front end of the arm 2-13. Specifically, the front ends of the first side wall 2-121 and the second side wall 2-122 should be located behind the front end of the arm 2-13, thus avoiding collisions between the trailer vehicle 2-10 and the rear of the towing vehicle during turns.

Please refer to Fig. 20. In an alternative embodiment of the present invention, the bottom of the common wall 2-100 is provided with a recessed accommodating chamber 2-1001 towards the first compartment 2-11. At least part of the structure of the energy storage module 2-20 is housed within the accommodating chamber 2-1001. It should be understood that the forward protrusion distance of the second compartment 2-12 in the present invention is limited by the size of the arm 2-13. Therefore, when the size of the energy storage module 2-20 is relatively large, it needs to occupy part of the space in the first compartment 2-11.

Please refer to Figs. 20-22. In an alternative embodiment of the present invention, it further includes a battery pack charging module 2-40. The battery pack charging module 2-40 is housed within the first compartment 2-11 and is located above the accommodating chamber 2-1001. The battery pack charging module 2-40 is used to charge the removable battery packs of garden tools. Its placement above the accommodating chamber 2-1001 allows it to be closer to the energy storage module 2-20, saving cable length, while also fully utilizing the vertical space above the accommodating chamber 2-1001.

Please refer
a. to Figs. 22 and 23. In an alternative embodiment of the present invention, the second compartment is configured to accommodate a first water tank 2-80, reflective cones, fire extinguishing equipment, garden tool accessories, and one or more combinations of the power distribution control module. Specifically, the first water tank 2-80 can be a drinking water tank, mounted on the side of the common wall 2-100 facing the second compartment 2-12. The fire extinguishing equipment can include various fire extinguishers, fire hoses, fire axes, fire sand, etc. Garden tool accessories can include hoses or other replaceable parts of garden tools. Furthermore, the second compartment 2-12 is provided with a partition 2-123, which is configured to extend in at least one direction to form a first storage space for accommodating the first water tank 2-80. The first storage space is configured to isolate the first water tank 2-80 from the installation area outside the first water tank. In a specific embodiment, the partition 2-123 is vertically arranged to isolate the drinking water tank 2-80 from the power distribution control module 2-70. The second compartment 2-12 has a first compartment door 2-101 and a second compartment door 2-102. The first compartment door 2-101 and the second compartment door 2-102 correspond to the first storage space and the installation area outside the first storage space, respectively. The present invention utilizes the partition 2-123 to isolate the installation area of the drinking water tank in the second compartment 2-12 from the installation area of the power distribution control module 2-70, preventing contamination of electronic components or malfunctions due to pipeline failures of the drinking water tank 2-80, thereby improving safety. In specific embodiments, there is still some spare space in the installation area of the drinking water tank 2-80, which can be used to store reflective cones 2-124, fire extinguishers, and other auxiliary equipment.

Please refer to Fig. 23. In an alternative embodiment of the present invention, the bottom of the first compartment 2-11 and/or the second compartment 2-12 is provided with a second water tank 2-90. The second water tank 2-90 can be a cleaning water tank used for washing, cleaning, irrigation, etc.

Please refer to Fig. 20. In an alternative embodiment of the present invention, it also includes a charging box 2-50. The charging box 2-50 is mounted on the side wall of the first compartment 2-11. Furthermore, the area on the side wall of the first compartment 2-11 adjacent to the charging box 2-50 is provided with a third compartment door 2-103. The charging box 2-50 is used to charge garden off-road vehicles such as lawn mowers. The present invention places the charging box 2-50 on the side wall and sets the third compartment door 2-103 nearby, so the charging box 2-50 can charge both garden off-road vehicles inside the first compartment 2-11 and those on the ground. In specific embodiments, the third compartment door 2-103 does not need to be too large, just enough to allow the charging gun to pass through.

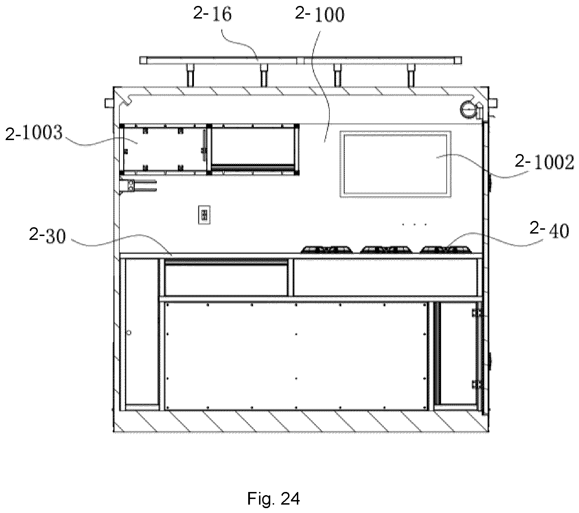

Please refer to Fig. 24. In an alternative embodiment of the present invention, it also includes a storage cabinet 2-30. The storage cabinet 2-30 is located inside the first compartment 2-11 and is tightly attached to the common wall 2-100. The battery pack charging module 2-40 is housed within the storage cabinet 2-30. In specific embodiments, the storage cabinet 2-30 is provided with a chamber below its countertop to avoid the parking platform 2-111. The storage cabinet 2-30 shares part of the horizontal space with the energy storage module 2-20 and the garden off-road vehicles, further improving space utilization. In further embodiments, the space above the storage cabinet 2-30 can be further utilized by setting a hanging cabinet 2-1003 and a display 2-1002 above it.

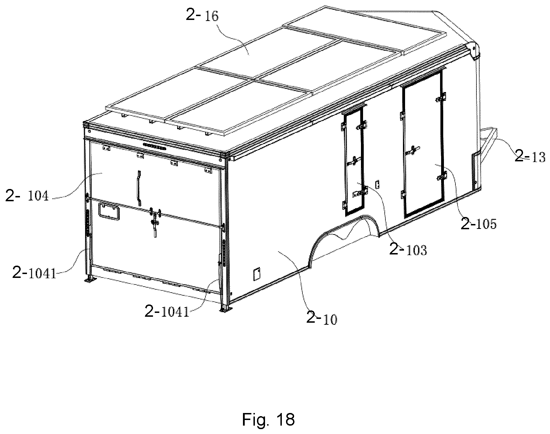

Please refer to Figs. 17 and 18. In an alternative embodiment of the present invention, the rear part of the first compartment 2-11 is provided with a fourth compartment door 2-104. The fourth compartment door 2-104 is configured to form a ramp between the bottom plate of the first compartment 2-11 and the ground when opened. Specifically, the lower end of the fourth compartment door 2-104 is hinged to the rear end of the bottom plate of the first compartment 2-11, and a gas strut 2-1041 is provided between the fourth compartment door 2-104 and the outer wall of the first compartment 2-11. It should be understood that when the fourth compartment door 2-104 is opened, garden off-road vehicles can drive directly from the ground into the first compartment 2-11 or from the first compartment 2-11 directly to the ground, improving the efficiency of storing and releasing garden off-road vehicles.

Please refer to Figs. 17-21, 23, and 24. In an alternative embodiment of the present invention, the top wall and/or side wall of the trailer vehicle 2-10 are provided with photovoltaic panels 2-16. The photovoltaic panels 2-16 can charge the energy storage module 2-20 to improve the endurance of the energy station. It should be noted that the primary energy source of the energy station is still charging through the power grid. Therefore, the present invention also provides a charging port 2-14 at the front of the compartment near the energy storage module 2-20. Additionally, to avoid safety hazards caused by some unexpected circuit system failures, the present invention also provides an emergency stop button near the charging port 2-14. The emergency stop button can cut off the power of the entire vehicle.

In further embodiments, the energy station of the present invention is also equipped with an air conditioning system 2-15. The air conditioning system 2-15 can cool the heating electronic components inside the energy station to ensure their performance.

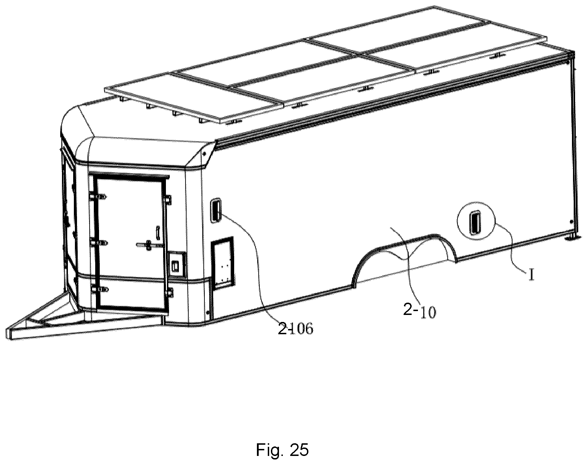

Please refer to Figs. 25-29. In further embodiments of the present invention, the side walls of the first compartment 2-11 and/or the second compartment 2-12 are provided with ventilation windows 2-106. The ventilation windows 2-106 include window frames 2-1067 and window covers 2-1061. The window covers 2-1061 are movably connected to the window frames 2-1067 so that the window covers 2-1061 can switch between the following positions: in position one, the window covers 2-1061 block the window openings of the window frames 2-1067; in position two, the window covers 2-1061 rotate forward or backward relative to the window frames 2-1067 at a certain angle to open the window openings. Specifically, as shown in Figs. 23-26, the window frames 2-1067 are provided with grilles 2-1062 at the corresponding window openings. The window covers 2-1061 are provided with connecting plates 2-1063, which penetrate the holes in the grilles 2-1062 to extend to the inside of the window frames 2-1067. The inside of the window frames 2-1067 is provided with arch-shaped limiters 2-1066. The inner end of the connecting plates 2-1063 is provided with guide posts 2-1064, which are in sliding contact with the arch-shaped limiters 2-1066. The connecting plates 2-1063 are also provided with handles 2-1065. When the guide posts 2-1064 are at the top of the arch-shaped limiters 2-1066, the window covers 2-1061 close the window openings. When the guide posts 2-1064 are in front of or behind the arch-shaped limiters 2-1066, the window covers 2-1061 rotate forward or backward to open the windows. Users can adjust the opening direction of the window covers 2-1061 according to the wind direction, allowing the window covers 2-1061 to guide air into the compartment, promoting air circulation inside the compartment, and improving the working environment inside the compartment.

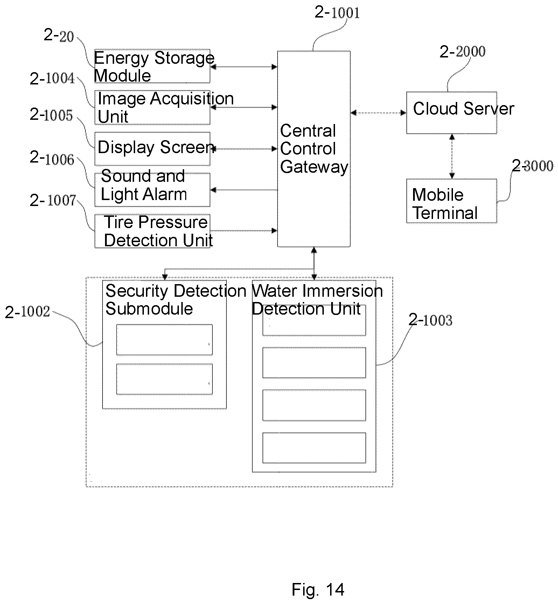

Please refer to Fig. 14. An embodiment of the present invention provides a safety monitoring system that includes a central control gateway 2-1001, a safety detection module, a cloud server 2-2000, and a mobile terminal 2-3000. The central control gateway 2-1001 is installed in the compartment; the safety detection module is installed in the compartment and is connected to the central control gateway 2-1001; the cloud server 2-2000 is connected to the central control gateway 2-1001; the mobile terminal 2-3000 is connected to the cloud server 2-2000. The central control gateway 2-1001 is configured to determine whether there is abnormal information in the compartment based on preset states and the detection data of the safety detection module and send the abnormal information outward; the cloud server 2-2000 is configured to receive the abnormal information and push the alarm information to the mobile terminal 2-3000 based on the abnormal information.

The safety monitoring system of the present invention can monitor the internal or surrounding environment of the energy station in real-time. When an abnormal event occurs inside or around the energy station, the central control gateway 2-1001 can upload data related to the abnormal event to the cloud server 2-2000. The cloud server 2-2000 then a. generates corresponding alarm information based on this data and pushes the alarm information to the mobile terminal 2-3000, allowing users to promptly learn about these abnormal events and take corresponding loss prevention measures.

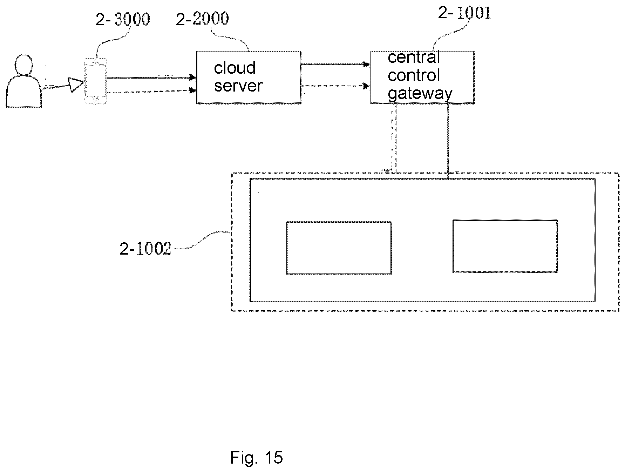

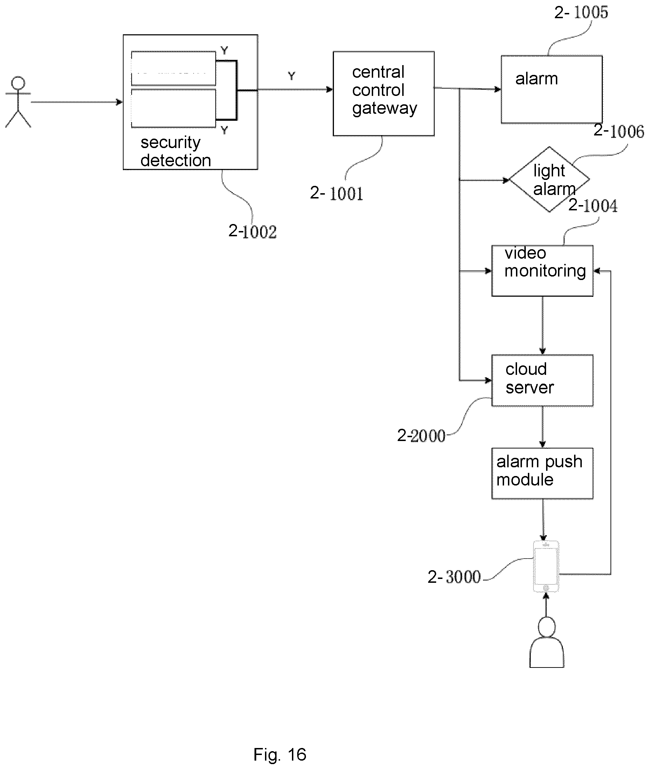

Please refer to Figs. 14-16. In an alternative embodiment of the present invention, the safety detection module includes a security detection submodule 2-1002. The security detection submodule 2-1002 includes at least one of a door magnetic detection unit and a vibration detection unit. The door magnetic detection unit and/or the vibration detection unit are installed on the compartment door and/or in the area of the compartment adjacent to the compartment door. It should be understood that the security detection submodule 2-1002 is used to detect whether the energy station is violently opened, allowing users to promptly learn about it in the event of theft or robbery and take corresponding preventive measures. The security detection submodule 2-1002 of the present invention is not limited to the door magnetic detection unit and vibration detection unit described above, but can also be other types of detection devices, such as infrared detection units and sound detection units.

In one embodiment, the security detection function can be networked with the alarm system of relevant law enforcement departments, and a positioning module can be installed in the energy station to enable law enforcement personnel to quickly reach the scene for disposal in the event of theft or robbery.

Please refer to Fig. 14. In an alternative embodiment of the present invention, the safety detection module includes a disaster detection submodule 2-1003. The disaster detection submodule 2-1003 includes at least one or a combination of several of a smoke detection unit, a flame detection unit, a water immersion detection unit, and a tilt detection unit. It should be understood that the energy station contains a large number of electrical facilities, such as battery packs and inverters, which may malfunction during operation and cause fires. Additionally, the energy station is generally parked outdoors, where the surrounding environment is unpredictable and may be subjected to floods, landslides, and other disasters. The disaster detection submodule 2-1003 provided in this embodiment can promptly obtain information on these disaster events and issue alarm information to users, allowing them to take remedial measures before the disaster worsens.

In one embodiment, the configuration of the security detection submodule 2-1002 and/or the disaster detection submodule 2-1003 in the safety detection module is unified, meaning that the security detection submodule 2-1002 and/or the disaster detection submodule 2-1003 can be uniformly configured to be normally open or, in the system initialization phase, the security detection submodule 2-1002 and/or the disaster detection submodule 2-1003 can be in a closed state. Users can start the security detection submodule 2-1002 and/or the disaster detection submodule 2-1003 uniformly through the operation button, and likewise, users can also uniformly close the security detection submodule 2-1002 and/or the disaster detection submodule 2-1003 during subsequent operations. Of course, the security detection submodule 2-1002 and the disaster detection submodule 2-1003 can also be indistinguishable, and users cannot configure them separately, but can only uniformly turn on or off all submodules through the operation button.

In one embodiment, users can also customize the selection of the security detection submodule 2-1002 and/or the disaster detection submodule 2-1003 in the safety detection module, meaning that users can choose the detection modules to be activated in the security detection submodule 2-1002 and/or the disaster detection submodule 2-1003 according to their needs. Of course, the security detection submodule 2-1002 and the disaster detection submodule 2-1003 can also be indistinguishable, and each module can be individually selected to be activated or deactivated by users.

In other embodiments, the definition can also be made according to the attributes of the disaster, for example, the detection modules belonging to the category of natural disasters can be directly defined as normally open and cannot be turned off.

In one embodiment, the safety monitoring system can have the following multiple response modes for the abnormal information detected by the safety detection module:

Alarm only, no action: when one or more submodules in the safety detection module detect an abnormality, the safety monitoring system only alerts the user to the abnormality without any action, leaving it to the user to decide whether to handle it. For example, when the flame detection unit detects a flame point, the safety monitoring system only pushes alarm information, which can be displayed on the display screen inside the energy station or on a mobile terminal.

Alarm, delayed action: when one or more submodules in the safety detection module detect an abnormality, the safety monitoring system alerts the user to the abnormality and will take action after the abnormality persists for a preset time. For example, when the flame detection unit detects a flame point, the safety monitoring system pushes alarm information to alert the user to the abnormality and, after the abnormality persists for a preset time, the safety monitoring system triggers the alarm through sound and/or light alarms. In other embodiments, the action can also be understood as a direct solution to the problem, such as the safety monitoring system can be equipped with a fire extinguishing device. When the flame detection unit detects a flame point, the safety monitoring system pushes alarm information to alert the user to the abnormality and, after the abnormality persists for a preset time, automatically activates the fire extinguishing device to extinguish the fire.

Alarm and immediate action: when one or more submodules in the safety detection module detect an abnormality, the safety monitoring system alerts the user to the abnormality and immediately takes action. For example, when the flame detection unit detects a flame point, the safety monitoring system pushes alarm information to alert the user to the abnormality and triggers the alarm through sound and/or light alarms. In other embodiments, the safety monitoring system can be equipped with a fire extinguishing device. When the flame detection unit detects a flame point, the safety monitoring system pushes alarm information to alert the user to the abnormality and immediately activates the fire extinguishing device to extinguish the fire.

Of course, besides the flame detection unit case, the smoke detection unit can also be linked with the air conditioning system in the energy station to activate the ventilation mode of the air conditioning system when the smoke detection unit detects smoke in the compartment. Additionally, the water immersion detection unit can be linked with the drainage device in the energy station to activate the active drainage function when the water immersion detection unit detects water entering the energy station. Regarding the above multiple response modes, users can select different operation modes according to the actual application scenario or work needs.

Of course, in other embodiments, the safety monitoring system is only configured with one of the following multiple response modes: alarm only, no action; alarm, delayed action; alarm and immediate action.

In other embodiments, the safety monitoring system can also automatically match the response mode of abnormal alarms according to the severity of the abnormal alarm information detected by a single submodule or multiple submodules. In specific application scenarios, the detection results of the security detection submodule 2-1002 and/or the disaster detection submodule 2-1003 can be divided into multiple levels based on severity. Different levels correspond to different response modes, such as the mild abnormal level matching the alarm only, no action response mode; the moderate abnormal level matching the alarm and delayed action response mode; and the severe abnormal level matching the alarm and immediate action response mode. In more severe cases, the system can also directly control the entire vehicle to power off to reduce losses.

In one embodiment, the alarm actions mentioned above can be completed by submodules in the safety detection module, meaning that the submodules perform data collection and independently judge abnormalities and alarm actions, and then upload the corresponding data to the central control gateway 2-1001 or the cloud server. For example, when the smoke detection unit detects smoke inside the energy station, it directly alarms through the sound and/or light alarms on the smoke detection unit and outputs a high-level signal to the central control gateway 2-1001 or the cloud server to inform the central control gateway 2-1001 or the cloud server that the smoke detection unit has detected an abnormality in the environment. The high-level signal indicates an abnormality, while the low-level signal indicates normality. Of course, in more intelligent smoke detection units, other related information can also be uploaded, such as smoke concentration and the main components of the smoke.

Of course, in other embodiments, the submodules in the safety detection module can also perform data collection and upload the collected data to the central control gateway 2-1001 or the cloud server, where the central control gateway 2-1001 or the cloud server analyzes the data collected by the submodules to determine whether there is an abnormality and perform alarm actions.

The disaster detection submodule 2-1003 of the present invention includes detection units not limited to the types mentioned above. In practical applications, corresponding detection units can be set according to the actual working environment of the energy station. For example, when the energy station works in a high-temperature environment, a temperature detection unit can be set to monitor the temperature. When the temperature exceeds the preset safe temperature, the central control gateway 2-1001 can issue a high-temperature warning to the user through the cloud server 2-2000, or the central control gateway 2-1001 or the cloud server 2-2000 can automatically activate the air conditioning system to cool the energy station. Additionally, when driving on rough terrain, a tire pressure detection unit 2-1007 can be set to obtain tire pressure data in real-time, allowing timely maintenance measures when a tire blowout occurs.

Please refer to Fig. 14. In an alternative embodiment of the present invention, it
a. also includes an image acquisition unit 2-1004. The image acquisition unit 2-1004 is installed in the compartment and is used to collect video data from inside and/or outside the compartment and send the video data to the central control gateway 2-1001. The cloud server 2-2000 is configured to receive the video data sent by the central control gateway 2-1001 and, in response to a video call request from the mobile terminal 2-3000, send the video data to the mobile terminal 2-3000. Users can retrieve monitoring images in real-time through mobile terminals such as smartphone apps to verify whether the abnormal events in the alarm information are real, avoiding unnecessary actions due to system false alarms.

Please refer to Fig. 14. In a further embodiment, the central control gateway 2-1001 is configured to extract target video data within a preset time period from the video data when there is abnormal information and send the target video data outward. The cloud server 2-2000 is configured to identify whether there are abnormal features in the target video data and verify the abnormal information based on the identification result. When the abnormal features match the event represented by the abnormal information, the cloud server 2-2000 pushes the alarm information to the mobile terminal 2-3000. It should be noted that the cloud server 2-2000 can use image recognition algorithms to identify abnormal features. These image recognition algorithms can be selected from existing technologies and are not further described here. This embodiment can perform secondary verification of abnormal information through video data, reducing the probability of false alarms. This embodiment performs image recognition work on the cloud server 2-2000, reducing the computational burden on the energy station and lowering the hardware cost of the energy station.

Please refer to Fig. 14. In a further embodiment, the energy storage module 2-20 is connected to the central control gateway 2-1001. The central control gateway 2-1001 is configured to obtain the operating parameters of the energy storage module and send the operating parameters outward. The cloud server 2-2000 is configured to receive the operating parameters and send them to the mobile terminal 2-3000. In this embodiment, users can not only promptly obtain abnormal events in the energy station but also actively retrieve the operating data of the energy station to make reasonable work plans.

Please refer to Fig. 14. In an alternative embodiment of the present invention, it also includes a sound and light alarm 2-1006 and a display screen 2-1005. The sound and light alarm 2-1006 is installed in the compartment and is connected to the central control gateway 2-1001. The central control gateway 2-1001 is configured to send an alarm signal to the sound and light alarm 2-1006 when there is abnormal information. The display screen 2-1005 is installed in the compartment and is connected to the central control gateway 2-1001. The display screen 2-1005 is configured to receive the operating parameters and/or the abnormal information and generate a visual interactive interface based on the operating parameters and/or the abnormal information. The sound and light alarm 2-1006 and the display screen 2-1005 enable users inside or around the energy station to promptly obtain abnormal information.

Based on the above safety monitoring system, a safety monitoring method provided by one embodiment of the present invention is as follows:
The central control gateway 2-1001 receives the detection data sent by the safety detection module;
The central control gateway 2-1001 determines whether there is abnormal information in the energy station based on the preset state and the detection data;
When there is abnormal information, the central control gateway 2-1001 extracts the target video data collected by the image acquisition unit 2-1004 within a preset time period and sends the target video data and the abnormal information to the cloud server 2-2000. The cloud server 2-2000 receives the abnormal information and pushes alarm information to the mobile terminal 2-3000 based on the abnormal information. Specifically, the abnormal features in the target video data are identified, and the abnormal features are compared with the abnormal information. When the abnormal features match the event represented by the abnormal information, the alarm information is pushed to the mobile terminal 2-3000.

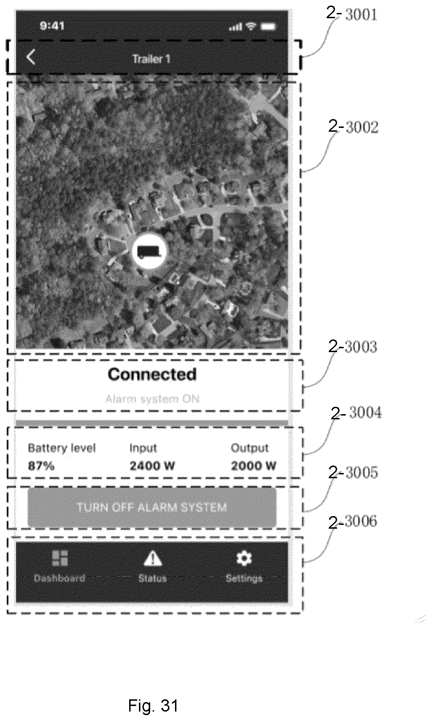

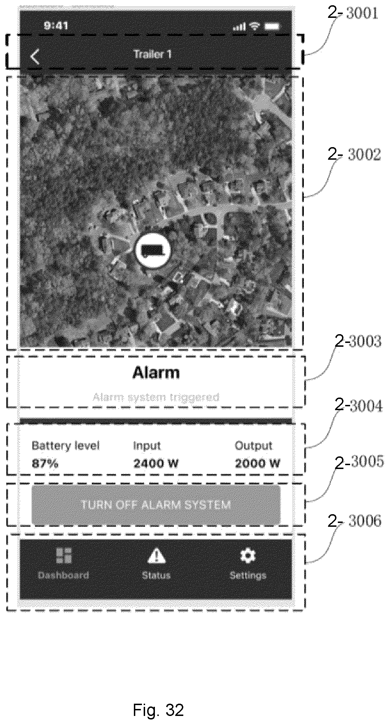

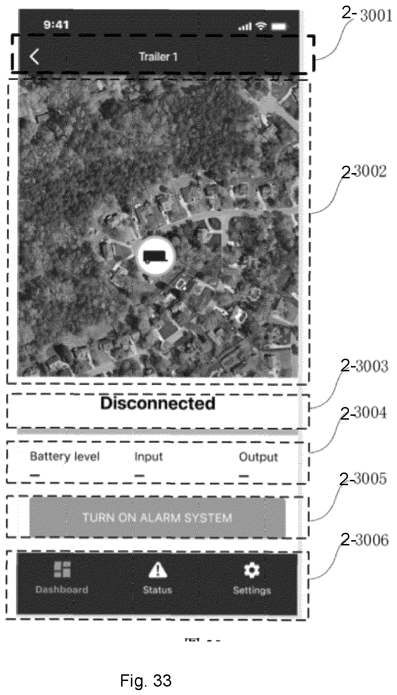

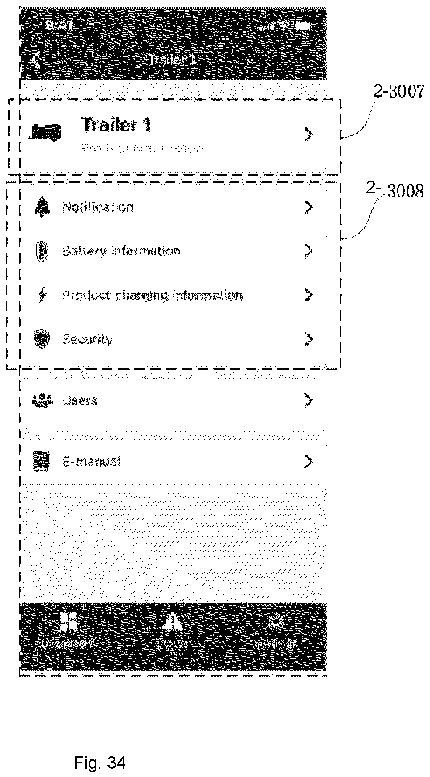

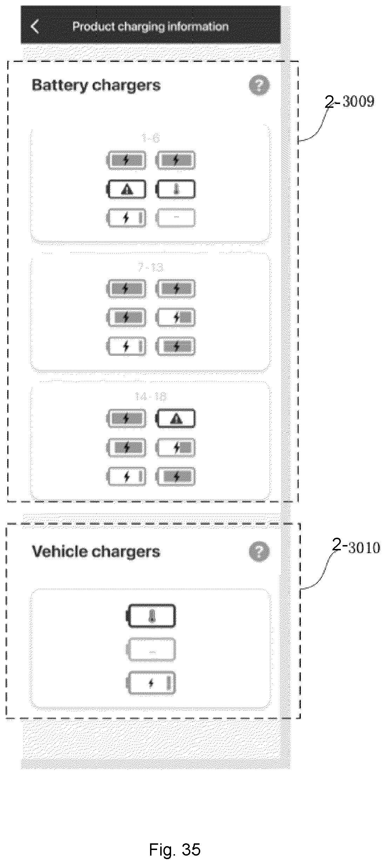

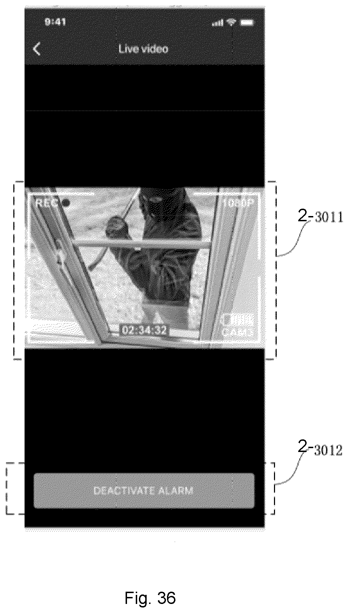

In specific embodiments, the mobile terminal can provide a visual interactive interface, as shown in Figs. 31-36, where Figs. 31-33 are monitoring status preview interfaces, including a title bar 2-3001 for displaying device labels or device names (e.g., Trailer 2-1); a map bar 2-3002 for displaying the location of the device on the map, with the device represented by an icon and different monitoring states indicated by different colors, such as green for normal monitoring, red for abnormal, and gray for monitoring off; a monitoring status bar 2-3003 for displaying the monitoring status (e.g., Connected, Alarm, or Disconnected); a battery status bar 2-3004 for displaying the battery status (e.g., Battery, Input, and Output); a status toggle bar 2-3005 for toggling the monitoring status (e.g., TURN OFF ALARM SYSTEM or TURN ON ALARM SYSTEM); a function navigation bar 2-3006 for invoking other functions (e.g., Dashboard, Status, and Settings); Figs. 2-21 are device selection interfaces, including a device selection bar 2-3007 for selecting the monitored device (e.g., Trailer2-1, Trailer2-2, etc.); a function selection bar 2-3008 for selecting the corresponding monitoring function (e.g., Notification, Battery information, Product charging information, Security, etc.); Fig. 2-22 is a charging status monitoring interface, including a battery charging status bar 2-3009 for displaying the status of the battery pack charging interface; a vehicle charging status bar 2-3010 for displaying the status of the vehicle charging interface; Fig. 2-23 is a monitoring screen display interface, including an image display bar 2-3011 for displaying the monitoring screen; an operation bar 2-3012 for handling alarm information (e.g., DEACTIVATE ALARM).

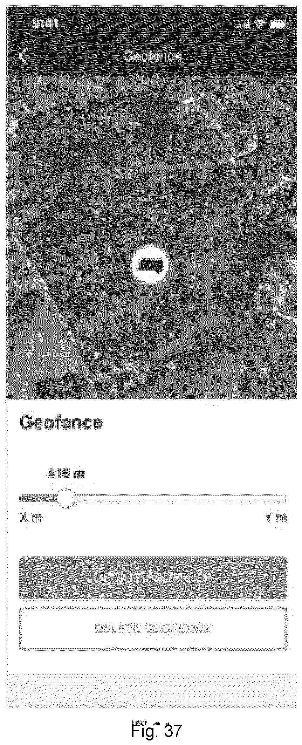

As shown in Fig. 37, in one embodiment, the security monitoring system is also configured with a geofence function. Users can input the desired range on the mobile terminal to form the corresponding geofence.

In summary, the safety monitoring system of the present invention can monitor the internal or surrounding environment of the energy station in real-time. When an abnormal event occurs inside or around the energy station, the central control gateway 2-1001 can upload data related to the abnormal event to the cloud server 2-2000. The cloud server 2-2000 then generates corresponding alarm information based on this data and pushes the alarm information to the mobile terminal 2-3000, allowing users to promptly learn about these abnormal events and take corresponding loss prevention measures.

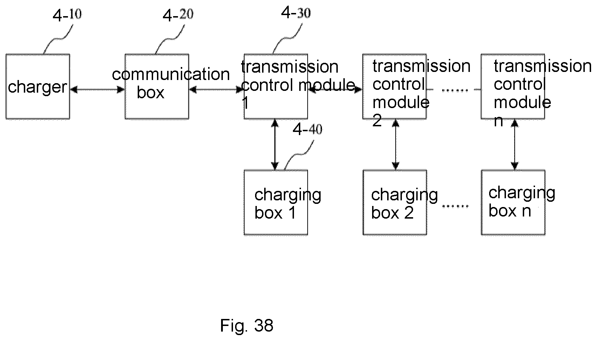

Fig. 38 shows a functional block diagram of the charging system according to an embodiment of the present application. As shown in Fig. 38, the charging system includes a charger 4-10, a communication control module 4-20, and a directional power delivery system. The communication control module 4-20 is connected to the charger 4-10; the directional power delivery system includes several series-connected transmission control modules 4-30, with the first transmission control module 4-30 connected to the communication control module 4-20. Each transmission control module 4-30 is provided with a charging interface 4-34 for connecting to the power-receiving device 4-40. The transmission control module 4-30 is used to control the connection or disconnection of the connected power-receiving device 4-40 from the charging system. The communication control module 4-20 controls each transmission control module 4-30 to ensure that only one power-receiving device 4-40 is connected to the system for charging at any given time. This allows automatic switching to charge multiple power-receiving devices 4-40 one by one with a single charger 4-10 in an unattended manner, without any power limitation. The power-receiving device 4-40 is connected to the charging interface 4-34 and communicates with the charger 4-10, indicating that the power-receiving device 4-40 is connected to the charging system. When the power-receiving device 4-40 is connected to the charging interface 4-34 but disconnected from the charger 4-10, it indicates that the power-receiving device 4-40 is disconnected from the charging system.

As shown in Fig. 38, the charger 4-10 serves as the front end of the charging system and can be an AC/DC charging power converter. It can convert AC power to DC power and supply it to the DC bus to power the power-receiving device 4-40, and also provide a 4-12V auxiliary power supply to the auxiliary power bus to power the second control unit 4-33 in the transmission control module 4-30 and the battery management unit 4-42 in the power-receiving device.

In one embodiment, the communication control module 4-20 is a communication integration box, which is an external module independent of the charger 4-10. By designing a separate communication integration box, it is possible to make the existing charger 4-10 compatible with the charging system of the present application without needing to modify the existing charger 4-10. Of course, the communication control module 4-20 can also be directly integrated into the charger 4-10 as a single structure.

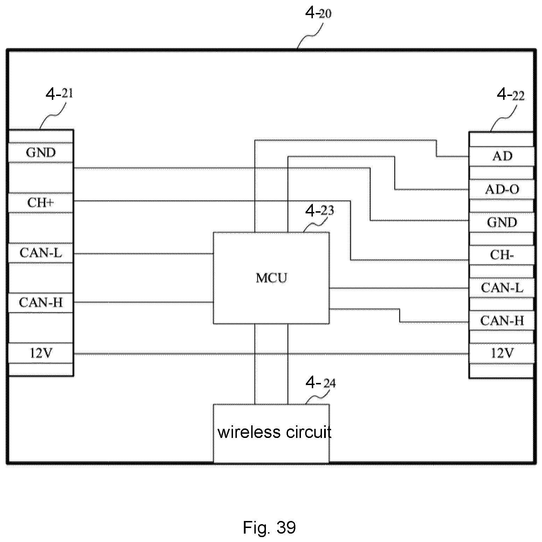

As shown in Figs. 38 and 39, the communication control module 4-20 is connected between the charger 4-10 and the directional power delivery system. The communication control module 4-20 communicates with each transmission control module 4-30 via a CAN bus and serves as a relay module for information exchange. Its main function is to complete the communication control and information collection and reporting functions of each transmission control module 4-30 connected to the directional power delivery system, and to facilitate the communication interaction between the transmission control module 4-30 and the charger 4-10. As shown in Fig. 39, in one embodiment, the communication control module 4-20 includes a first control unit 4-23, a first input interface 4-21, and a first output interface 4-22. The first control unit 4-23 is connected to the first input interface 4-21 and the first output interface 4-22, respectively. The first input interface 4-21 is externally connected to the charger 4-10 and connects with the charging gun of the charger 4-10. The second output interface 4-32 connects with the second input interface 4-31 of the first transmission control module 4-30 in the directional power delivery system.

Specifically, the first input interface 4-21 includes GND terminal, CH+ terminal, CAN-H terminal, CAN-L terminal, and auxiliary power terminal. The first output interface 4-22 includes AD terminal, AD-O terminal, GND terminal, CH+ terminal, CAN-H terminal, CAN-L terminal, and auxiliary power terminal. The GND terminal, CH+ terminal, and auxiliary power terminal of the first input interface 4-21 are connected to the GND terminal, CH+ terminal, and auxiliary power terminal of the first output interface 4-22, respectively. The first controller is connected to the CAN-H terminal and CAN-L terminal of the first input interface 4-21, and to the CAN-H terminal, CAN-L terminal, AD terminal, and AD-O terminal of the first output interface 4-22.

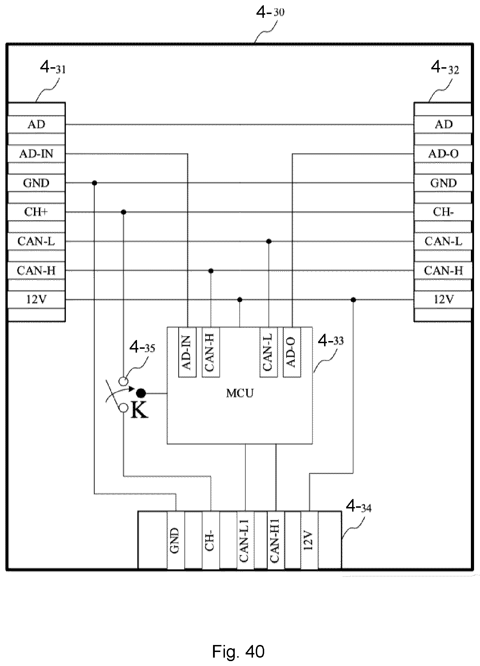

As shown in Figs. 38 and 40, in one embodiment, the directional power delivery system is connected to the communication control module 4-20 and includes several series-connected transmission control modules 4-30. The transmission control module 4-30 is primarily used to control the delivery of charging power from the charger 4-10 to each power-receiving device 4-40.

The transmission control module 4-30 includes a second control unit 4-33, a second input interface 4-31, a second output interface 4-32, and a charging interface 4-34. The second control unit 4-33 is connected to the second input interface 4-31, the second output interface 4-32, and the charging interface 4-34. The second input interface 4-31 is connected to the communication control module 4-20 or to the second output interface 4-32 of the next transmission control module 4-30 in the series. The second input interface 4-31 is also connected to the charging interface 4-34.

It should be noted that, in one embodiment, to facilitate the expansion of the directional power delivery system, the transmission control module 4-30 is provided with expansion connection ports. Through these expansion connection ports, the transmission control modules 4-30 in the directional power delivery system can be expanded. When adjacent transmission control modules 4-30 are directly connected via quick-disconnect fittings, the expansion connection ports refer to the first input interface 4-21 and the second input interface 4-31 of the transmission control module 4-30. These first input interface 4-21 and second input interface 4-31 can either be interfaces provided on the transmission control module 4-30 or interfaces drawn out through connection cables. By using an expandable design, the directional power delivery system can be extended based on the number of power-receiving devices 4-40, making the charging interfaces 4-34 unrestricted and providing a corresponding charging interface 4-34 for each power-receiving device 4-40, which has significant application potential.

Specifically, as shown in Fig. 40, the second input interface 4-31 includes AD terminal, AD-IN terminal, GND terminal, CH+ terminal, CAN-H terminal, CAN-L terminal, and auxiliary power terminal. The second output interface 4-32 includes AD terminal, AD-O terminal, GND terminal, CH+ terminal, CAN-H terminal, CAN-L terminal, and auxiliary power terminal. The second control unit 4-33 includes AD-IN terminal, CAN-H terminal, CAN-L terminal, and AD-O terminal. The charging interface 4-34 includes GND terminal, CH+ terminal, CAN-H4-1 terminal, CAN-L4-1 terminal, and auxiliary power terminal. The AD terminal, GND terminal, CH+ terminal, CAN-H terminal, CAN-L terminal, and auxiliary power terminal of the second input interface 4-31 are respectively connected to the AD terminal, GND terminal, CH+ terminal, CAN-H terminal, CAN-L terminal, and auxiliary power terminal of the second output interface 4-32. The AD-IN terminal of the second input interface 4-31 is connected to the AD-IN terminal of the second control unit 4-33, and the AD-O terminal of the second control unit 4-33 is connected to the AD-O terminal of the second input interface 4-31. The CAN-H terminal and CAN-L terminal of the second control unit 4-33 are mounted on the CAN bus between the second input interface 4-31 and the second output interface 4-32. The CAN-H4-1 terminal and CAN-L4-1 terminal of the charging interface 4-34 are connected to the second control unit 4-33. The GND terminal, CH+ terminal, and auxiliary power terminal of the charging interface 4-34 are respectively connected to the ground line, DC bus, and auxiliary power bus between the second input interface 4-31 and the second output interface 4-32.

As shown in Fig. 40, in one embodiment, a control switch 4-35 is provided on the connection line between the CH+ terminal of the charging interface 4-34 and the DC bus between the second input interface 4-31 and the second output interface 4-32. The control switch 4-35 can control the connection and disconnection of the circuit between the DC bus and the CH+ terminal of the charging interface 4-34 based on the command of the second control unit 4-33. This allows the control switch 4-35 to control the power delivery to the power-receiving device 4-40. As a redundant design, this control switch 4-35, together with the relay between the battery management unit 4-42 and the battery pack in the power-receiving device 4-40, increases the
a. reliability of the charging system's operation.

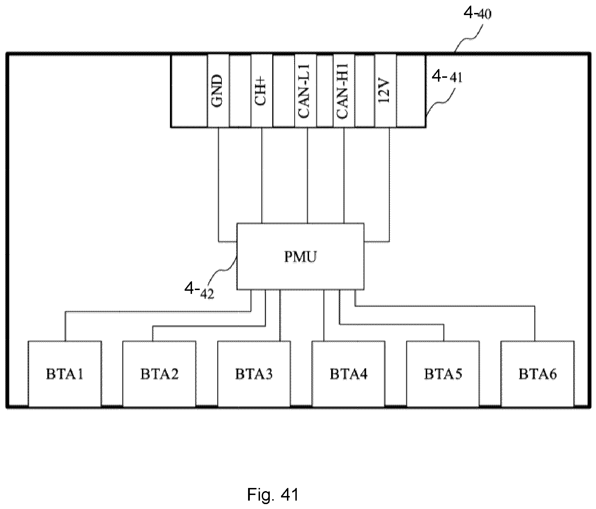

As shown in Fig. 41, in one embodiment, the power-receiving device 4-40 is a charging box that can hold multiple battery packs for charging. The charging box includes a third input interface 4-41 (also known as a PMU connector), a battery management unit 4-42, and several battery packs. One end of the battery management unit 4-42 is connected to the charging interface 4-34 of the transmission control module 4-30 via the third input interface 4-41, and the other end is connected to the internal battery packs. Fig. 41 shows a charging box that can hold up to 4-6 battery packs for charging. It should be understood that the maximum number of battery packs that can be inserted into the charging box can be designed according to actual needs.

The third input interface 4-41 matches the terminals of the charging interface 4-34 and includes GND terminal, CH+ terminal, CAN-H4-1 terminal, CAN-L4-1 terminal, and auxiliary power terminal. The power-receiving device 4-40 communicates and connects with the transmission control module 4-30 for charging through the battery management unit 4-42 and charges the internal battery packs.

It should be noted that, in some embodiments, the power-receiving device 4-40 can also be an electric vehicle or other equipment that requires charging. In this case, it is only necessary to change the structure of the charging interface 4-34 of the transmission control module 4-30 to match the charging interface 4-34 of the electric vehicle, using a charging pile for electric vehicles as the charger 4-10, connected to the communication control module 4-20.

As shown in Fig. 39, in one embodiment, the communication control module 4-20 also includes a wireless module 4-24, which is used to report the collected information to the cloud. The wireless module 4-24 can be a WiFi module or a Bluetooth module. When the wireless module 4-24 is a WiFi module, it can directly upload the operating data of the entire charging system to the cloud through a wireless network. When the wireless module 4-24 is a Bluetooth module, it needs to use the Bluetooth function of the mobile terminal and the mobile terminal's 4-4G or 4-5G network to upload the operating data of the entire system to the cloud.

As shown in Figs. 38-40, in one embodiment, the charging system also includes an end wiring cover. The end wiring cover is fitted over the second output interface 4-32 of the last transmission control module 4-30. One function of the end wiring cover is to close off the second output interface 4-32 of the last transmission control module 4-30, and another function is to short-circuit connect the AD-O port and the AD port of the second output interface 4-32 of the last transmission control module 4-30. This allows the AD signal sent out from the AD-O port of the communication control module 4-20 to pass through the AD-IN terminal and the AD-O terminal of each transmission control module 4-30 in turn and return to the communication control module 4-20 via the AD port of the last transmission control module 4-30, forming an AD communication loop. The communication control module 4-20 is also used to allocate communication addresses to each transmission control module 4-30 in the directional power delivery system via the AD communication loop.

It should be noted that, during the startup state of the charging system, an AD detection signal can be continuously maintained in the AD communication loop. Since adding a new transmission control module 4-30 will interrupt the AD communication, making it impossible to receive the AD detection signal returned through the AD communication loop, it is possible to use whether the returned AD detection signal is received to determine whether a new transmission control module 4-30 has been added. The newly added transmission control module 4-30 will remain silent until it is allocated a communication address.

It should be noted that, during the charging process, when a new transmission control module 4-30 is added to the directional power delivery system, the following two methods can be used to allocate addresses to the newly added transmission control module 4-30:

First: When the communication control module 4-20 detects that a new transmission control module 4-30 has been added to the directional power delivery system, it immediately stops charging, and the communication control module 4-20 reallocates addresses to all transmission control modules 4-30 in the directional power delivery system via the AD communication loop.

Second: Wait until the currently charging power-receiving device 4-40 finishes charging. The transmission control module 4-30 corresponding to the completed charging power-receiving device 4-40 will send a charging completion command to the communication control module 4-20. Upon receiving the charging completion command, the communication control module 4-20 reallocates addresses to all transmission control modules 4-30 in the directional power delivery system via the AD communication loop.

In one embodiment, when multiple power-receiving devices 4-40 are connected through transmission control modules 4-30 in the charging system, the communication control module 4-20 can charge each power-receiving device 4-40 connected to the transmission control modules 4-30 one by one according to the series order of the transmission control modules 4-30 in the directional power delivery system. It should be understood that, in other embodiments, other preset rules can be used to charge each power-receiving device 4-40 connected to the transmission control modules 4-30.

In one embodiment, when charging a power-receiving device 4-40 of a particular transmission control module 4-30, the communication control module 4-20 can send a silence command to all transmission control modules 4-30 via the CAN bus or AD communication loop. The transmission control modules 4-30 will adjust their communication status based on their charging status upon receiving the silence command. If they are in a charging state, they maintain normal communication status. If they are in a non-charging state, they maintain a restricted communication status. Transmission control modules 4-30 in a restricted communication status do not actively send charging requests to the communication control module 4-20 and only send their own status information (e.g., whether a power-receiving device 4-40 is connected) and the status information of the connected power-receiving device 4-40 (e.g., whether there is a battery pack inserted in the power-receiving device 4-40) to the CAN bus. Thus, during the charging process, all other transmission control modules 4-30, except for the one currently being charged, remain in a restricted communication status.

In one embodiment, during the charging process, the transmission control module 4-30 is also used to monitor the communication status between the power-receiving device 4-40 and the communication control module 4-20 and to determine the working status of the entire charging system. It also monitors the health status of the power-receiving device 4-40. When the working status of the entire charging system and/or the health status of the power-receiving device 4-40 becomes abnormal, the transmission control module 4-30 cuts off all connections between the power-receiving device 4-40 and the communication control module 4-20. It also displays the abnormal status on the display panel of the transmission control module 4-30 and informs the communication control module 4-20 to wait for the next power-receiving device 4-40 to be connected before continuing to work. The communication control module 4-20 calls each other transmission control module 4-30 via the CAN bus to determine if they need charging. When a transmission control module 4-30 with a power-receiving device 4-40 responds, the communication control module 4-20 charges the power-receiving device 4-40 connected to that transmission control module 4-30.

The charging system of the present application can be applied in various scenarios, which are described as follows:
In one scenario, the charger 4-10, communication integration box, and several transmission control modules 4-30 of the charging system can be deployed in a workshop, office, or other indoor environment to form a fixed charging system. Garden workers can transport all charging boxes indoors and connect them to the charging interfaces 4-34 of the transmission control modules 4-30 at night or after work, using the charging system to charge the battery packs in all the charging boxes.

In another scenario, the charger 4-10, communication integration box, and several transmission control modules 4-30 can be deployed on a trailer or truck to form a mobile charging system. The charging boxes can be placed on the trailer or truck and connected to the charging interfaces 4-34 of the transmission control modules 4-30. At night or after work, the trailer or truck can be parked near an AC socket, and garden workers can use an extension cord to power the charger 4-10, thus using the charging system to charge the battery packs in all the charging boxes.

In another scenario, the charger 4-10 and communication integration box can be placed on one truck, while several transmission control modules 4-30 are placed on different trucks to form a mobile charging system. The transmission control modules 4-30 and the charging boxes connected to their charging interfaces 4-34 are placed on the same truck. At night or after work, garden workers can use an extension cord to power the charger 4-10, thus using the charging system to charge the battery packs in all the charging boxes.

In another scenario, the charger 4-10, communication integration box, and several transmission control modules 4-30 of the charging system can be deployed in an outdoor environment, such as a building. Garden workers can park the trucks or trailers with the charging boxes next to the charging system and connect the charging boxes to the charging interfaces 4-34 of the transmission control modules 4-30 at night or after work, using the charging system to charge the battery packs in all the charging boxes.

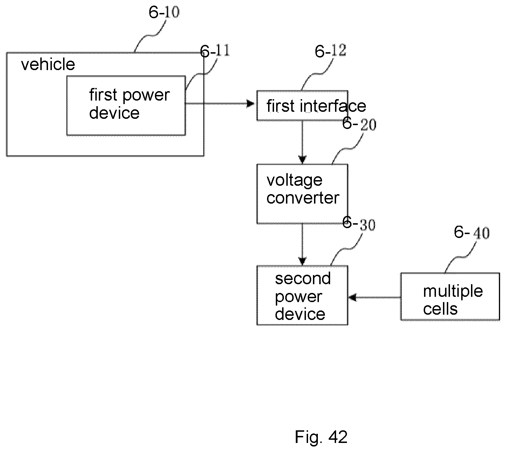

Fig. 42 illustrates a schematic diagram of one embodiment of the power delivery system of the present application. As shown in Fig. 42, the power delivery system includes an electric vehicle 6-10, a first power device 6-11, a first interface 6-12, a second power device 6-30, and a voltage conversion circuit 6-20. The electric vehicle 6-10 is equipped with a walking assembly. The first power device 6-11 is housed within the electric vehicle 6-10 and is configured to be electrically connected to the walking assembly to drive its operation. The first interface 6-12 is electrically connected to the first power device 6-11 to allow current to flow from the first power device 6-11 to the first interface 6-12. The second power device 6-30 is detachably connected to the first interface 6-12. A voltage conversion circuit 6-20 is arranged in the current path from the first interface 6-12 to the second power device 6-30, allowing the high-voltage, high-capacity battery pack of the first power device 6-11 to charge the low-voltage, low-capacity battery pack 6-40 housed in the second power device 6-30.

In one embodiment, the electric vehicle 6-10 may be a lawn mower, sightseeing car, golf cart, or electric car, whether for road or off-road use. The first power device 6-11 is an internal battery of the electric vehicle 6-10, which is a high-voltage, high-capacity battery pack. The capacity of the first power device 6-11 ranges from 6 kWh to 40 kWh, for example, 8 kWh, 18 kWh, 24 kWh, 30 kWh, or 36 kWh. The energy density of the first power device 6-11 is greater than 100 Wh/kg.

In one embodiment, the second power device 6-30 is a small charging box, equipped with one or more removable battery packs, which are low-voltage, low-capacity battery packs 6-40 for handheld electric tools. The capacity of the second power device 6-30 is less than 8 kWh, for example, 4.8 kWh. Handheld electric tools may include handheld electric chainsaws, blowers, vacuums, drills, or pruners. In one specific embodiment, the second power device 6-30 is a 6-6 small charging box that can charge 6-6 low-voltage, low-capacity battery packs 6-40.

The voltage of the first power device 6-11 differs from that of the second power device 6-30, with the voltage of the first power device 6-11 being higher than that of the second power device 6-30. The capacity of the first power device 6-11 also differs from that of the second power device 6-30. Specifically, the capacity of the first power device 6-11 is greater than that of the second power device 6-30, where the capacity of the power device is defined as the original capacity when the battery pack is fully charged.

As shown in Fig. 42, the first interface 6-12 is an interface set on the electric vehicle 6-10 for external power output, such as an ETO interface. The maximum current output by the first interface 6-12 is 100A, meaning that the current output by the first interface 6-12 is less than or equal to 100A, meeting the demand for high-power supply. It can be used to charge the low-voltage, low-capacity battery packs 6-40 in the second power device 6-30 or to power additional functional devices on the electric vehicle 6-10.

In one embodiment, the voltage conversion circuit 6-20 is arranged in the current path from the first power device 6-11 to the second power device 6-30, meaning that the voltage conversion circuit 6-20 is arranged between the first power device 6-11 and the second power device 6-30.

In other embodiments, the voltage conversion circuit 6-20 may also be arranged within the first power device 6-11 or the second power device 6-30.

In one embodiment, the voltage conversion circuit 6-20 includes a unidirectional DC/DC module (it can also be a bidirectional DC/DC module) for stepping down the high-voltage electricity output by the first interface 6-12 to low-voltage electricity to charge the removable battery pack in the second power device 6-30. Using a step-down method can effectively reduce losses in the voltage conversion process and improve conversion efficiency. The DC/DC module can be either an isolated or non-isolated DC/DC module.

To further reduce losses in the voltage conversion process and improve conversion efficiency, the voltage conversion circuit 6-20 can use a non-isolated DC/DC module. Compared to isolated DC/DC modules, non-isolated DC/DC modules have less energy loss and higher efficiency during voltage conversion. Additionally, non-isolated DC/DC modules are smaller in size and lower in cost compared to isolated DC/DC modules because they do not require a transformer for electrical isolation between input and output.

In one embodiment, the second power device 6-30 is configured on the electric vehicle 6-10. The second power device 6-30 is connected to the first interface 6-12 via cables or connection terminals to receive the current flowing from the first interface 6-12. Of course, the second power device 6-30 can also be set up independently, for example, placed on the ground or a platform next to the electric vehicle 6-10.

When configured on the electric vehicle 6-10, it can appear in a concealed or partially exposed form, such as being placed on a platform of the electric vehicle 6-10, hung on a component of the electric vehicle 6-10, or removably stored in an enclosed space within the electric vehicle 6-10. This allows at least one interface of the second power device 6-30 to directly or indirectly receive the support from at least one component of the electric vehicle 6-10.

In one specific embodiment, the electric vehicle 6-10 is a lawn mower, equipped with a walking assembly and a cutting assembly. The first power device 6-11 is configured to be electrically connected to the walking assembly and/or the cutting assembly to drive the operation of the walking assembly and/or the cutting assembly.

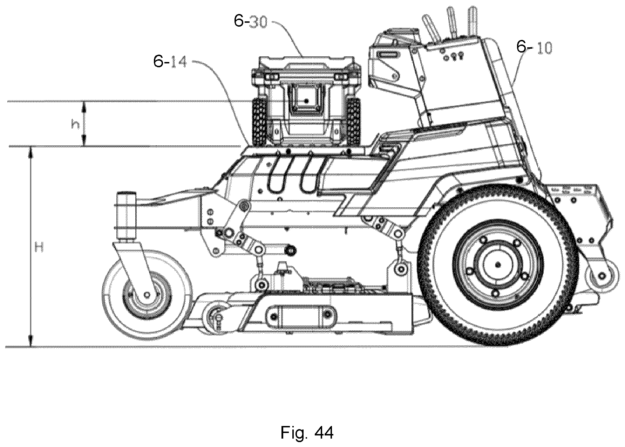

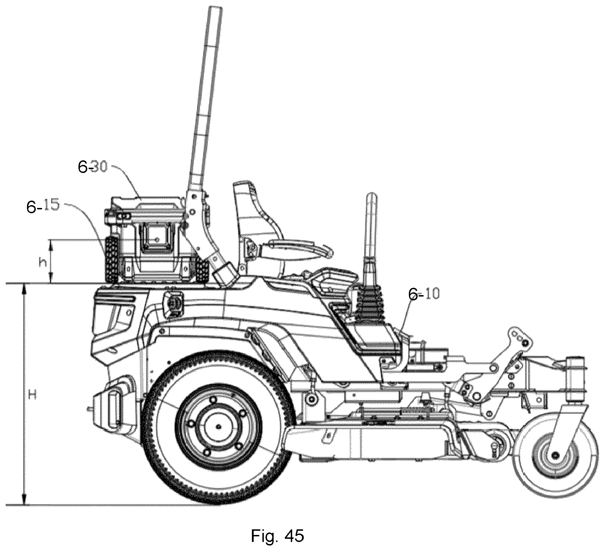

The lawn mower has a platform for carrying objects, including a front carrying platform and/or a rear carrying platform. As shown in Fig. 44, the second power device 6-30 can be placed on the front carrying platform 6-14. As shown in Fig. 45, the second power device 6-30 can also be placed on the rear carrying platform 6-15. The distance H (defined as the first distance) from the carrying platform to the ground is 0.6 m -1.3 m, preferably 0.7 m -1.0m, more preferably 0.8 m -0.9 m. When the second power device 6-30 is placed flat on the ground, the distance from its center of gravity to the ground (equivalent to the distance from its center of gravity to the carrying platform when placed on the carrying platform, defined as the second distance) is 2 cm-60 cm, preferably 10-20cm. When the second power device 6-30 is placed on the carrying platform of the lawn mower, the distance from its center of gravity to the ground is the sum of the first and second distances.

In one embodiment, for convenience, a plug-in port can be directly set on the carrying platform as the first interface 6-12, and a connection terminal can be set on the second power device 6-30. When the second power device 6-30 is placed on the carrying platform, the connection terminal on the second power device 6-30 can be plugged into the plug-in port to achieve electrical connection.

Optionally, the power delivery system can also include some functional devices set on the electric vehicle 6-10 to expand the functions of the electric vehicle 6-10. The functional devices are functional accessories that can be directly driven by the first interface 6-12 of the electric vehicle 6-10. The power supply interface of the functional device is detachably connected to the first interface 6-12. The current flows from the first interface 6-12 to the functional device to drive the operation of the functional device. The functional devices can be a blower assembly or a snow sweeper assembly installed on the front end of the lawn mower.

The power delivery system of the present application can use the high-voltage, high-capacity battery pack of the electric vehicle 6-10 to charge the low-voltage, low-capacity battery packs 6-40 housed in the second power device 6-30 when there is no AC power supply outdoors. No additional AC/DC charger is needed, and the energy of the internal battery of the electric vehicle 6-10 can be diversely allocated and used. This not only allows for power sharing but also provides emergency power, forming a separate multi-use system, increasing product expandability, expanding application scenarios, suitable for product ecosystem construction, and having strong market adaptability. Additionally, when the second power device 6-30 charges multiple low-voltage, low-capacity battery packs 6-40, it can automatically allocate charging energy and selectively connect charging based on the number of battery packs actually connected.

In practical application scenarios, when the low-voltage, low-capacity battery pack 6-40 in a handheld electric tool is out of power, it can be removed from the handheld electric tool and placed in the second power device 6-30. The second power device 6-30 can then be connected to the first interface 6-12 via cables or connection terminals to receive the current flowing from the first interface 6-12 to charge the battery pack in the second power device 6-30. Once fully charged, it can be installed in the handheld electric tool to power the handheld electric tool, achieving the purpose of power sharing.

Fig. 42 illustrates a schematic diagram of another embodiment of the power delivery system of the present application. As shown in Fig. 42, the power delivery system includes an electric vehicle 6-10, a first power device 6-11, a first interface 6-12, a second interface 6-13, and a second power device 6-30.

The first power device 6-11 is housed within the electric vehicle 6-10. The first interface 6-12, as a discharge interface, is electrically connected to the first power device 6-11. The second interface 6-13 is electrically connected to the first power device 6-11. The second interface 6-13 is independent of the first interface 6-12 and serves as a charging interface for the internal battery of the electric vehicle 6-10. The second interface 6-13 is electrically connected to the first power device 6-11.

The entire power delivery system has two states. In the first state, the second power device 6-30 is electrically connected to the first interface 6-12 to receive the current flowing from the first power device 6-11. In the second state, the second power device 6-30 is electrically connected to the second interface 6-13 to allow current to flow from the second power device 6-30 to the first power device 6-11. This enables not only charging the low-voltage, low-capacity battery packs 6-40 housed in the second power device 6-30 using the high-voltage, high-capacity battery pack of the electric vehicle 6-10 through the first interface 6-12, but also using the low-voltage, low-capacity battery packs 6-40 housed in the second power device 6-30 to supplement the high-voltage, high-capacity battery pack of the electric vehicle 6-10 through the second interface 6-13, achieving bidirectional power delivery.

In one embodiment, the electric vehicle 6-10 may be a lawn mower, sightseeing car, golf cart, or electric car, whether for road or off-road use. The first power device 6-11 is an internal battery of the electric vehicle 6-10, which is a high-voltage, high-capacity battery pack. The capacity of the first power device 6-11 ranges from 6-6 kWh to 6-40 kWh, for example, 6-8 kWh, 6-18 kWh, 6-24 kWh, 6-30 kWh, or 6-36 kWh. The energy density of the first power device 6-11 is greater than 6-100 Wh/kg.

In one embodiment, the second power device 6-30 is a small charging box, equipped with one or more removable battery packs, which are low-voltage, low-capacity battery packs 6-40 for handheld electric tools. The capacity of the second power device 6-30 is less than 6-8 kWh, for example, 6-4.6-8 kWh. Handheld electric tools may include handheld electric chainsaws, blowers, vacuums, drills, or pruners. In one specific embodiment, the second power device 6-30 is a 6-6 small charging box that can charge 6-6 low-voltage, low-capacity battery packs 6-40.

The voltage of the first power device 6-11 differs from that of the second power device 6-30, with the voltage of the first power device 6-11 being higher than that of the second power device 6-30. The capacity of the first power device 6-11 also differs from that of the second power device 6-30. Specifically, the capacity of the first power device 6-11 is greater than that of the second power device 6-30, where the capacity of the power device is defined as the original capacity when the battery pack is fully charged.

The first interface 6-12 is an interface set on the electric vehicle 6-10 for external power output, such as an ETO interface. The maximum current output by the first interface 6-12 is 6-100A, meaning that the current output by the first interface 6-12 is less than or equal to 6-100A, meeting the demand for high-power supply. It can be used to charge the low-voltage, low-capacity battery packs 6-40 in the second power device 6-30 or to power additional functional devices on the electric vehicle 6-10.

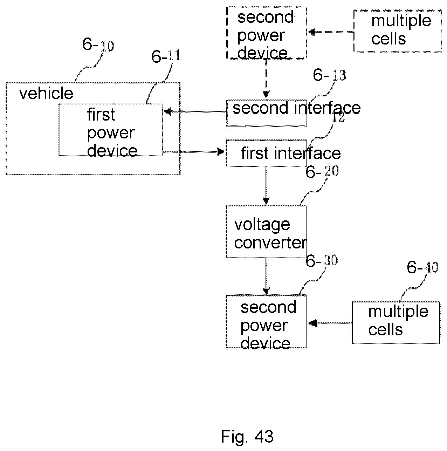

As shown in **Fig. 43**, in the first state, the current path from the first power device 6-11 to the second power device 6-30 includes a voltage conversion circuit 6-20, meaning that the voltage conversion circuit 6-20 is arranged between the first power device 6-11 and the second power device 6-30. In other embodiments, the voltage conversion circuit 6-20 may also be arranged within the first power device 6-11 or the second power device 6-30.

The voltage conversion circuit 6-20 uses a unidirectional DC/DC module (it can also be a bidirectional DC/DC module) to step down the high-voltage electricity output by the first interface 6-12 to low-voltage electricity to charge the removable battery pack in the second power device 6-30. Using a step-down method can effectively reduce losses in the voltage conversion process and improve conversion efficiency. The DC/DC module can be either an isolated or non-isolated DC/DC module.

To further reduce losses in the voltage conversion process and improve conversion efficiency, the voltage conversion circuit 6-20 can use a non-isolated DC/DC module. Compared to isolated DC/DC modules, non-isolated DC/DC modules have less energy loss and higher efficiency during voltage conversion. Additionally, non-isolated DC/DC modules are smaller in size and lower in cost compared to isolated DC/DC modules because they do not require a transformer for electrical isolation between input and output.

In one optional embodiment, when the voltage conversion circuit 6-20 uses a unidirectional DC/DC module, another voltage conversion circuit can be arranged in the current path from the second power device 6-30 to the first power device 6-30 in the second state. When the voltage conversion circuit 6-20 uses a bidirectional DC/DC module, the same bidirectional DC/DC module can be used in the current path from the second power device 6-30 to the first power device 6-30 in the second state to step up the low-voltage electricity output by the second interface 6-13 to high-voltage electricity to supplement the first power device 6-11.

The second power device 6-30 is configured on the electric vehicle 6-10. The second power device 6-30 is connected to the first interface 6-12 via cables or connection terminals to receive the current flowing from the first interface 6-12. Of course, the second power device 6-30 can also be set up independently, for example, placed on the ground or a platform next to the electric vehicle 6-10.

When configured on the electric vehicle 6-10, it can appear in a concealed or partially exposed form, such as being placed on a platform of the electric vehicle 6-10, hung on a component of the electric vehicle 6-10, or removably stored in an enclosed space within the electric vehicle 6-10. This allows at least one interface of the second power device 6-30 to directly or indirectly receive the support from at least one component of the electric vehicle 6-10.

In one specific embodiment, the electric vehicle 6-10 is a lawn mower, equipped with a walking assembly and a cutting assembly. The first power device 6-11 is configured to be electrically connected to the walking assembly and/or the cutting assembly to drive the operation of the walking assembly and/or the cutting assembly.

The lawn mower has a platform for carrying objects, including a front carrying platform and/or a rear carrying platform. As shown in Fig. 44, the second power device 6-30 can be placed on the front carrying platform 6-14. As shown in Fig. 45, the second power device 6-30 can also be placed on the rear carrying platform 6-15. The distance H (defined as the first distance) from the carrying platform to the ground is 0.6 m -1.3 m, preferably 0.7 m -1.0m, more preferably 0.8 m -0.9 m. When the second power device 6-30 is placed flat on the ground, the distance from its center of gravity to the ground (equivalent to the distance from its center of
a. gravity to the carrying platform when placed on the carrying platform, defined as the second distance) is 2 cm-60 cm, preferably 10-20cm. When the second power device 6-30 is placed on the carrying platform of the lawn mower, the distance from its center of gravity to the ground is the sum of the first and second distances.

For convenience, a plug-in port can be directly set on the carrying platform as the first interface 6-12, and a connection terminal can be set on the second power device 6-30. When the second power device 6-30 is placed on the carrying platform, the connection terminal on the second power device 6-30 can be plugged into the plug-in port to achieve electrical connection.

Optionally, the power delivery system can also include some functional devices set on the electric vehicle 6-10 to expand the functions of the electric vehicle 6-10. The functional devices are functional accessories that can be directly driven by the first interface 6-12 of the electric vehicle 6-10. The power supply interface of the functional device is detachably connected to the first interface 6-12. The current flows from the first interface 6-12 to the functional device to drive the operation of the functional device. The functional devices can be a blower assembly or a snow sweeper assembly installed on the front end of the lawn mower.

In practical applications, the power delivery system shown in Fig. 43 can be used when the low-voltage, low-capacity battery pack 6-40 in a handheld electric tool is out of power. The battery pack can be removed from the handheld electric tool and placed in the second power device 6-30. The second power device 6-30 can then be connected to the first interface 6-12 via cables or connection terminals to receive the current flowing from the first interface 6-12 to charge the battery pack in the second power device 6-30. Once fully charged, it can be installed in the handheld electric tool to power the handheld electric tool, providing very convenient power extension use.

When the internal battery of the electric vehicle 6-10 is severely out of power outdoors, rendering it unable to move or operate, the low-voltage, low-capacity battery pack 6-40 carried with a handheld electric tool can be placed in the second power device 6-30. The second power device 6-30 can then be connected to the second interface 6-13 via cables or connection terminals to use the low-voltage, low-capacity battery pack 6-40 to supplement the high-voltage, high-capacity battery pack of the electric vehicle 6-10, meeting the needs of temporary emergency situations.

In summary, the power delivery system of the present application, by setting up an interface for external discharge on the electric vehicle 6-10, utilizes the high-voltage, high-capacity battery pack to charge the low-voltage, low-capacity battery pack 6-40. This can charge and supplement low-voltage, low-capacity battery packs 6-40 for handheld electric tools and the like using the high-voltage, high-capacity battery pack of the electric vehicle 6-10 outdoors without an AC power supply, without needing an additional AC/DC charger. This allows for diversified allocation and use of the internal battery energy of the electric vehicle 6-10, forming power sharing and providing emergency power, creating a separate multi-use system, increasing product expandability, expanding application scenarios, suitable for product ecosystem construction, and having strong market adaptability.

The power delivery system of the present application, by setting up an interface for external discharge on the electric vehicle 6-10, utilizes the high-voltage, high-capacity battery pack to charge the low-voltage, low-capacity battery pack 6-40 without needing an additional charging management system. The small-capacity batteries being charged in the system do not affect each other.

The power delivery system of the present application can use non-isolated DC/DC step-down conversion to charge the low-voltage, low-capacity battery pack 6-40 using the high-voltage, high-capacity battery pack, effectively improving the efficiency of the voltage conversion process and reducing losses.

The power delivery system of the present application, by setting up an interface with charging functionality on the electric vehicle 6-10, allows for supplementing the high-voltage, high-capacity battery pack of the electric vehicle 6-10 with low-voltage, low-capacity battery packs 6-40 of handheld electric tools and the like when the high-voltage, high-capacity battery pack of the electric vehicle 6-10 runs out of power outdoors and cannot move or operate. After supplementing the power, the electric vehicle 6-10 can be driven to a charging area, such as home, for charging, enhancing user experience.

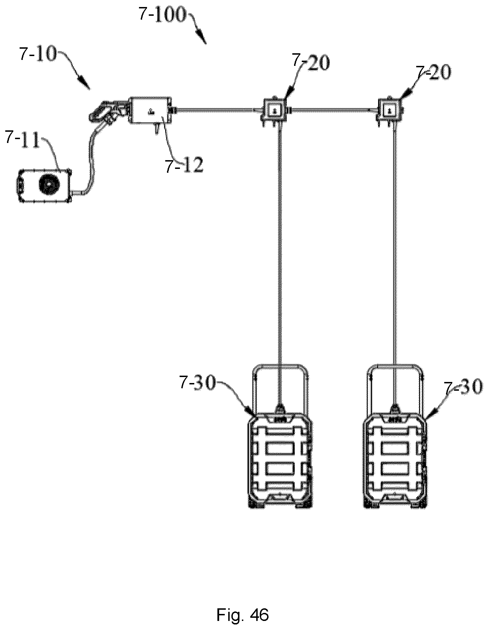

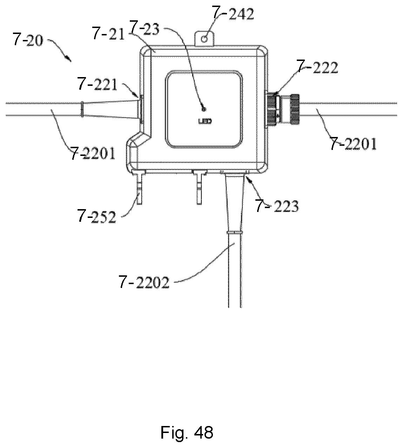

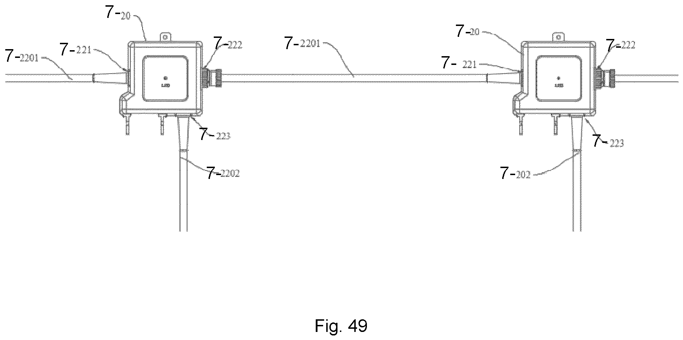

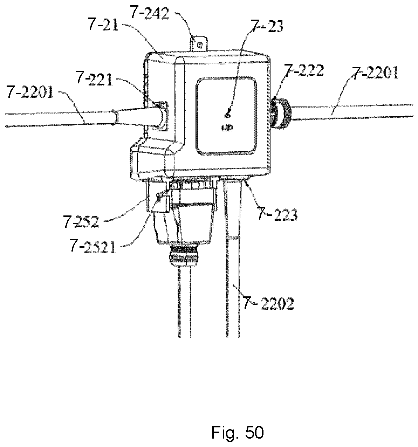

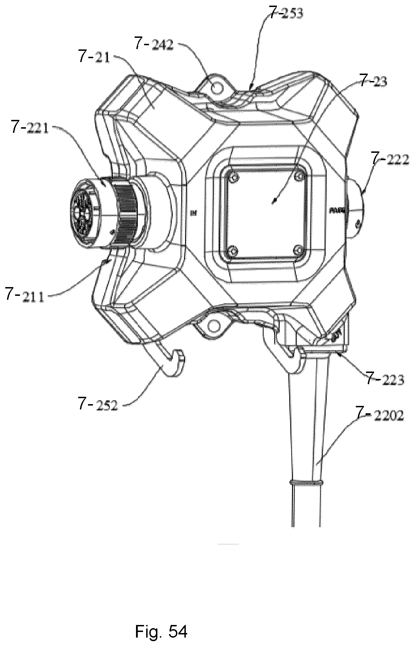

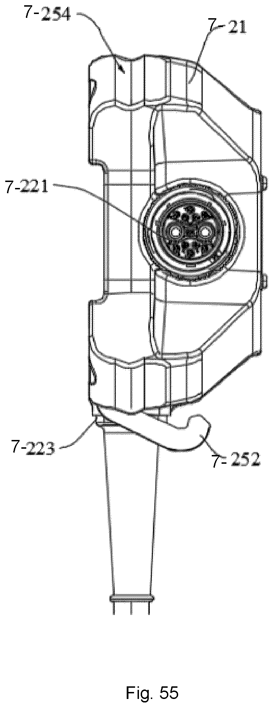

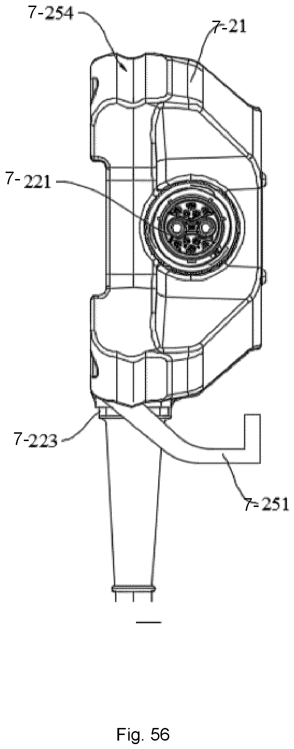

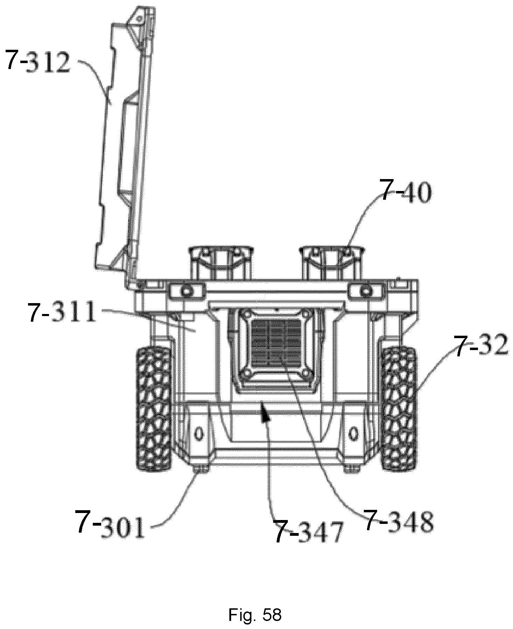

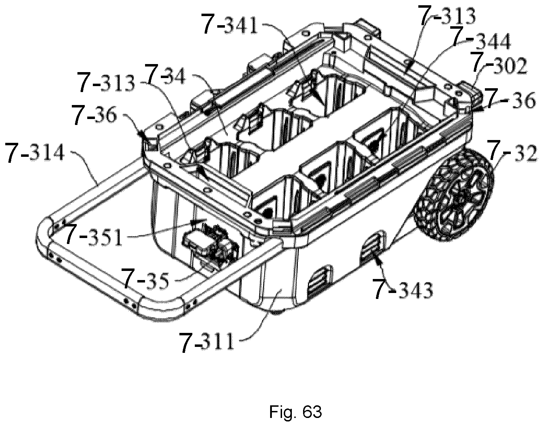

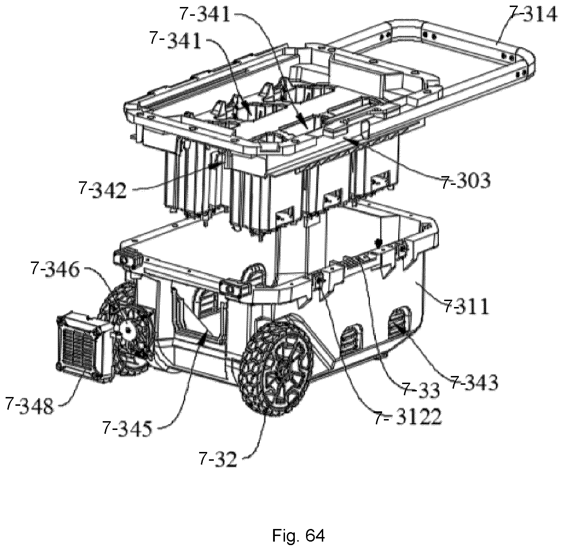

Please refer to Figs. 46 to 66. This invention proposes a charging system to improve the inability of existing charging system interfaces to expand and to address the issue of charging multiple energy storage devices. Specifically, the charging system 7-100 includes a charger system 7-10, charging components 7-20, and energy storage devices. The charging components 7-20 are electrically connected to the charger system 7-10, and the energy storage devices are electrically connected to the charging components 7-20. The charging system 7-100 can include multiple charging components 7-20, each connected to one energy storage device, with the multiple charging components 7-20 connected in series. The first charging component 7-20 is connected to the charger system 7-10 via the first interface 7-221, adjacent charging components 7-20 are connected via the first interface 7-221 and the second interface 7-222, and the charger system 7-10 sequentially controls these charging components 7-20 in the order they are connected to the charger system 7-10, thereby sequentially charging the energy storage devices connected to these charging components 7-20.

Refer to Fig. 46. In one embodiment, the charging component 7-20 includes a housing 7-21 and multiple interfaces, which include at least the first interface 7-221 and the second interface 7-222. At least one of the first interface 7-221 and the second interface 7-222 is a detachable interface, meaning at least one of them can be detachably connected to the housing 7-21 to facilitate the expansion of the number of charging components 7-20. In some other embodiments, both the first interface 7-221 and the second interface 7-222 are detachable. The detachable interface structure can refer to the pluggable structure at the second interface 7-222 in Fig. 46, while the non-detachable interface structure can refer to the cable guard structure at the first interface 7-221 in Fig. 46.

Refer to Fig. 46. In one embodiment, the projected area of at least one face of the housing 7-21 is less than 4×10^4 mm^2. For example, in this embodiment, the area of the vertical projection of the housing 7-21 is less than 4×10^4 mm^2. Preferably, the area of the projection surface is set to 1.8225×10^4 mm^2 or 2.25×10^4 mm^2, indicating that the charging component 7-20 is small in volume, easy to carry and install, thereby facilitating the expansion of the number of charging components 7-20 and achieving the charging of multiple energy storage devices. Please refer to Figs. 46, 48, 51, and 52. In one embodiment, adjacent charging components 7-20 are electrically connected via the first interface 7-221 and the second interface 7-222, meaning the first interface 7-221 of one charging component 7-20 is connected to the second interface of another charging component 7-20. Specifically, adjacent charging components 7-20 are directly connected via the first interface 7-221 and the second interface 7-222, or connected via the first harness 7-2201 between the first interface 7-221 and the second interface 7-222 of the two charging components 7-20 to achieve electrical connection between adjacent charging components 7-20.

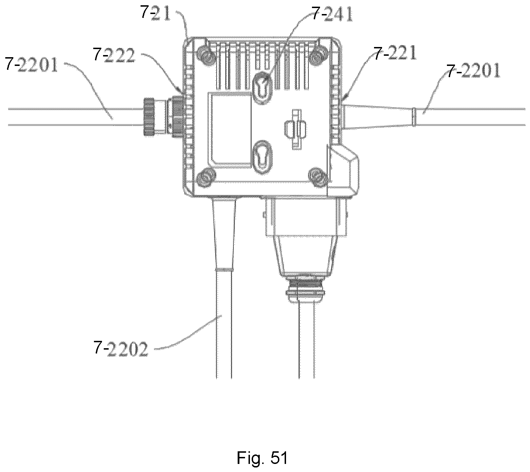

Refer to Fig. 51. In one embodiment, the interface is set on the side of the housing 7-21, and the side of the housing 7-21 where the interface is set has a first groove 7-211, and the interface is located in the first groove 7-211. Preferably, the first interface 7-221 and the second interface 7-222 are set on opposite sides of the housing 7-21 and located in the first groove 7-211, meaning the positions of the first interface 7-221 and the second interface 7-222 are recessed relative to the side of the housing 7-21 to avoid damage to the interface caused by impacts. Of course, in other embodiments, the first interface 7-221 and the second interface 7-222 can also be set on adjacent sides of the housing 7-21.

Refer to Figs. 45 and 51. In one embodiment, the charging component 7-20 also includes a display structure 7-23, which is set on the housing 7-21. The display structure 7-23 is used to display the current status of the charging component 7-20, for example, to display whether the charging component 7-20 is in a working state, non-working state, or abnormal state. The working state indicates that the energy storage device connected to the charging component 7-20 is being charged; the non-working state indicates that the energy storage device connected to the charging component 7-20 is not being charged; and the abnormal state indicates that there is a charging abnormality or other abnormal situation with the energy storage device connected to the charging component 7-20.

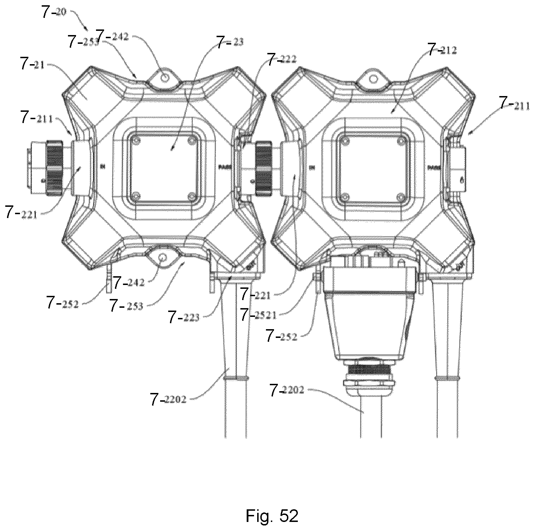

Refer to Figs. 52-53. In one embodiment, the display structure 7-23 is set as a display screen, which directly displays the current status. In another embodiment, the display structure 7-23 can also be set with at least one display light, which indicates the current status through the color, brightness, or blinking frequency of the display light, making it easy for users to observe the status of the charging component 7-20 directly. The display light can be a single light or a light strip.

Refer to Figs. 52-53. In one embodiment, the charging component 7-20 also includes a fixing structure set on the housing 7-21. This fixing structure is used to fix the charging component 7-20 on a fitting surface, which can be a wall or any other surface where the charging component 7-20 is placed when needed.

Refer to Figs. 52-53. In one embodiment, the fixing structure is set as a hanging structure 7-241 on the housing 7-21. Preferably, this hanging structure 7-241 is set on the side of the housing 7-21 opposite the display device. The hanging structure 7-241 and the fitting structure on the fitting surface are installed together. For example, the hanging structure 7-241 can be set as a hook, which is installed together with the fitting structure on the fitting surface through the hook. Of course, it can also be a positioning hole where screws or other similar structures on the fitting surface are inserted into the positioning hole to fix the charging component 7-20.

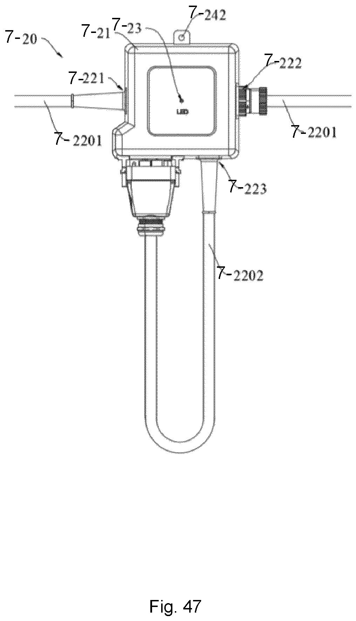

Refer to Figs. 47 and 51. In one embodiment, the fixing structure is set as a mounting hole 7-242 on the side of the housing 7-21. Preferably, the mounting hole 7-242 is set on the periphery, opposite sides, or diagonally of the housing 7-21. A fixing piece passes through the mounting hole 7-242 to fix it to the fitting surface. The fixing piece can be a bolt or other structure. It should be noted that the mounting hole 7-242 is set on the surface of the housing 7-21 close to the fitting surface to facilitate the fitting installation.

Refer to Figs. 46 to 56. In one embodiment, the interface also includes a third interface 7-223, which is electrically connected to the energy storage device. For example, the third interface 7-223 and the energy storage device can be connected via the second harness 7-2202. In this embodiment, the third interface 7-223 can be set as an integrated structure with the housing 7-21 or as a detachable interface. It should be noted that the end of the second harness 7-2202 connected to the energy storage device is a detachable interface, meaning it can be pulled out from the charging interface on the energy storage device.

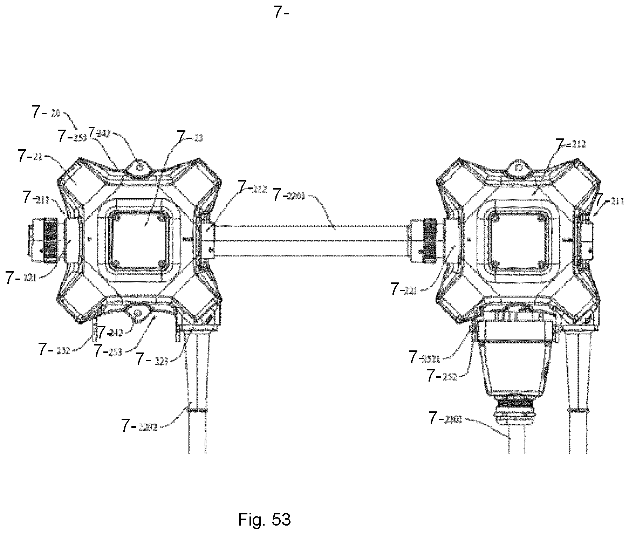

Refer to Figs. 53 to 55. In one embodiment, the charging component 7-20 also includes a harness storage structure formed on the housing 7-21 to store the second harness 7-2202. In some other embodiments, the harness storage structure can also be used to store the first harness 7-2201, making it easy to store and transport the charging component 7-20 when not in use, while avoiding the loss or mess of the harnesses.

Refer to Figs. 52-55. In one embodiment, the harness storage structure is set as a storage piece 7-251, which is set on one side of the housing 7-21 and located on the same side as the third interface 7-223. The second harness 7-2202 is wound on the storage piece 7-251 for storage. In this embodiment, the storage piece 7-251 can be set as an L-shaped piece, U-shaped piece, or other similar structure. One side of the L-shaped piece or U-shaped piece is fixedly connected to the housing 7-21, and the second harness 7-2202 is wound on the other side of the L-shaped piece or in the U-shaped groove of the U-shaped piece.

Refer to Figs. 52-53 and 52-54. In one embodiment, the harness storage structure is set as a hook 7-252, and the end of the second harness 7-2202 connected to the energy storage device is provided with a matching piece 7-2521 that matches the hook 7-252. The matching piece 7
-2521 is clamped into the hook 7-252 to achieve harness storage. For example, in this embodiment, the hook 7-252 is set as two opposite connecting pieces with slots on them. Correspondingly, the matching piece 7-2521 is set as a pin, which is clamped into the slot. It should be noted that the opening direction of the slot is set obliquely upward to avoid the pin from falling out of the slot.

Refer to Fig. 51. In one embodiment, the harness storage structure is set as a second groove 7-253, oppositely set on both sides of the housing 7-21. The second harness 7-2202 is wound on the housing 7-21 perpendicular to the first plane and located in the second groove 7-253 for storage. The first plane refers to the front face 7-212 of the housing 7-21. For example, when the first interface 7-221 and the second interface 7-222 are set on opposite sides of the housing 7-21, the second groove 7-253 can be the first groove 7-211 on the housing 7-21 or can be set on the other two sides of the housing 7-21 other than where the first interface 7-221 and the second interface 7-222 are set. By setting the second groove 7-253 on the side of the housing 7-21, storage can be achieved using the structural features of the housing 7-21 itself, avoiding the need to add components, thus reducing costs and simplifying the structure. Additionally, the second groove 7-253 on the housing 7-21 can reduce the volume and weight of the charging component 7-20 to some extent.

Refer to Figs. 52-54 and 52-55. In one embodiment, the harness storage structure is set as a third groove 7-254, arranged around the housing 7-21. For example, the third groove 7-254 is set on the side of the housing 7-21 and located at the four corners of the housing 7-21. For instance, the corners of the housing 7-21 are recessed inward to form the third groove 7-254. The second harness 7-2202 is wound on the housing 7-21 parallel to the first parallel direction and located in the third groove 7-254 for storage. By setting the second groove 7-253 on the side of the housing 7-21, storage is achieved using the structural features of the housing 7-21 itself, avoiding the need to add components, thus reducing costs and simplifying the structure. Additionally, the second groove 7-253 on the housing 7-21 can reduce the volume and weight of the charging component 7-20 to some extent.

Refer to Figs. 46 to 56. This invention proposes a charging system, wherein the charging system 7-100 includes a charger system 7-10, charging components 7-20, and an energy storage device 7-30. The charging components 7-20 are electrically connected to the charger system 7-10, and the energy storage device 7-30 is electrically connected to the charging components 7-20. The charging system 7-100 includes multiple charging components 7-20, each connected to one energy storage device, with the multiple charging components 7-20 connected in series. The first charging component 7-20 is connected to the charger system 7-10 via the first interface 7-221, adjacent charging components 7-20 are connected via the first interface 7-221 and the second interface 7-222, and the charger system 7-10 sequentially controls these charging components 7-20 in the order they are connected to the charger system 7-10, thereby sequentially charging the energy storage devices 7-30 connected to these charging components 7-20.

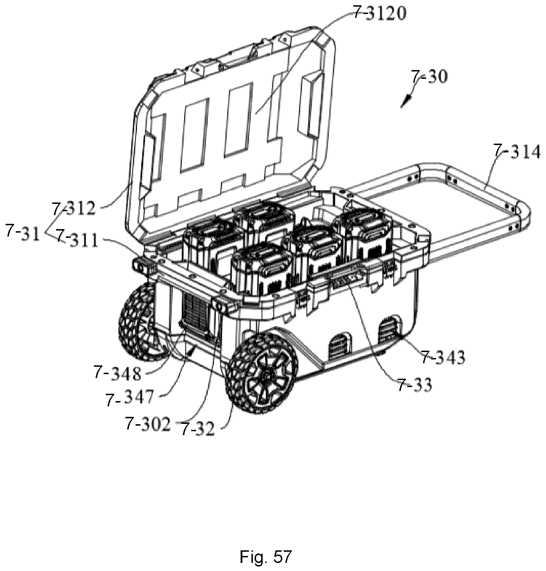

Refer to Figs. 57 to 66. This invention also proposes an energy storage device 7-30, which contains multiple battery packs 7-40 inside. The energy storage device 7-30 is electrically connected to the charging components 7-20. The energy storage device 7-30 can be a battery pack charging box or other devices.

Refer to Figs. 57, 58, and 62. In one embodiment, the energy storage device 7-30 includes a box body 7-31 and a moving wheel 7-32. The moving wheel 7-32 is installed on one side of the bottom of the box body 7-31, and along the first direction X, the distance L between the bottom surface of the box body 7-31 and the lowest point of the moving wheel 7-32 is set to 7-5mm to 7-20mm. For example, it can be set to 7-5mm, 7-10mm, and 7-15mm, thereby increasing the internal space of the box body 7-31 by reducing the distance between the bottom surface of the box body 7-31 and the lowest point of the moving wheel 7-32, improving space utilization.

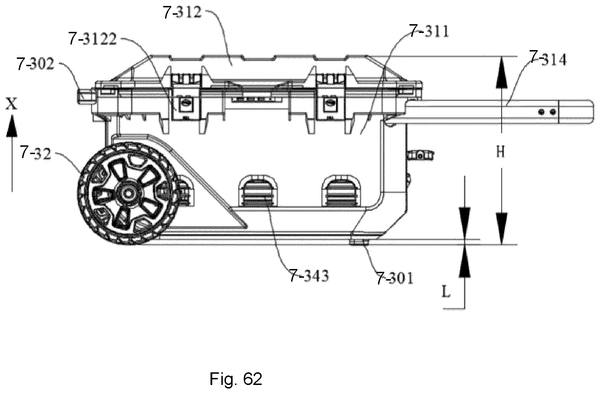

Refer to Fig. 62. In one embodiment, the bottom of the box body 7-31 is also provided with support legs 7-301. The support legs 7-301 are located on the side of the bottom surface of the box body 7-31 away from the moving wheel 7-32. The height of the support legs 7-301 is the same as the distance between the bottom surface of the box body 7-31 and the lowest point of the moving wheel 7-32. When the energy storage device 7-30 is placed flat, the support legs 7-301 and the moving wheel 7-32 provide support.

Refer to Fig. 62. In one embodiment, along the first direction X, the distance H between the lowest point of the moving wheel 7-32 and the top surface of the box body 7-31 is set to be less than 7-400mm. By reducing the distance between the bottom surface of the box body 7-31 and the lowest point of the moving wheel 7-32, the internal space of the box body 7-31 is increased, effectively reducing the height of the box body 7-31 and thereby reducing the space occupied by the energy storage device 7-30.

Refer to Fig. 62. In one embodiment, along the first direction X, the center of gravity height of the energy storage device 7-30 is set to be less than 7-200mm. Preferably, the center of gravity height is set to 7-100mm to 7-150mm, effectively lowering the overall center of gravity height compared to traditional structures, thereby improving the stability of the energy storage device 7-30.

Refer to Figs. 57 to 59. In one embodiment, the box body 7-31 includes a main body 7-311 and a box cover 7-312. One side of the box cover 7-312 is rotatably connected to the main body 7-311, and the other side is connected to the main body 7-311 via a buckle, forming a receiving cavity between the box cover 7-312 and the main body 7-311. The receiving cavity houses the battery packs 7-40. The box cover 7-312 also has reinforcing ribs 7-3120, which are used to improve the structural strength of the box cover 7-312.

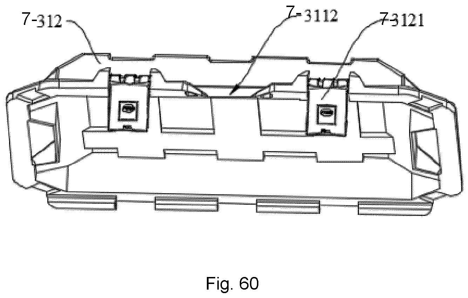

Refer to Figs. 60 to 64. In one embodiment, one side of the box cover 7-312 is provided with a first buckle 7-3121. The first buckle 7-3121 is rotatably connected to the box cover 7-312. The main body 7-311 is provided with a second buckle 7-3122 that matches the first buckle 7-3121. By engaging the first buckle 7-3121 and the second buckle 7-3122, the main body 7-311 and the box cover 7-312 are fixedly connected, forming the receiving cavity. In this embodiment, the box cover 7-312 is provided with two first buckles 7-3121, and correspondingly, the main body 7-311 is also provided with two second buckles 7-3122.

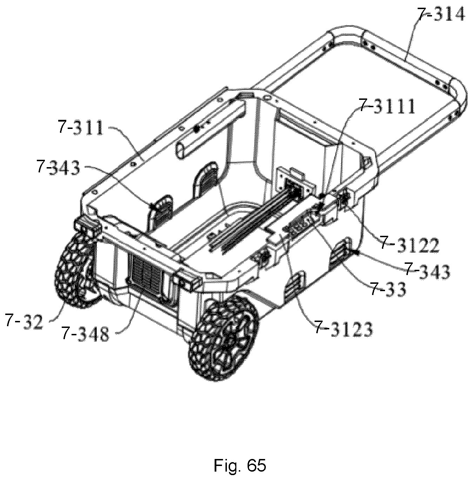

Refer to Fig. 65. In this embodiment, the top of the main body 7-311 is provided with a reinforcing piece 7-3123, at least partially located on one side of the buckle. For example, the reinforcing piece 7-3123 can be a metal piece or other structure. Specifically, the top surface of the main body 7-311 is the mating interface with the box cover 7-312. The reinforcing piece 7-3123 is set on the mating interface and located between the two second buckles 7-3122 to strengthen the structural strength of the main body 7-311 at the buckle.

Refer to Figs. 60 to 65. In one embodiment, the energy storage device 7-30 also includes a display device 7-33 set on the top of the main body 7-311 and located outside the receiving cavity. Specifically, the top of the main body 7-311 is provided with a fourth groove 7-3111, and the display device 7-33 is set in the fourth groove 7-3111. Correspondingly, the box cover 7-312 has a fifth groove 7-3112 at the corresponding position to avoid the box cover 7-312 from blocking
a. the display device 7-33. In this embodiment, the display device 7-33 is set on the top of the main body 7-311 and located between the two second buckles 7-3122. At this time, the reinforcing piece 7-3123 covers the fourth groove 7-3111 and is provided with a groove the same as the fifth groove 7-3112 to avoid blocking the display device 7-33. Compared to the traditional structure where the display device 7-33 is set inside the receiving cavity, this embodiment sets the display device 7-33 on the box body 7-31 and outside the receiving cavity for easy observation by the user.

Refer to Figs. 57, 64 to 66. In one embodiment, the box body 7-31 also includes a battery pack box 7-34 installed in the receiving cavity. The battery pack box 7-34 is provided with multiple charging chambers 7-341, each for installing a battery pack 7-40 to charge the battery pack 7-40. Multiple charging chambers 7-341 form a cooling air duct 7-342 between them. For example, the battery pack box 7-34 is provided with two rows of charging chambers 7-341, forming the cooling air duct 7-342 between the two rows of charging chambers 7-341.

Refer to Figs. 57, 64 to 66. In one embodiment, the box body 7-31 is provided with multiple air inlets 7-343. Specifically, the air inlets 7-343 are set on the main body 7-311, and each charging chamber 7-341 is at least connected to one air inlet 7-343 to achieve cooling of the battery pack 7-40 in the charging chamber 7-341.

Refer to Figs. 57, 64 to 66. In one embodiment, the charging chamber 7-341 is provided with a middle air outlet 7-344, which is connected to the cooling air duct 7-342. Air enters the charging chamber 7-341 from the air inlet 7-343, enters the interior of the battery pack 7-40 through the air inlet of the battery pack 7-40, exits from the air outlet of the battery pack 7-40, then passes through the middle air outlet 7-344 into the cooling air duct 7-342, and is discharged outside the box body 7-31, thereby achieving cooling of the battery pack 7-40.

Refer to Figs. 57, 64 to 66. In one embodiment, the air inlet 7-343 is set on the side of the charging chamber 7-341 near its bottom, and the middle air outlet 7-344 is set on the side wall of the charging chamber 7-341 near its top, allowing the air entering the charging chamber 7-341 from the air inlet 7-343 to fully flow through the battery pack 7-40, thereby improving its cooling effect. For example, the air inlet 7-343 and the middle air outlet 7-344 are located on opposite sides of the charging chamber 7-341.

Refer to Figs. 57 to 66. In one embodiment, one side of the box body 7-10 is also provided with an air outlet 7-345. Specifically, the air outlet 7-345 is set on one side of the main body 7-311, connected to the cooling air duct 7-342, and a cooling fan 7-346 is installed at the air outlet 7-345. When the cooling fan 7-346 is working, air enters the charging chamber 7-341 from the air inlet 7-343, flows through the interior of the battery pack 7-40, enters the cooling air duct 7-342 through the middle air outlet 7-344, and is discharged from the air outlet 7-345.

Refer to Figs. 57 to 66. In one embodiment, since the energy storage device 7-30 is placed upright, the air outlet 7-345 is located at the bottom. Therefore, the side of the main body 7-311 with the air outlet 7-345 is recessed inward, and the air outlet 7-345 is located in this recess. That is, the side of the main body 7-311 is provided with a sixth groove 7-347 at the air outlet 7-345, and the air outlet 7-345 and the cooling fan 7-346 are located in the sixth groove 7-347 to avoid damage to the cooling fan 7-346 when the energy storage device 7-30 is placed upright. Further, the outer side of the cooling fan 7-346 is also provided with an air outlet grille 7-348. The air outlet grille 7-348 is located in the sixth groove 7-347, connected to the main body 7-311, and covers the air outlet 7-345 to further protect its cooling structure. In some other embodiments, the air outlet grille 7-348 can be detachably connected to the main body 7-311 for easy replacement or maintenance of the cooling fan.

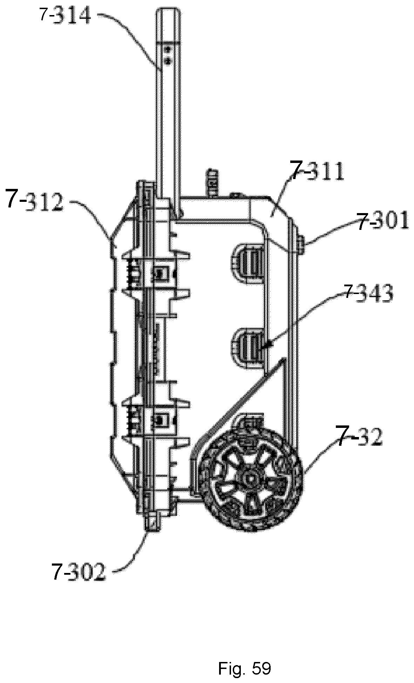

Refer to Figs. 57 to 66. In one embodiment, the opposite sides of the box body 7-31 are also provided with handles 7-313. For example, the handles 7-313 can be through slots opened correspondingly on the opposite sides of the main body 7-311 and the box cover 7-312, forming the handles 7-313 for easy carrying. Refer to Figs. 59 and 62 to 65. In one embodiment, when the energy storage device 7-30 is placed upright, the bottom surface of the main body 7-311 is provided with a second support leg 7-302, which, along with the moving wheel 7-32, provides support. A handle 7-314 is set on the opposite side of the second support leg 7-302. The handle 7-314 is telescopically connected to the main body 7-311. Specifically, a rear slideway 7-303 is formed between the opposite sides of the battery pack box 7-34 and the main body 7-311. The handle 7-314 is slidably installed in the slideway 7-303. With the cooperation of the handle 7-314, the limit protrusion on the handle 7-314, and the slideway 7-303, the handle 7-314 can switch between retracted and extended positions, making it easy to move the energy storage device 7-30 with the handle 7-314. When not needed, the handle 7-314 can be retracted into the main body 7-311, reducing space occupation.

Refer to Figs. 57 to 66. In one embodiment, the energy storage device 7-30 also includes a charging interface 7-35 set on the side of the box body 7-31. Specifically, it is set on the side of the main body 7-311 for electrical connection with the external charging components 7-20, thereby receiving current from the charging components 7-20. For example, the second harness 7-2022 connects the third interface 7-223 of the charging components 7-20 and the charging interface 7-35 to achieve electrical connection with the charging components 7-20.

Refer to Figs. 57 to 66. In one embodiment, the side of the box body 7-31 with the charging interface 7-35 is recessed inward, and the charging interface 7-35 is located in this recess. Specifically, the side of the main body 7-311 is provided with an eighth groove 7-351 at the charging interface 7-35, and the charging interface 7-35 is located in the eighth groove 7-351, recessed relative to the side of the main body 7-311 to avoid damage to the interface caused by impacts.

Refer to Figs. 57 to 66. In one embodiment, the box body 7-31 is also provided with a ninth groove 7-36. The ninth groove 7-36 matches the protrusion structure on the electrical equipment or power supply equipment to mount the energy storage device 7-30 with the electrical equipment or power supply equipment, supplying power to the electrical equipment or receiving power from the power supply equipment. The center of gravity of the energy storage device 7-30 is effectively lowered compared to traditional structures, making it more stable when installed on electrical equipment.

Refer to Figs. 57 to 66. In one embodiment, the ninth groove 7-36 is set around the main body 7-311. For example, at least two ninth grooves 7-36 are set around the main body 7-311, arranged diagonally along the box body 7-31, making it more stable when installed. Of course, two ninth grooves 7-36 can also be set on the same side of the box body 7-31, or 7-3, 7-4, or more ninth grooves 7-36 can be set around the main body 7-311. In some other embodiments, only one ninth groove 7-36 can be set, which requires the limiting structure on the electrical equipment or power supply equipment to limit the energy storage device 7-30 to achieve stable installation.

Refer to Figs. 46 to 66. In one embodiment, the charger system 7-10 includes a charger 7-11 and a communication control component 7-12. The communication control a. component 7-12 controls each charging component 7-20 so that only one energy storage device is connected to the charging system for charging at the same time. In one embodiment, the communication control component 7-12 is a communication integration box, independent of the charger, and designed separately to be compatible with existing chargers, allowing existing chargers to be directly adapted to this charging system without modification. Of course, the communication control component 7-12 can also be integrated directly into the charger as a single structure.

Refer to Figs. 46 to 66. In one embodiment, the communication control component 7-12 is connected between the charger 7-11 and the charging components 7-20, serving as an information exchange and transfer station. The communication control component 7-12 is connected to each charging component 7-20 via a CAN bus for communication, mainly to complete the communication management and information collection and reporting functions of each connected charging component 7-20. It also completes the communication interaction between the charging components 7-20 and the charger 7-11 through transfer.

Refer to Figs. 46 to 66. In one embodiment, the communication control component 7-12 includes a first control unit, an input interface, and an output interface. The first control unit is connected to both the input interface and the output interface. The input interface is externally connected to the charger 7-11, and the output interface is connected to the first charging component.

Refer to Figs. 46 to 66. In one embodiment, the charging components 7-20 mainly control the delivery of charging power from the charger 7-11 to each energy storage device. The charging components 7-20 also include a second control unit, which is connected to the first interface 7-221, second interface 7-222, and third interface 7-223. The first interface 7-221 is connected to the output interface of the communication control component 7-12 or the second interface 7-222 of the next level charging component 7-20. The first interface 7-221 is also connected to the third interface 7-223.

This invention also proposes a charging system, which includes a charger system 7-10, an energy storage device 7-30, and charging components. The charger system 7-10 is used to connect to external power supply equipment. The energy storage device is configured to house multiple removable battery packs. The charging components include a first charging component and a second charging component. The input end of the first charging component is configured to be directly connected to the charger system 7-10 to receive current from the charger system 7-10. The output end of the first charging component includes a first output end and a second output end. The first output end is connected to the energy storage device 7-30, and the input end of the second charging component is configured to be connected to the second output end of the first charging component. The first output end of the second charging component is connected to the energy storage device. It should be noted that the input ends, first output ends, and second output ends of the first and second charging components are the first interface 7-221, third interface 7-223, and second interface 7-222 described in the above embodiments, respectively.

Refer to Figs. 46 to 66. In one embodiment, the charging system, in the first state, delivers current from the charger system 7-10 through the first output end of the first charging component to the energy storage device 7-30. In the second state, current from the charger system flows through the second output end of the first charging component and the first output end of the second charging component to the energy storage device. It should be noted that the charging components in the charging system can be set in larger numbers, and adjacent charging components are connected in the same way as the first and second charging components in the above embodiments to connect multiple charging components in series. When charging the energy storage device 7-30 connected to a particular charging component, current from the charger system flows through the second output ends of all preceding charging components and the first output end of that particular charging component to supply power to the energy storage device connected to that particular charging component.

The charging components of the charging system in this application adopt an expandable design, allowing the number of charging components to be expanded based on the number of energy storage devices. This makes the charging interface unrestricted, thereby providing a corresponding charging interface for each energy storage device, which has great application prospects.

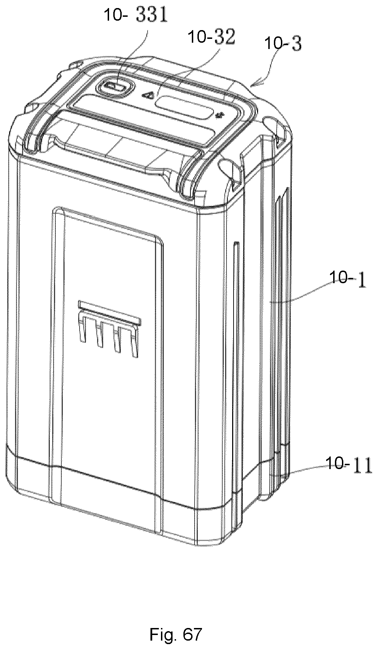

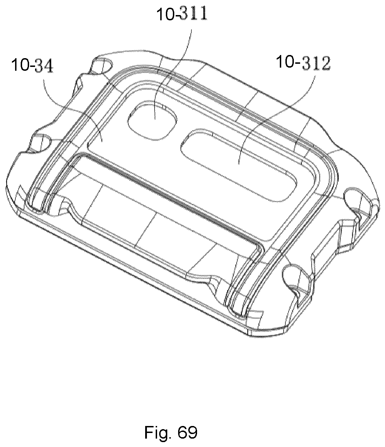

Refer to Figs. 67, 68, 69, and 70. The utility model proposes a battery pack structure aimed at improving the existing problem of unreliable sealing at the end cap position. It should be understood that to allow users to monitor the operation status of the battery pack in real-time, the battery pack shell generally has an information display unit, such as a light board or display screen, which requires the shell to have a transparent area. Due to material differences, the transparent area cannot be molded together with the shell. Therefore, the two must be separately processed and then assembled into a single unit, resulting in assembly gaps. To adapt the battery pack for outdoor use, these gaps need to be dustproof and waterproof. Existing methods involve using labels or assembling sealing gaskets in the gaps. However, ordinary assembly methods cannot completely eliminate gaps, and the seal between the transparent area and the shell becomes unreliable over time. To solve the above problem, the sealing layer 10-33 in this utility model is combined with the shell 10-1 and the transparent area through insert molding, completely eliminating assembly gaps.

The following explanation of the technical solution of this utility model will be made in conjunction with garden tools, which can include lawnmowers, pruners, vacuum cleaners, snow blowers, push mowers, washers, lawn machines, or blowers. In practical applications, the battery pack can be electrically connected to the working unit of the garden tool or installed on the garden tool.

In one embodiment, the waterproof and dustproof battery provided above includes a shell 10-1, a battery component 10-5, a cover plate 10-32, and a sealing layer 10-33. The shell 10-1 forms a storage cavity; the battery component 10-5 is set inside the storage cavity; the cover plate 10-32 is set on the outside of the shell, and a sealed cavity is formed between the cover plate 10-32 and the shell; the sealing layer 10-33 is formed in the sealed cavity through insert molding.

In a specific embodiment, the shell can include a main body and an end cap 10-3. The information display unit of the battery pack can be set on the end cap 10-3. Correspondingly, the cover plate 10-32 and the sealing layer 10-33 should also be set on the end cap 10-3. It should be understood that the installation position of the information display unit is not unique. For example, in other embodiments, the information display unit can also be set on the main body, and correspondingly, the cover plate 10-32 and the sealing layer 10-33 should also be set on the main body. The following detailed explanation of the technical solution of this utility model is made based on the scenario where the information display unit is set on the end cap 10-3.

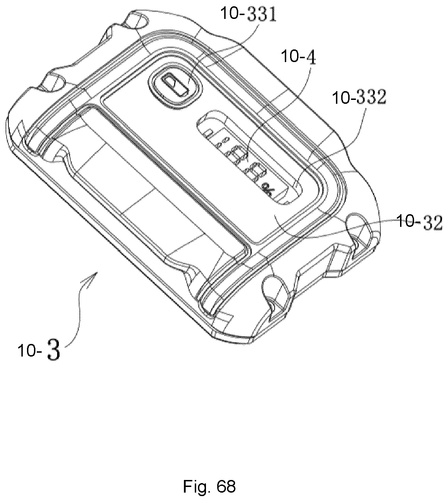

In one embodiment, as shown in Fig. 68, the end cap 10-3 can be the upper end cap of the battery pack, pre-formed by mold injection. The end cap 10-3 is mostly made of ABS and PC materials, enhancing its chemical stability and high-temperature resistance while ensuring strength.

In one embodiment, the cover plate 10-32 can be made of PC material, making it transparent or semi-transparent, pre-formed by injection molding, facilitating the display of content on the light board 10-4.

The aforementioned end cap 10-3 and cover plate 10-32 are pre-inserted into the mold, forming a sealed cavity between the cover plate 10-32 and the end cap. Plastic is injected into the sealed cavity through the injection head of the injection mold, finally forming the sealing layer 10-33. The sealing layer 10-33 forms a reliable integral unit with the end cap 10-3 and the cover plate 10-32 through insert molding, ensuring the overall sealing reliability of the upper end cap. In one embodiment of the utility model, the sealing layer 10-33 material can be made of PET. Preferably, corresponding hollow parts are set on the target areas of the sealing layer 10-33 on the end cap and the cover plate 10-32.

In one embodiment of the utility model, the target area can be a pressing part 10-331 for operating the battery pack. The cover plate 10-32 is provided with a first hollow part 10-321 corresponding to the pressing part 10-331. The end cap 10-3 is provided with a second hollow part 10-311 corresponding to the pressing part 10-331, with the pressing part 10-331 extending into the first hollow part 10-321.

When the pressing part 10-331 is arranged on the sealing layer 10-33, it should correspond to the position of the operation button on the light board inside the shell 10-1. When the pressing part 10-331 extends into the first hollow part 10-321, it allows the operator's fingers to extend into the first hollow part 10-321 to press the operation button.

In one embodiment of the utility model, various operation instruction patterns can be pre-set on the pressing part 10-331, such as a power start instruction pattern, etc.

In one embodiment of the utility model, the outer contour of the pressing part 10-331 can be any of circular, rectangular, or irregular shapes.

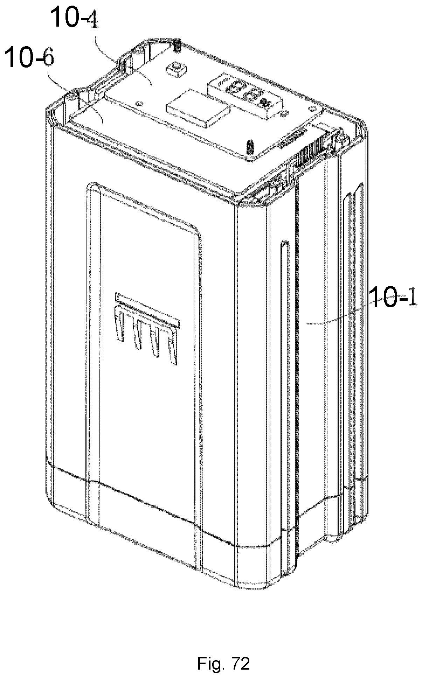

As shown in Fig. 72, the light board 10-4 can be a Printed Circuit Board (PCB), electrically connected to the electrical components inside the shell 10-1. The connection method between the light board 10-4 and the end cap 10-3 is not limited. The light board 10-4 can be fixed inside the end cap 10-3 by snapping, but not limited to this. The light board 10-4 can also be fixed inside the end cap 10-3 by bolt connection or by adhesive connection.

In one embodiment of the utility model, the inside of the end cap 10-3 is provided with a button corresponding to the target area. The button can be set on the light board 10-4 and can be a button for operating the power switch or a button for operating the light board 10-4 switch.

To make the upper end cap of the battery pack more regular, in a preferred embodiment of the utility model, the outer side of the end cap 10-3 is provided with a receiving slot 10-34, the sealing layer 10-33 is housed in the receiving slot 10-34, and the cover plate 10-32 covers the slot opening of the receiving slot 10-34.

Further, to make the upper end cap of the battery pack look more regular, in a preferred embodiment of the utility model, the outer side plate of the cover plate 10-32 is flush with the outer side of the end cap 10-3. The outer side of the cover plate 10-32 and the outer side of the end cap 10-3 are on the same plane, making the appearance of the upper end cap part of the battery pack smoother and easier to clean.

As one embodiment of the utility model, the end cap 10-3 can also be provided with at least one protrusion, which can be shaped like a handle, allowing the user to grip the battery pack through the protrusion. When there is one protrusion, it can be set at either end of the end cap 10-3. When there are multiple protrusions, they can be symmetrically set at both ends of the end cap 10-3, making it easy for the user to grip the battery pack and prevent slipping.

In one embodiment of the utility model, the sealing layer 10-33 and the end cap are respectively provided with corresponding vacant parts, and an information display unit corresponding to the position of the vacant parts is set on the inside of the end cap. In one embodiment of the utility model, the information display unit corresponding to the vacant parts of the sealing layer 10-33 and the end cap can display basic information about the battery inside the battery pack, such as power, voltage, current, etc., or display textual information about the battery pack, such as brand name, brand logo, etc.

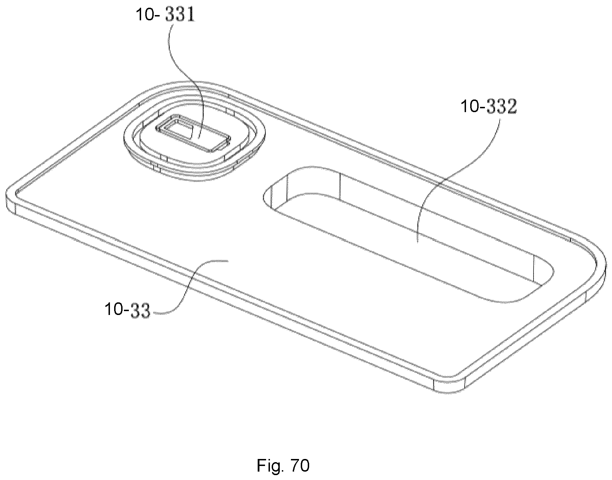

As shown in Figs. 68 and 70, in one embodiment of the utility model, the information display unit can include a light board 10-4. Specifically, the inside and/or outside of the cover plate 10-32 is provided with a light-shielding layer, which has at least two light-transmitting areas. The light board 10-4 has light sources corresponding to the light-transmitting areas, and a light-shielding part is set between the light board 10-4 and the cover plate 10-32 to isolate the light paths of the light sources to the light-transmitting areas from each other, preventing light leakage and making the display effect clearer. In a specific embodiment, the light board 10-4 can include LED lamp beads or a character display panel. The light-transmitting areas can be set as icons for corresponding functions, such as Bluetooth icons, warning icons, etc., or as blank areas controlled by the character display panel to display specific patterns.

The digital information on the light board 10-4 is exposed in the display vacant area 10-332 on the sealing layer 10-33 and can be easily observed through the end cap 10-3.

The shape of the vacant area 10-332 can be defined according to the display area contour of the light board 10-4, and can be circular, rectangular, or kidney-shaped.

The vacant part is a notch 10-312 correspondingly set on the end cap.

The shape of the notch 10-312 can be defined according to the display area contour of the light board 10-4,
a. and can be circular, rectangular, or kidney-shaped.

In specific implementation, the display vacant area 10-332 presents a strip-shaped hole structure that matches the shape of the notch 10-312 on the end cap. The strip-shaped hole structure makes the overall appearance more coordinated and beautiful.

In one embodiment of the utility model, the end cap 10-3 and the shell 10-10 can be connected by adhesive, snapping, or bolt connection.

To improve sealing, organic silicone sealant can be applied at the connection between the end cap 10-3 and the shell 10-1 to fill the gap between them, enhancing the sealing of the battery pack.

When the overall structure formed by the multiple battery components 10-5 in conjunction with the mainboard is placed in the receiving cavity of the shell 10-20, an isolation plate 10-6 is placed on the topmost upper surface of the stacked battery components 10-5. The isolation plate 10-6 is positioned relatively at the upper end of the shell 10-1 and is used to isolate the light board 10-4 from the battery components 10-5 in the receiving cavity. After placement, filling material is injected into the receiving cavity through potting to fix the mainboard and the multiple battery components 10-5. The isolation plate 10-6 can be fixed to the upper end of the shell 10-1 by adhesive, bolt connection, or snapping. The isolation plate 10-6 can be located between the end cap 10-3 and the uppermost battery component 10-5.

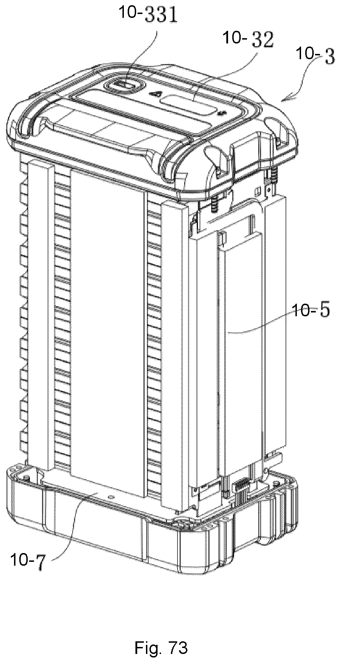

As shown in Fig. 73, the lower end of the battery component 10-5 is also connected to the power board 10-7, which can be provided with multiple connection terminals for completing functions such as charging, discharging, and data transmission. The power board 10-7 can be fixed to the lower end of the shell 10-1 by adhesive, bolt connection, or snapping. The power board 10-7 can be located between the lower end cap 10-11 of the shell 10-1 and the shell 10-1.

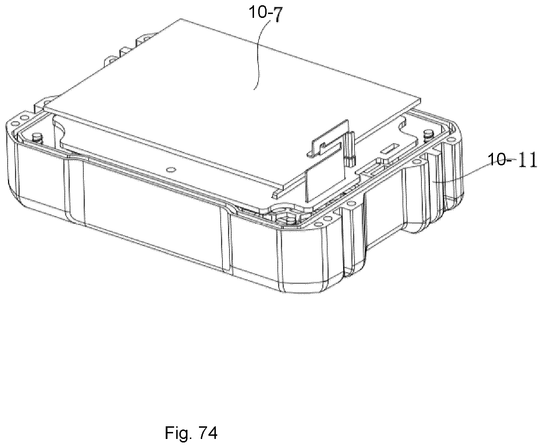

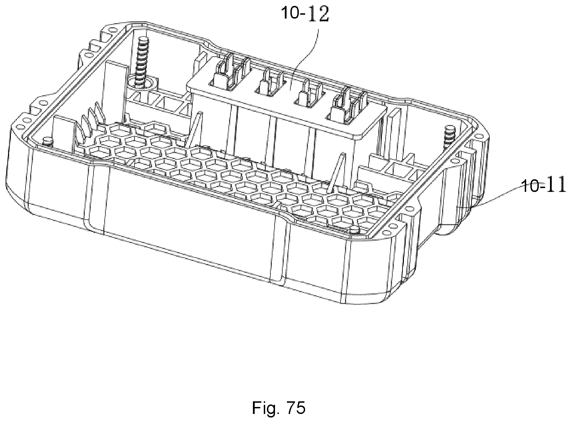

As shown in Figs. 74 and 75, to prevent external water from seeping into the lower end cap 10-11 and corroding the power board 10-7, leading to the burning of the power board's circuits, a waterproof pad 10-12 can be set inside the lower end cap 10-11. The waterproof pad 10-12 is also provided with multiple openings to allow connection terminals to pass through. The other sealing areas of the waterproof pad 10-12 are attached to the junction of the power board 10-7 and the opening channel to prevent external water from entering the lower end cap 10-11 through the opening channel. When there is water accumulation in the opening channel, multiple drainage holes can be provided on the outside of each opening channel of the lower end cap 10-11 to discharge the accumulated water.

In summary, the utility model integrates the sealing layer 10-33, end cap 10-3, and cover plate 10-32 into one, greatly enhancing the waterproof performance of the battery pack. When the battery pack is used in garden machinery, it avoids or reduces the problem of handheld equipment being unusable due to waterproof issues with the battery pack, improving the stability of the entire garden machinery's operation.

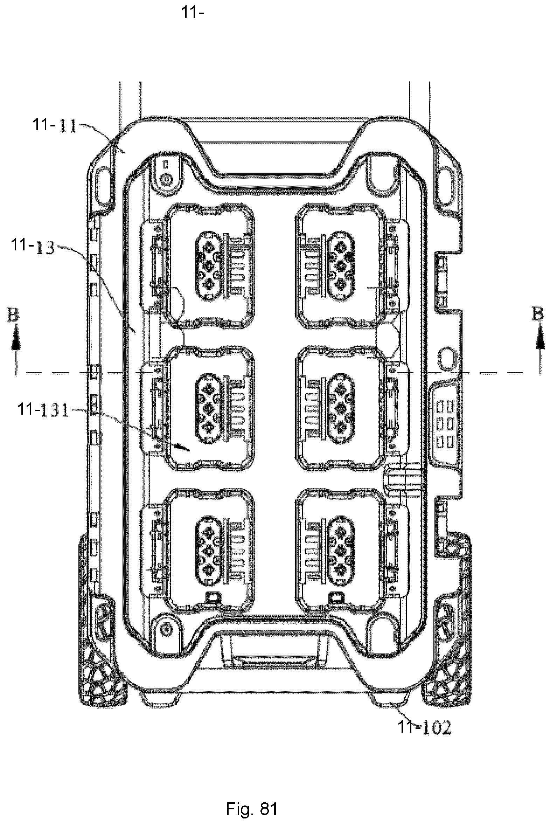

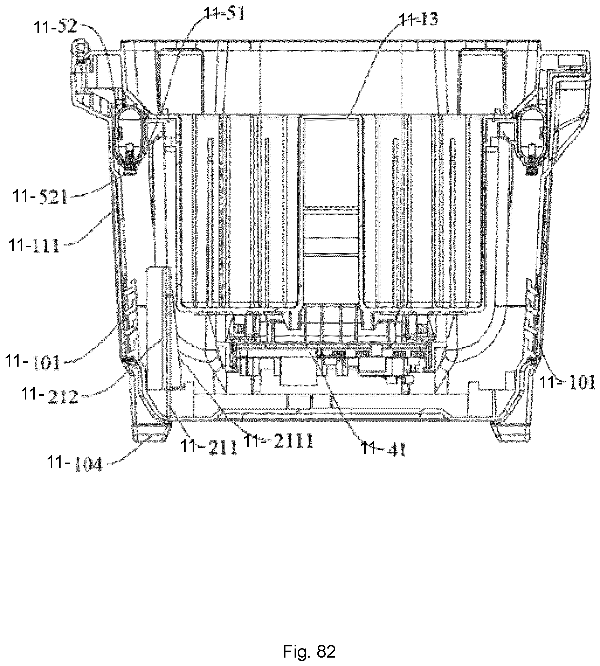

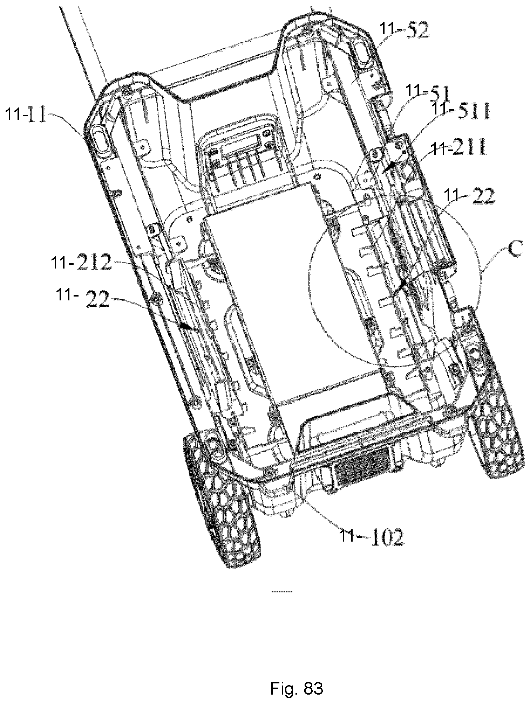

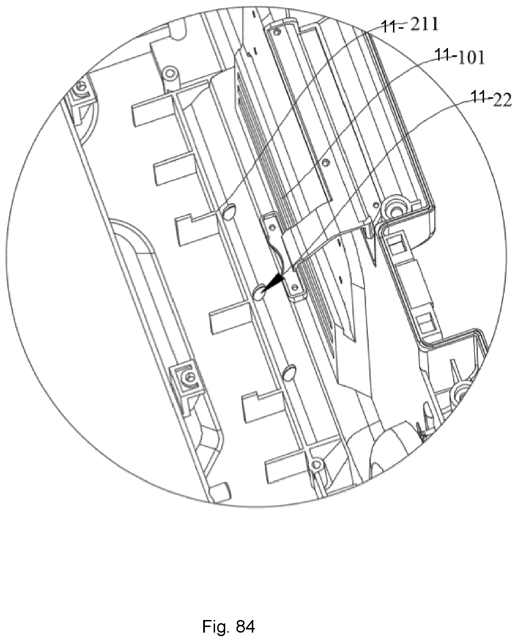

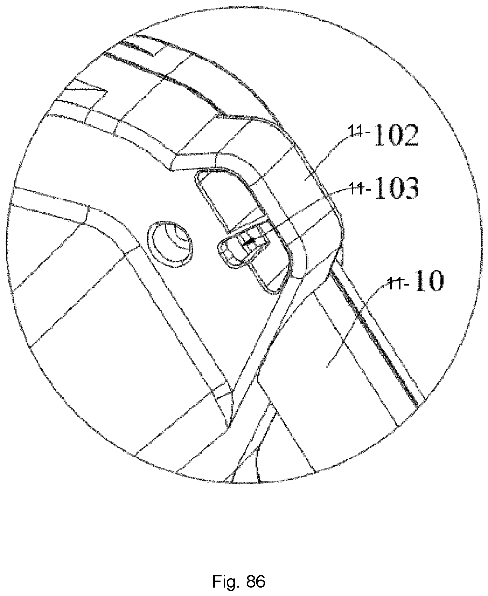

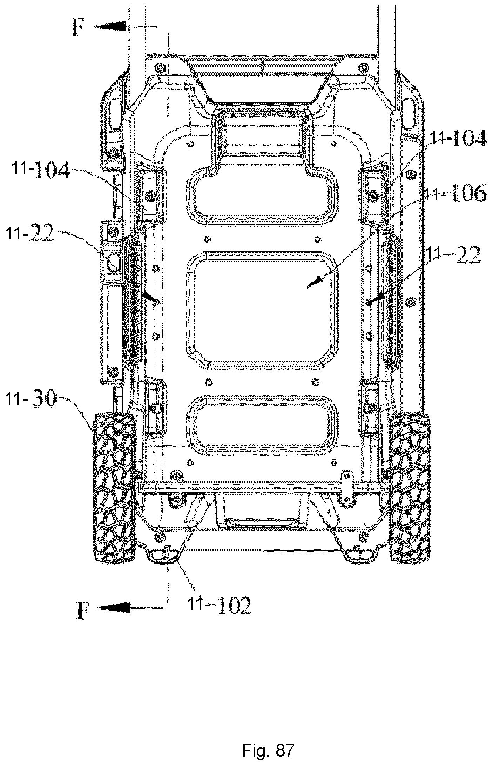

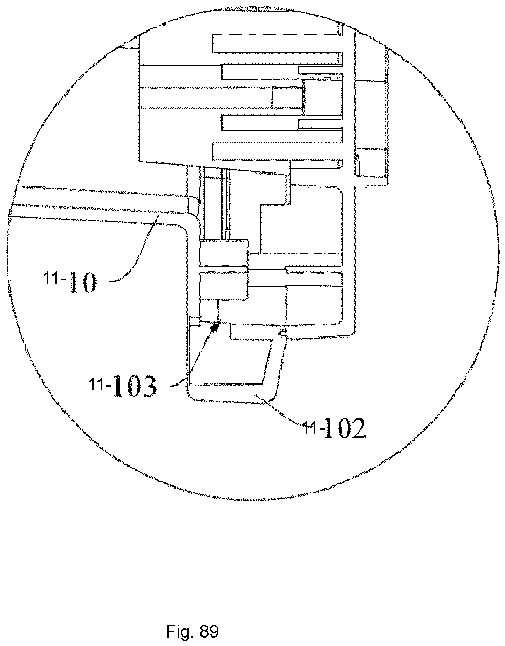

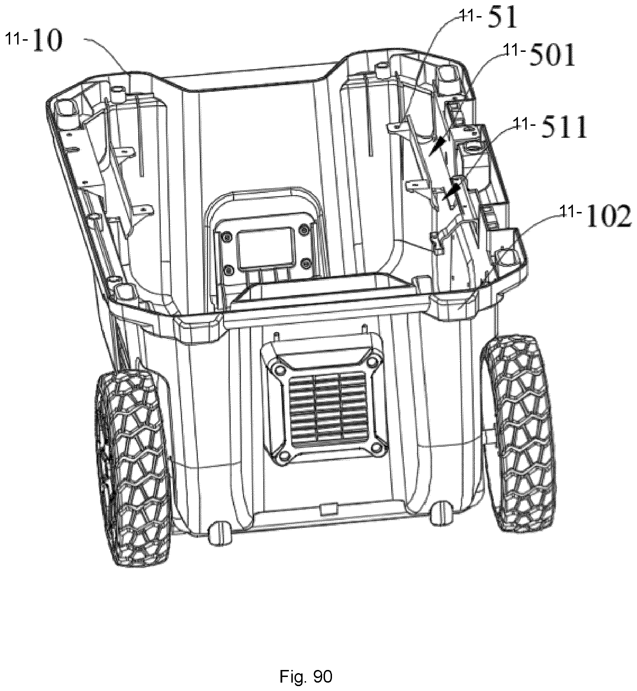

Refer to Figs. 75 to 90. This application proposes an energy storage device to address the issue where existing energy storage devices have cooling vents that allow rainwater or other liquids to enter, significantly impacting the lifespan and safety of the storage device. Specifically, the energy storage device 11-100 includes a box 11-10 and a drainage structure 11-20. At least one side of the box 11-10 has a vent 11-101, and correspondingly, the interior of the box 11-10 is equipped with at least one set of drainage structures 11-20. These drainage structures 11-20 are arranged relative to the vent 11-101 to block and discharge rainwater or other liquids entering through the vent 11-101, preventing them from entering the interior of the energy storage device 11-100.

Refer to Figs. 75 to 90. In this embodiment, the drainage structure 11-20 includes a water-blocking element 11-21 and a first drainage hole 11-22. The water-blocking element 11-21 is set inside the box 11-10, opposite the vent 11-101. There is a certain gap between the water-blocking element 11-21 and the sidewall of the box 11-10 where the vent 11-101 is located. The first drainage hole 11-22 is set on the bottom of the box 11-10 and is located within the gap between the water-blocking element 11-21 and the sidewall of the box 11-10. The water-blocking element 11-21 blocks rainwater or other liquids entering through the vent 11-101, directing them into the gap between the water-blocking element 11-21 and the box 11-10, and discharges them through the first drainage hole 11-22 to prevent the entry of rainwater or other liquids into the interior of the energy storage device 11-100. The shape of the first drainage hole 11-22 can be circular, oval, or other polygonal types of water-passing gaps.

In other embodiments, the interface where the water-passing gap is located can be set as a detachable structure (not shown in the figures). This interface can be understood as at least including the local box 11-10 with the water-passing gap structure. The detachable structure allows for cleaning the water-passing gaps clogged with sewage or other debris entering from the vent 11-101 without disassembling the interior of the box 11-10. This significantly saves time for unclogging the water-passing gaps and avoids issues where rainwater or other liquids cannot be discharged timely due to clogging.

Of course, in other embodiments, the detachable structure can be arranged around the water-passing gap structure without including the water-passing gap structure. This means that after removing the detachable structure, it is easy to clean the clogging situation of the water-passing gaps.

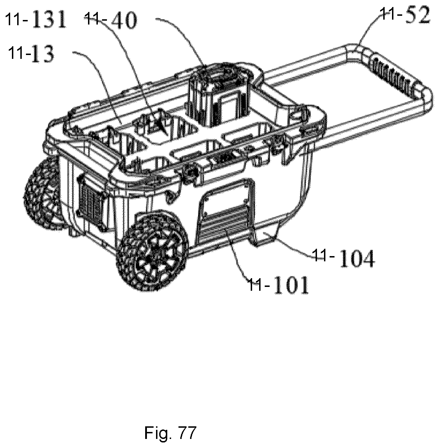

Refer to Figs. 75 and 77. In this embodiment, the box 11-10 includes a body 11-11 and a box cover 11-12. One side of the box cover 11-12 is rotatably connected to one side of the body 11-11. The vent 11-101 is set on one side of the body 11-11, which houses a battery pack case 11-13. The battery pack case 11-13 includes a charging chamber 11-131 to accommodate the battery pack 11-40 for charging. In this embodiment, the side of the body 11-11 with the vent 11-101 is defined as the first side wall 11-111. The water-blocking element 11-21 is set inside the body 11-11, specifically between the first side wall 11-111 and the battery pack case 11-13, to block rainwater or other liquids entering through the vent 11-101.

It should be noted that in this embodiment, to ensure the water-blocking element 11-21 can block the maximum amount of rainwater or other liquids entering through the vent 11-101, the width of the water-blocking element 11-21 is greater than the width of the vent 11-101, and the height of the water-blocking element 11-21 is greater than the height of the vent 11-101. This ensures that the water-blocking element 11-21 can completely cover the vent 11-101, thus maximizing the blockage of rainwater or other liquids to keep the interior of the energy storage box 11-100 dry.

It should be noted that in other embodiments, the water-blocking element 11-21 can block most of the rainwater or other liquids entering through the vent 11-101. Thus, the water-blocking element 11-21 only needs to block the main inflow parts in terms of width and height.

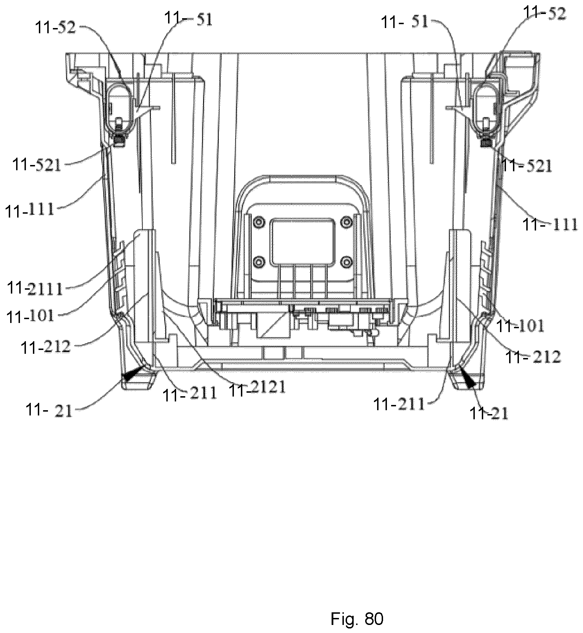

Refer to Figs. 80 to 84. In this embodiment, the water-blocking element 11-21 includes a water-blocking strip 11-211 and a water-blocking plate 11-212. The water-blocking strip 11-211 extends upward from the bottom of the box 11-10 and is arranged around the first drainage hole 11-22. It can be understood that the water-blocking strip 11-211 extends upward from the bottom of the body 11-11, forming an integral structure with the body 11-11, and is arranged around the first drainage hole 11-22 to form a semi-enclosed chamber with the first side wall 11-111. This semi-enclosed chamber is isolated from the chamber inside the box 11-10. The water-blocking plate 11-212 is installed on the water-blocking strip 11-211. It blocks rainwater or other liquids entering through the vent 11-101, directing them into the space formed by the water-blocking strip 11-211 and the first side wall, and discharges them through the first drainage hole 11-22. In other embodiments, the water-blocking strip 11-211 and the water-blocking plate 11-212 can also be integrally formed as a single water-blocking component.

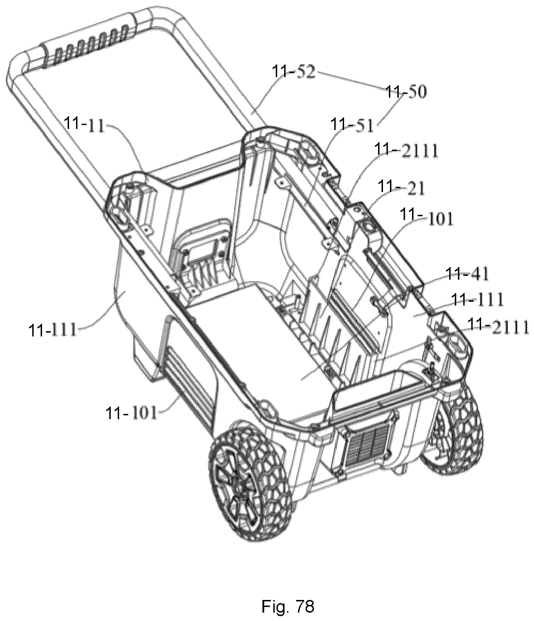

Refer to Figs. 78 to 84. In this embodiment, the water-blocking plate 11-212 has bent parts 11-2111 extending towards the vent 11-101 on both sides. The water-blocking plate 11-212 is arranged around the vent 11-101 in a semi-surrounding manner. These bent parts 11-2111 extending towards the vent 11-101 can further block rainwater or other liquids entering through the vent 11-101, better preventing them from entering the interior of the energy storage device 11-100. In other embodiments, the upper end of the water-blocking plate 11-212 can also have bent parts extending towards the vent 11-101, which can also block rainwater or other liquids entering through the vent 11-101 to a certain extent.

In this embodiment, the side of the water-blocking plate 11-212 facing away from the first side wall 11-111 is provided with reinforcement ribs 11-2121 to enhance the structural strength of the water-blocking plate 11-212.

Refer to Figs. 78 to 84. In this embodiment, the vent 11-101 and the drainage structure 11-20 are set on both sides of the box 11-10, with the structure and arrangement of the drainage structure 11-20 and the vent 11-101 being the same as described in the above embodiments.

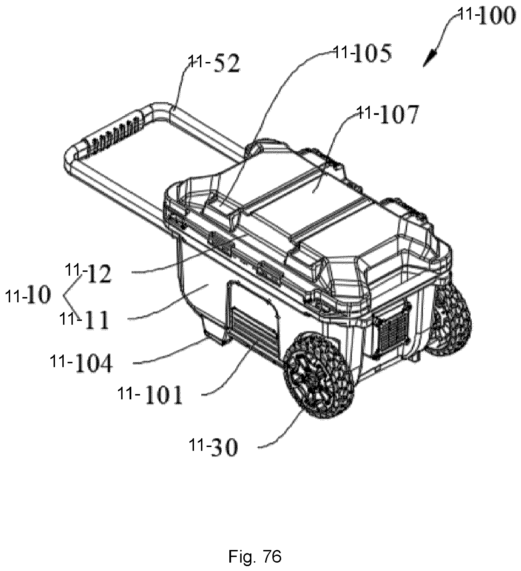

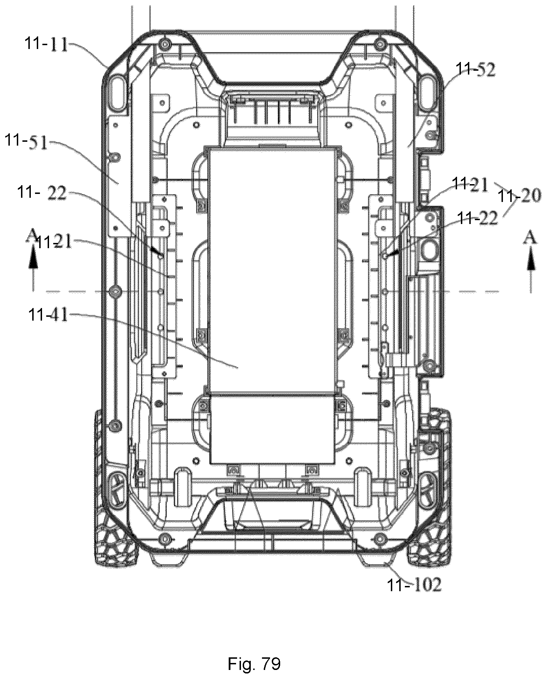

Refer to Figs. 76 and 79. In this embodiment, one side of the box 11-10 is also provided with a first support foot 11-102 and a mobile wheel 11-30. The mobile wheel 11-30 is set near the bottom of the box 11-10, while the first support foot 11-102 is located near the top of the box 11-10. When the energy storage device 11-100 is placed upright, the first support foot 11-101 and the mobile wheel 11-32 provide support.

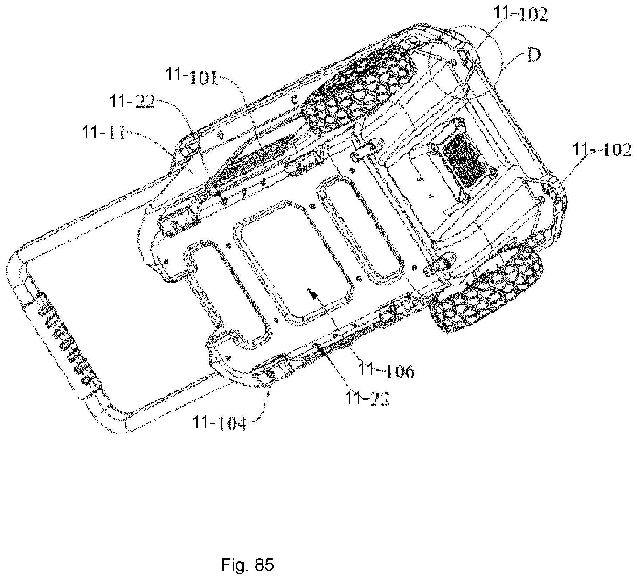

Refer to Figs. 85 to 89. In this embodiment, when the energy storage device 11-100 is placed upright, the area around the first support foot 11-102 is the lowest point of the internal space of the energy storage device 11-100. Therefore, a second drainage hole 11-103 is set at the first support foot 11-102, which connects with the internal chamber of the box 11-10, serving to drain water when the energy storage device 11-100 is in an upright position.

Refer to Fig. 76. In this embodiment, the energy storage device has a first state and a second state. In the first state, the box 11-10 is placed horizontally, and rainwater or other liquids inside the box 11-10 flow out from the drainage structure at the bottom of the box 11-10 opposite the placement surface. Specifically, rainwater or other liquids inside the box 11-10 flow out through the first drainage hole 11-22 at the bottom of the box 11-10 opposite the placement surface. In the second state, the box 11-10 is placed vertically, and rainwater or other liquids inside the box 11-10 flow out from the drainage structure at the bottom of the box 11-10 opposite the placement surface. Specifically, rainwater or other liquids inside the box 11-10 flow out through the second drainage hole 11-103 at the bottom of the box 11-10 opposite the placement surface.

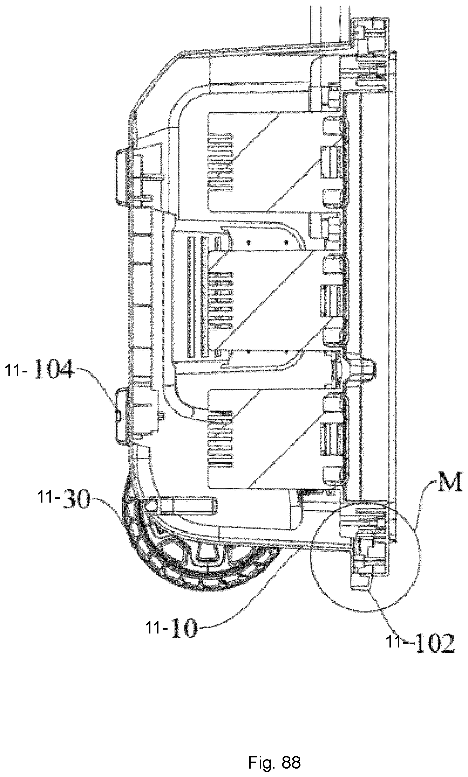

Refer to Fig. 88. In this embodiment, when the energy storage
a. device 11-100 is vertical, the longitudinal wall to bottom wall surface of the box 11-10 is configured with an inclined angle, guiding rainwater or other liquids inside the box 11-13 to flow out through the second drainage hole 11-103, thus preventing the issue of rainwater or other liquids not being discharged smoothly.

Of course, in other embodiments, when the energy storage device 11-100 is placed horizontally, the longitudinal wall to bottom wall surface of the box 11-10 is configured with an inclined angle, guiding rainwater or other liquids inside the box 11-13 to flow out through the drainage holes on the bottom wall, thus preventing the issue of rainwater or other liquids not being discharged smoothly.

It can be understood that, as shown in Figs. 78, 79, and 82, in this embodiment, the existence of the drainage structure 11-20 can block rainwater or other liquids and discharge them in time, preventing rainwater or other liquids from entering the interior of the box 11-10, ensuring the internal environment of the box 11-10 remains dry and protecting the circuit board. Therefore, in this application, all circuit boards 11-41 can be arranged as close to the bottom of the box 11-10 as possible and can be arranged in the same horizontal plane inside the box 11-10, reducing the height occupied by the circuit boards 11-40 and effectively lowering the overall height of the energy storage device 11-100, improving space utilization.

Refer to Figs. 78, 80, 83, and 90. In this embodiment, the energy storage device 11-100 also includes a handle assembly 11-50, located on the side of the box 11-10 opposite the first support foot 11-102, with part of it inside the box 11-10. Specifically, the handle assembly 11-50 includes a support member 11-51 and a pull rod 11-52. The support member 11-51 is fixedly connected to the box 11-10, located near the top inside the box 11-10, forming a slideway 11-501 with the battery pack case 11-40. Part of the pull rod 11-52 is inside the box 11-10 and is slidably connected to the slideway 11-501. For example, the support member 11-51 has a U-shaped structure with the opening facing the top of the energy storage device 11-100. The pull rod 11-52 inside the box 11-10 is installed within the U-shaped structure, forming a slideway between the U-shaped structure and the battery pack case 11-40. The pull rod 11-52 slides in the U-shaped groove of the U-shaped structure, guiding the pull rod 11-52 when it is pulled out from or retracted into the box 11-10.

Refer to Figs. 78, 80, 83, and 90. In this embodiment, one end of the pull rod 11-52 inside the box 11-10 is provided with a limiting pin 11-521, and the support member 11-51 is provided with a limiting slot 11-511 matching the limiting pin 11-521. When the pull rod 11-52 is pulled out along the slideway 11-501 from the box 11-10, the limiting pin 11-521 engages with the limiting slot 11-511 to limit the pull rod 11-52, ensuring maximum displacement limitation by the matching of the limiting pin 11-521 and the limiting slot 11-511.

Refer to Figs. 76, 85, and 87. In existing energy storage devices 11-100, the top and bottom surfaces of the box 11-10 are generally flat without matching structures, making stacking multiple energy storage devices 11-100 unstable and prone to tipping or shifting. Therefore, in this embodiment, the bottom surface of the box 11-10 is designed as the first mating surface, and the top surface of the box 11-10 is designed as the second mating surface, with at least one matching engagement structure on both. It can be understood that the first mating surface is the bottom surface of the body 11-11, and the second mating surface is the top surface of the box cover 11-12. When multiple energy storage devices 11-100 are stacked, the engagement structures on the first and second mating surfaces engage to achieve positioning and fixing between different energy storage devices 11-100, preventing tipping or shifting.

Refer to Figs. 76, 85, and 87. In this embodiment, the first mating surface is provided with multiple second support feet 11-104, and the second mating surface is provided with multiple positioning grooves 11-105. When multiple energy storage devices 11-100 are stacked, the second support feet 11-104 engage with the positioning grooves 11-105. Specifically, multiple second support feet 11-104 are set on the bottom surface of the body 11-11, and multiple positioning grooves 11-105 matching the second support feet 11-104 are set on the top surface of the box cover 11-12. The second support feet 11-104 provide support when the energy storage device 11-100 is flat, and when multiple energy storage devices 11-100 are stacked, the second support feet 11-104 of the upper device engage with the positioning grooves 11-105 of the lower device, achieving positioning and fixing between the upper and lower energy storage devices 11-100. In other embodiments, grooves 11-106 can be formed on parts of the first mating surface, and corresponding protrusions 11-107 can be formed on parts of the second mating surface. When multiple energy storage devices 11-100 are stacked, the protrusions 11-107 on the lower device engage with the grooves 11-106 on the upper device, further ensuring positioning and fixing between the upper and lower energy storage devices 11-100.

This invention proposes an energy storage device, which sets up a drainage structure inside the box, with each vent corresponding to the drainage structure. The drainage structure includes a water-blocking element, set opposite the vent, with a certain gap between the sidewall of the box with the vent. Additionally, a first drainage hole is set at the bottom of the box, located in the gap. When water enters through the vent, the water-blocking element blocks the rainwater or other liquids, directing them into the gap, and discharges them through the first drainage hole to effectively prevent rainwater or other liquids from entering the interior of the energy storage box, significantly improving the lifespan and safety of the energy storage device.

This invention proposes an energy storage device where the drainage structure blocks rainwater or other liquids and discharges them in time, preventing them from entering the interior of the box, ensuring the internal environment of the box remains dry and protecting the circuit board. Therefore, in this application, all circuit boards can be arranged as close to the bottom of the box as possible and can be arranged in the same horizontal plane inside the box, reducing the height occupied by the circuit boards and effectively lowering the overall height of the energy storage device, improving space utilization.

To facilitate securing the battery pack in the charging chamber for charging, a locking device is generally installed at the top of the charging chamber to lock the battery pack in place when inserted. However, in current designs, part of the locking device is integrated with the battery pack case, requiring the installation of the lock tongue from the back of the battery pack case, making the installation process complicated and inconvenient. The locking structure must first be installed from the back of the battery pack case and then assembled with the case and other structures. If the locking structure is damaged or needs maintenance, the entire battery pack case must be disassembled to access the locking structure, which is complex and cumbersome. Only the lock tongue and pivot can be removed and replaced in the locking structure.

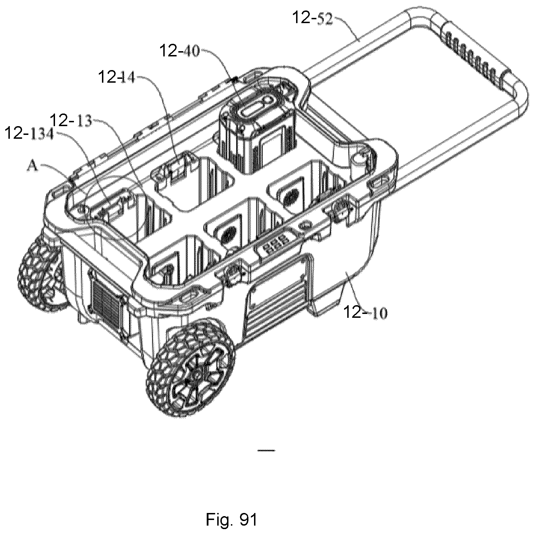

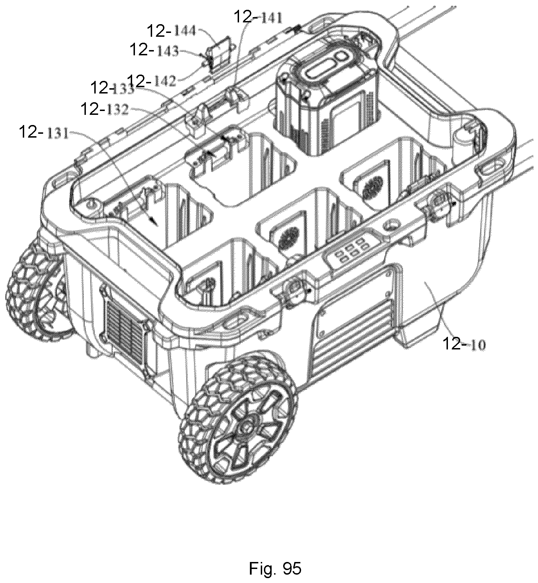

Refer to Figs. 91 and 95. In this embodiment, the locking structure 12-14 includes a mounting seat 12-141 and a locking assembly. The locking assembly is configured to be installed on the battery pack case 12-13, located at the top side of the charging chamber 12-131, and can rotate relative to the battery pack case 12-13 to lock the battery pack 12-40 in place in the locked state and release it in the unlocked state. The mounting seat 12-141 is configured to be detachably connected to the battery pack case 12-13 and restricts the locking assembly from detaching from the battery pack case 12-13. In this embodiment, the locking assembly includes a pivot 12-142, a spring 12-143, and a lock tongue 12-144. The pivot 12-142 is installed on the battery pack case 12-13 and can rotate relative to it, with both ends of the pivot 12-142 rotatably mounted between the mounting seat 12-141 and the battery pack case 12-13. The pivot 12-142 is fitted with a spring 12-143, and the lock tongue 12-144 is mounted on the pivot 12-142. For example, the spring 12-143 is a torsion spring, and the lock tongue 12-144 locks the battery pack 12-40 in the charging chamber 12-131 under the spring's 12-143 tension.

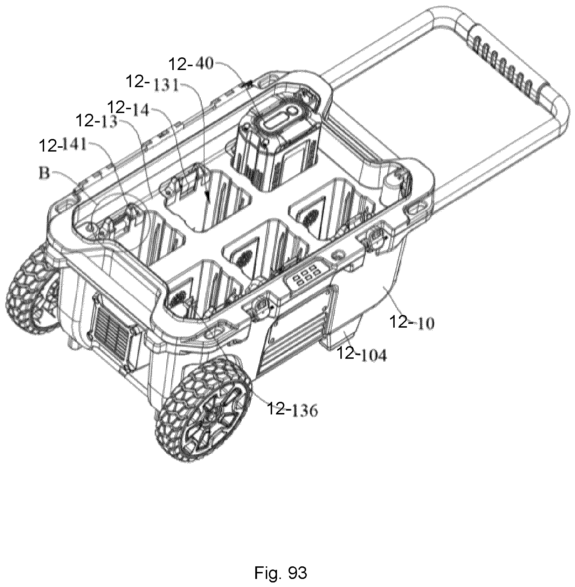

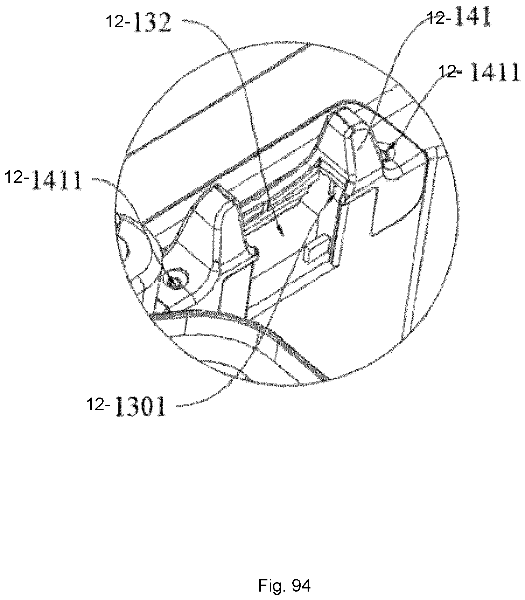

Refer to Figs. 91 to 95. In this embodiment, the battery pack case 12-13 has a receiving cavity 12-132, with the lock tongue 12-144 located inside it. The receiving cavity 12-132 provides the necessary space for the lock tongue 12-144 to rotate, allowing the lock tongue 12-144 to lock or unlock the battery pack 12-40. The top of the receiving cavity 12-132 has grooves 12-133 on both sides, which are semi-open to facilitate the installation of the pivot 12-142. The ends of the pivot 12-142 are installed in the grooves 12-133, and the mounting seat 12-141 is fixedly installed on the battery pack case 12-13, partially covering the grooves 12-133 to restrict the pivot 12-142 with the lock tongue 12-144 installed on the battery pack case 12-13, thus achieving the installation of the locking structure 12-14. The ends of the pivot 12-142 are rotatably installed in the rotation grooves 12-1301 formed between the mounting seat 12-141 and the grooves 12-133.

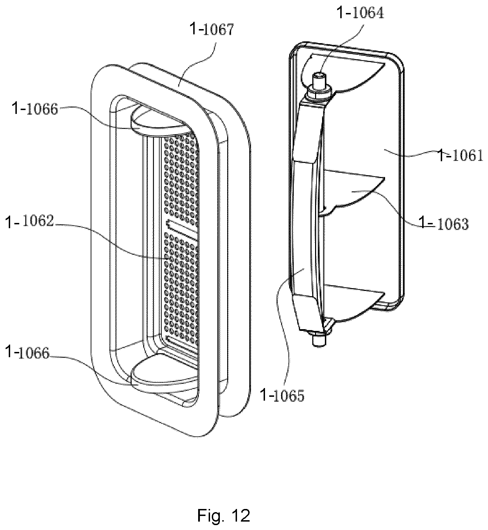

Refer to Figs. 12-3 to 12-7. In this embodiment, the battery pack case 12-13 has an installation slot 12-134 at the top side of the charging chamber 12-131, with the mounting seat 12-141 detachably installed in the installation slot 12-134. The receiving cavity 12-132 and the grooves 12-133 are located at the installation slot 12-134. The installation slot 12-134 has a first connection hole 12-135, and the mounting seat 12-141 has a corresponding second connection hole 12-1411. For example, a fastening bolt can pass through the first connection hole 12-135 and the second connection hole 12-141 to detachably install the mounting seat 12-141 in the installation slot 12-134. The installation slot 12-134 has multiple positioning grooves 12-145 that match the mounting seat 12-141, enabling quick and convenient positioning installation between the mounting seat 12-141 and the battery pack case 12-13, improving installation convenience.

Refer to Figs. 91 to 95. In this embodiment, the installation process of the locking structure 12-14 is as follows: install the lock tongue 12-144 on the pivot 12-142, install the ends of the pivot 12-142 in the grooves 12-133, place the lock tongue 12-144 in the receiving cavity 12-132, and finally fix the mounting seat 12-141 to the battery pack case 12-13, covering the grooves 12-133 to restrict the pivot 12-142 with the lock tongue 12-144 on the battery pack case 12-13. This achieves the installation of the locking structure 12-14, which can be installed from the front of the battery pack case 12-13, making the installation process simple and convenient.

It is understood that for battery packs with wireless charging functions, the conductive terminal can be a wireless power transmission module. When the battery pack is inserted into the charging chamber, the wireless power receiving module of the battery pack couples with the wireless power transmission module in the charging chamber, connecting the battery pack to the charging circuit of the energy storage device to obtain charging current. In other embodiments, when the battery pack 12-40 is inserted into the charging chamber 12-131, the battery pack 12-40 can connect with the energy storage device 12-100 via conductive terminals or wireless power transmission modules, allowing the battery pack 12-40 to output current through other output ports on the energy storage device 12-100.

It should be noted that the battery pack described can be a cylindrical cell battery pack or a soft pack battery.

The battery pack described includes a battery encased in a flexible cover, allowing it to conform to various shapes and surfaces, which is particularly useful in applications like wearable technology and foldable devices. The flexible cover is made from advanced materials, such as polymer composites or other flexible substrates, that can bend and twist without affecting the battery's performance or safety. This design approach is critical for integrating power sources into products with non-standard shapes or where a lightweight, adaptable solution is needed.

To create a flexible battery pack, the manufacturing process involves several key steps. One of the primary techniques is thin-film technology, where active materials are deposited onto a flexible substrate. This method allows the battery to maintain its electrochemical properties even when bent or flexed. The flexible substrate typically consists of materials like polymer films that provide both flexibility and mechanical strength. Additionally, the electrodes are designed to withstand deformation without losing conductivity, often using materials like carbon nanotubes or conductive polymers.

The encapsulation process for flexible batteries is essential for protecting the internal components from environmental factors like moisture and oxygen. The flexible cover must be carefully engineered to seal the battery while allowing for mechanical flexibility. Techniques such as lamination or coating with barrier films are commonly used to achieve this. These protective layers ensure that the battery can function reliably in various conditions, including those where bending or twisting is frequent.

Safety considerations are integral to the design of flexible battery packs. The materials and construction must ensure that the battery can withstand mechanical stresses without leading to failures such as short circuits or leaks. Safety mechanisms, such as pressure-sensitive shutoffs and thermal management systems, are often incorporated to prevent overheating and ensure stable operation under different conditions. This makes the battery suitable for use in a wide range of applications where flexibility and reliability are crucial.

In summary, manufacturing a flexible battery pack involves the integration of thin-film technology, flexible substrates, and advanced encapsulation techniques. The result is a battery that can bend and flex without compromising performance, making it ideal for innovative electronic devices that require adaptable power sources. The process requires careful selection of materials and precise engineering to ensure that the battery meets both performance and safety standards.

Flexible cover battery packs offer several significant advantages over traditional rigid battery designs, particularly in applications where space, shape, and adaptability are key concerns. One of the primary benefits is their ability to conform to non-standard and irregular shapes. This makes them ideal for integration into devices like wearable technology, where the battery needs to fit into small, curved, or flexible spaces. The flexible cover allows the battery to bend and adapt to the contours of the device, providing a seamless integration without compromising the form factor.

Another advantage of flexible battery packs is their lightweight nature. Traditional battery packs often require rigid casings that add weight to the device, but flexible covers eliminate the need for such heavy encasements. This reduction in weight is particularly beneficial in portable electronics, where every gram counts. It allows engineers to design lighter and more ergonomic devices, improving user comfort and device portability without sacrificing battery capacity or performance.

Flexible cover battery packs also offer improved durability in certain applications. The flexible materials used in these batteries are typically more resistant to mechanical stress, such as bending, twisting, or compressing, compared to rigid casings. This resilience makes them more suitable for environments where the device may be subjected to repeated flexing or movement, such as in smart clothing or medical wearables. The ability to withstand mechanical deformation without damage extends the operational life of both the battery and the device it powers.

In terms of manufacturing, flexible cover battery packs can be produced using roll-to-roll processing, a method commonly used in the production of flexible electronics. This technique is efficient and scalable, allowing for the mass production of flexible batteries with consistent quality. Roll-to-roll processing also enables the integration of various components, such as electrodes and encapsulation layers, in a continuous and streamlined process, reducing production costs and time.

Finally, the adaptability of flexible cover battery packs opens up new possibilities for innovation in product design. Engineers are no longer constrained by the limitations of rigid battery shapes and sizes. Instead, they can design devices with unique and ergonomic forms, knowing that the battery can be tailored to fit the available space. This flexibility encourages creativity in the design process, leading to the development of more advanced and user-friendly products across various industries, from consumer electronics to healthcare devices.

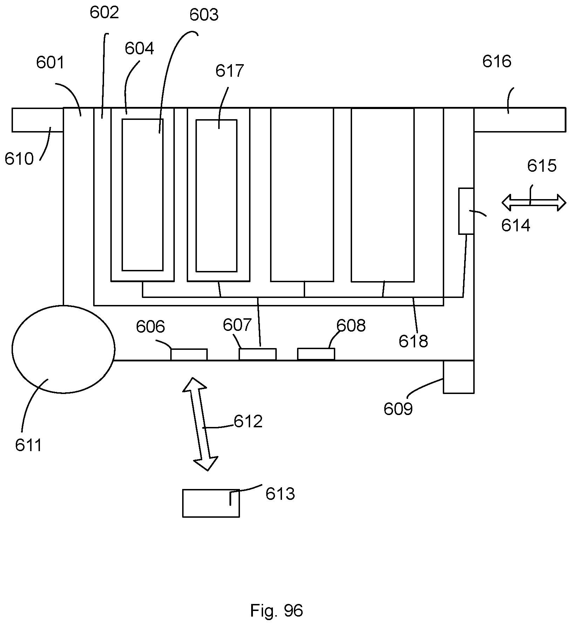

In Fig. 96, a battery carrier apparatus includes a carrier housing 601, a plurality of compartments 604, at least one wheel 611, a control circuit 607 and a status monitoring circuit 606.

The carrier housing 601 is configured to hold multiple battery modules 603, 617. In this example, there are four compartments, but only two battery modules are installed.

The plurality of compartments 604 are disposed within the carrier housing 601.

Each compartment 604 is configured for detachably installing a respective battery module 603.

The compartments provide secure housing for the battery modules.

At least one wheel 611 is disposed on the carrier housing 601.

The wheel 611 facilitates movement of the carrier housing allowing for transportation of the carrier housing.

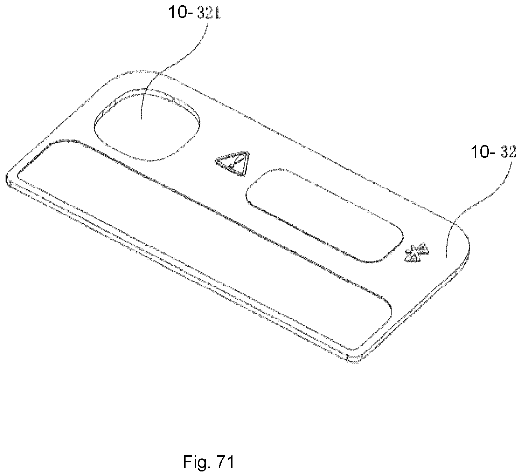

Figs. 1-95 show several embodiments with such style of battery carrier apparatus. More details may also refer to above description.

The control circuit 607 is responsible for managing an operation of the battery modules 603 installed in the compartments 604.

The status monitoring circuit 608 is coupled to the control circuit 607. The status monitor circuit 608 may include one or more sensors or decoder coupled to sensors for collecting one or multiple types of data of the battery carrier apparatus.

The status monitoring circuit 608 detects a status of the installed battery modules and communicates the status to the control circuit 607 for determining a control behavior to manage the battery modules accordingly.

For example, when the status monitoring circuit 608 finds that the ambient temperature is over 70 degrees, which is a preset warning temperature, the control circuit 607 stops charging the battery modules. The status monitoring circuit 608 may also collect information of the battery module, e.g. its energy level, capacity or identity code.

In some embodiments, the battery carrier apparatus may also include a charging terminal 614 and a charging path 618.

The charging terminal 614 is selectively coupled to an external power source 615 to guide an external power to charge the installed battery module 603 via the charging path 618.

The charging path 618 and the charging terminal 614 are disposed on the carrier housing 601 under control of the control circuit 607 to charge the installed battery modules 603.

In some embodiments, at least in one operation mode, the control circuit 607 only charges a portion of the installed battery modules 603 at one time, instead of charging all installed battery modules at the same time.

In some embodiments, under said operation mode, the control circuit charges one battery module as a target battery module at one time.

In some embodiments, the battery carrier apparatus may also include a wireless circuit 606.

The control circuit 607 automatically generates and transmits a message 612 to an external device 613 via the wireless circuit 606 under a predetermined rule.

In some embodiments, when the control circuit 607 detects an abnormal status collected by the status monitoring circuit 608, the control circuit 607 transmits the message to the external device 613.

In some embodiments, when the control circuit receives a command from the external device, the control circuit translates the command into corresponding control signals to manage the battery modules.

The translation may be based on a large language model so that the command of the user may be well interpreted to proper control signals.

In some embodiments, the control circuit has a network identity on a remote messaging server.

For example, the control circuit may have a network identity as a "battery charger" shown on users' whatsapp or other messaging app on their mobile phones.

The control circuit and the external device communicates with text messages in human language to manage the installed battery module.

The control circuit 607, based on setting, therefore may transmit its warning or other status information to the users. The users in response may talk like human being to the control circuit 607 with normal messages, without warning about technical details.

For example, the user may send a message saying, "I would need to work in the farm this afternoon, and will use two tools for three hours. Calculate for me whether how many battery modules need to bring."

Or, the user may ask current energy levels of the battery using his daily messaging app, instead of using a remote control.

In some embodiments, the carrier housing has an air passage for air to flow into carrier housing for heat dissipation.

The carrier housing has a water blocking structure to stop water entering a protective area of the carrier housing.

In some embodiments, the water blocking structure including a water blocking wall, a water guiding structure and a water exit.

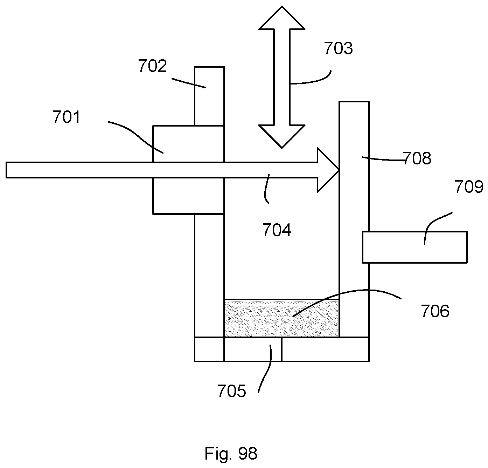

Fig. 98 shows such an example. The carrier housing 702 has a lateral wall that has an air passage for air to pass through to perform heat dissipation. Unfortunately it is easy for water 704 to enter from the carrier housing 702, in addition to air 703. There is a blocking wall 708 to block the water 704 to further moving into the carrier housing 702, even the water has moved into a portion of the carrier housing 702.

The water blocking wall 708 stops the water and has a guiding structure for the water 706 to exit via a water exit 705, preventing water to a protective area 709 that has electronic devices disposed.

In some embodiments, the carrier housing has a first surface and a second surface.

The first surface is substantially perpendicular to the second surface.

The carrier housing is selectively placed to face the first surface to a ground or the second surface to the ground.

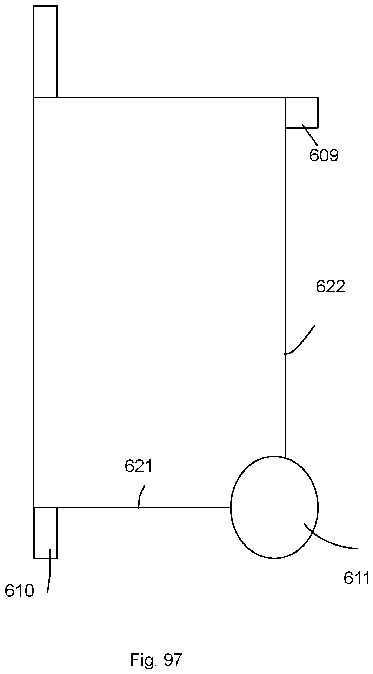

Fig. 97 shows another way to place the carrier housing. The carrier housing has a first surface 622 and a second surface 621. While Fig. 96 shows a first placement manner of the carrier housing, Fig. 97 shows another placement manner by rotating the carrier housing with 90 degrees with respect to the wheel 611.

The water blocking structure stops water to enter the protective area in both placements of the carrier housing.

In some embodiments, two of the wheels are disposed on two edges of the first surface of the carrier housing.

In Fig. 97, the carrier housing has a first set of standing feet 610 on opposite corners to the wheels 611 for keeping the carrier stable placed when the first surface faces to the ground. There are a second set of standing feet 609 while the carrier housing is placed in another manner.

In some embodiments, the carrier housing is selectively mounted on a vehicle for the control circuit to provide electricity from the installed battery modules to a vehicle device of the vehicle.

Fig. 45 and related description explain such case.

In some embodiments, the battery carrier apparatus may also include a detachable lock disposed on the carrier housing for locking the installed battery modules to the compartments.

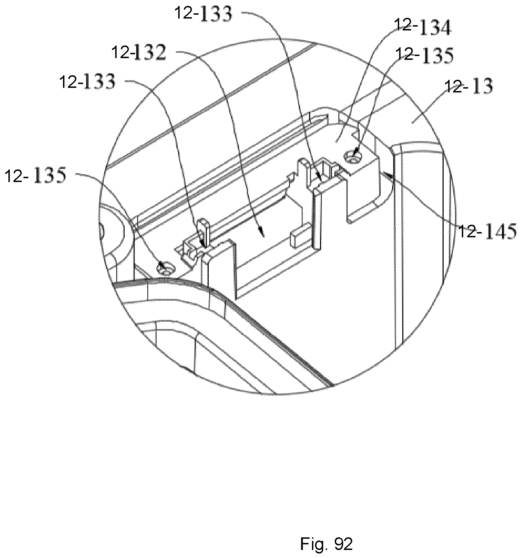

Fig. 92 to Fig. 95 show such examples and explanation.

In some embodiments, the battery module has a display area and a connector on an external housing.

A plastic layer is disposed between a battery core and the external housing to prevent water to enter a container space for storing the battery core.

In some embodiments, the battery carrier apparatus may also include a three-way power distribution connector.

A first terminal of the three-way power distribution connector is to receive an external power input.

A second terminal of the three-way power distribution connector is to forward an external power to another device.

A third terminal of the three-way power distribution connector is to route the external power to the installed battery modules.

In some embodiments, where the three-way power distribution connector has a concave area for plugging a cable for preventing accidental struck by an external object on a connection position of the cable.

Fig. 46 to Fig. 66 show more details on such example.

In some embodiments, the carrier housing has a storage container in addition to the compartments for storing objects.

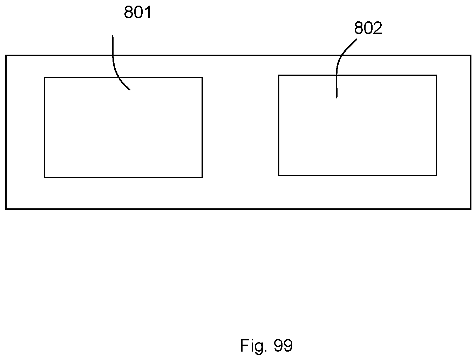

Fig. 99 shows that the carrier housing has a storage container 801, in addition to the compartment 802 for storing battery modules.

In some embodiments, the compartments have a compartment housing detachably decoupled from the carrier housing.

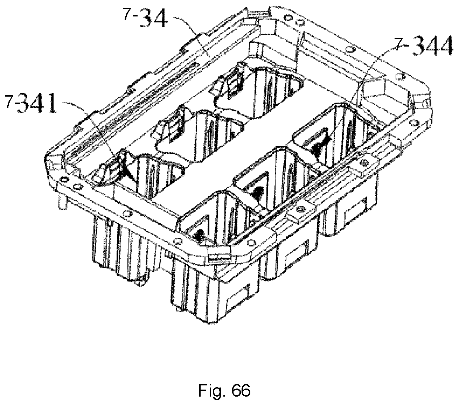

Fig. 66 shows such an example.

In some embodiments, the carrier housing has a top cover for concealing the installed battery modules while exposing a display area for showing the status of the status monitoring circuit.

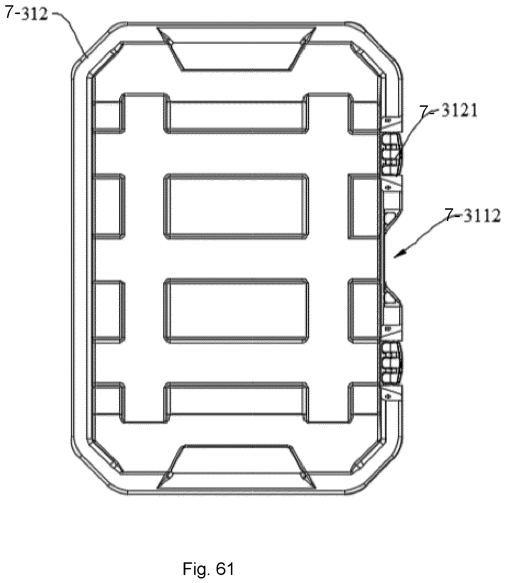

Fig. 61 shows such an example.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings.

The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

## Claims

1. A battery carrier apparatus, comprising:
a carrier housing (601), wherein the carrier housing is configured to hold multiple battery modules (603);
a plurality of compartments (604) disposed within the carrier housing (601), wherein each compartment (604) is configured for detachably installing a respective battery module (603), wherein the compartments (604) provide secure housing for the battery modules (603);
at least one wheel (611) disposed on the carrier housing (601), wherein the wheel (611) facilitates movement of the carrier housing (611) allowing for transportation of the carrier housing (601);
a control circuit (607), wherein the control circuit is configured for managing an operation of the battery modules (603) installed in the compartments (604); and
a status monitoring circuit (608), coupled to the control circuit (607), wherein the status monitoring circuit (608) if configured to detect a status of the installed battery modules and communicate the status to the control circuit (607) for determining a control behavior to manage the battery modules accordingly.

2. The battery carrier apparatus of claim 1, further comprising a charging terminal (614) and a charging path (618), wherein the charging terminal (614) is selectively coupled to an external power source (615) to guide an external power to charge the installed battery module (603) via the charging path (618), wherein the charging path (618) and the charging terminal (614) is disposed on the carrier housing (601) under control of the control circuit (607) to charge the installed battery modules (603).

3. The battery carrier apparatus of claim 2, wherein at least in one operation mode, the control circuit (607) is configured to only charge a portion of the installed battery modules (603) at one time, instead of charging all installed battery modules at the same time.

4. The battery carrier apparatus of claim 3, wherein under said operation mode, the control circuit (607) is configured to charge one battery module as a target battery module at one time.

5. The battery carrier apparatus of claim 1, further comprising a wireless circuit (606), wherein the control circuit (607) is configured to automatically generate and transmit a message to an external device (613) via the wireless circuit (606) under a predetermined rule.

6. The battery carrier apparatus of claim 5, wherein when the control circuit (607) detects an abnormal status collected by the status monitoring circuit (608), the control circuit (607) is configured to transmit the message to the external device (613).

7. The battery carrier apparatus of claim 5, wherein when the control circuit (607) receives a command from the external device (613), the control circuit (607) is configured to translate the command into corresponding control signals to manage the battery modules.

8. The battery carrier apparatus of claim 7, wherein the control circuit (607) has a network identity on a remote messaging server, wherein the control circuit (607) and the external device (613) are configured to communicate with text messages in human language to manage the installed battery module.

9. The battery carrier apparatus of claim 1, wherein the carrier housing (601) has an air passage for air to flow into carrier housing for heat dissipation, wherein the carrier housing (601) has a water blocking structure to stop water entering a protective area of the carrier housing (601).

10. The battery carrier apparatus of claim 9, wherein the water blocking structure comprising a water blocking wall, a water guiding structure and a water exit.

11. The battery carrier apparatus of claim 10, wherein the carrier housing has a first surface (622) and a second surface (621), wherein the first surface (622) is substantially perpendicular to the second surface (621), wherein the carrier housing is selectively placed to face the first surface (622) to a ground or the second surface (621) to the ground, wherein the water blocking structure stops water to enter the protective area in both placements of the carrier housing.

12. The battery carrier apparatus of claim 11, wherein two of the wheels are disposed on two edges of the first surface (622) of the carrier housing, wherein the carrier housing has a first set of standing feet (610) on opposite corners to the wheels (611) for keeping the carrier stable placed when the first surface (622) faces to the ground.

13. The battery carrier apparatus of claim 1, wherein the carrier housing is selectively mounted on a vehicle for the control circuit to provide electricity from the installed battery modules to a vehicle device of the vehicle.

14. The battery carrier apparatus of claim 1, further comprising a detachable lock disposed on the carrier housing for locking the installed battery modules to the compartments.

15. The battery carrier apparatus of claim 1, wherein the battery module has a display area and a connector on an external housing, wherein a plastic layer is disposed between a battery core and the external housing to prevent water to enter a container space for storing the battery core.

16. The battery carrier apparatus of claim 1, further comprising a three-way power distribution connector, wherein a first terminal of the three-way power distribution connector is to receive an external power input, wherein a second terminal of the three-way power distribution connector is to forward an external power to another device, wherein a third terminal of the three-way power distribution connector is to route the external power to the installed battery modules.

17. The battery carrier apparatus of claim 16, where the three-way power distribution connector has a concave area for plugging a cable for preventing accidental struck by an external object on a connection position of the cable.

18. The battery carrier apparatus of claim 1, wherein the carrier housing has a storage container (801) in addition to the compartments (802) for storing objects.

19. The battery carrier apparatus of claim 1, wherein the compartments have a compartment housing detachably decoupled from the carrier housing.

20. The battery carrier apparatus of claim 1, wherein the carrier housing has a top housing for concealing the installed battery modules while exposing a display area for showing the status of the status monitoring circuit.
